(19) Europäisches Patentamt
European Patent Office
Office européen des brevets

(11) **EP 4 667 773 A1**

(12) **EUROPEAN PATENT APPLICATION**
published in accordance with Art. 153(4) EPC

(43) Date of publication:
**24.12.2025 Bulletin 2025/52**

(21) Application number: **24756872.8**

(22) Date of filing: **13.02.2024**

(51) International Patent Classification (IPC):
**F16F 15/02** (2006.01)　　　**F15B 9/08** (2006.01)
**F16F 15/03** (2006.01)

(52) Cooperative Patent Classification (CPC):
**F15B 9/08; F16F 15/02; F16F 15/03**

(86) International application number:
**PCT/JP2024/004845**

(87) International publication number:
**WO 2024/172028 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.02.2023　JP 2023021471**

(71) Applicant: **Tokkyokiki Corporation
Amagasaki-shi,
Hyogo 660-0833 (JP)**

(72) Inventors:
• **MARUYAMA, Teruo
Amagasaki-shi, Hyogo 660-0833 (JP)**
• **OKADA, Takumi
Amagasaki-shi, Hyogo 660-0833 (JP)**
• **TAKIMOTO, Hiroshi
Amagasaki-shi, Hyogo 660-0833 (JP)**
• **YASUDA, Masashi
Amagasaki-shi, Hyogo 660-0833 (JP)**

(74) Representative: **Müller Hoffmann & Partner
Patentanwälte mbB
St.-Martin-Strasse 64
81541 München (DE)**

(54) **FLUID CONTROL SYSTEM, AND CONTROL METHOD**

(57)　In a manufacturing process in which vibration damping control and vibration isolation control are alternately repeated, a vibration isolation actuator and a pneumatic vibration damping actuator are independently arranged so as to have generated force components in the same direction. By separately driving the vibration isolation actuator, the vibration damping actuator, and a vibration damping servo valve, it is possible to select a configuration that is released from a trade-off relationship between vibration isolation performance and vibration damping performance and that can achieve the best performance.

FIG.1a

FIG.1b

**Description**

Technical Field

The present invention is intended for a vibration isolation device that supports a precision instrument susceptible to vibration, such as a semiconductor-related device or a precision measurement device, and relates to a fluid servo system included in the vibration isolation device.

Background Art

1. Global trend・・・Request from product side

In various fields such as a semiconductor manufacturing process, a liquid crystal manufacturing process, and precision machining, use of vibration control for blocking and suppressing minute disturbance vibration is spreading. Microfabrication and inspection apparatuses such as a scanning electron microscope and a semiconductor exposure apparatus (stepper) used in the processes are required to have strict vibration tolerance conditions for securing performance of the apparatus. There has been used an active-type precision vibration isolator that supports an apparatus susceptible to disturbance vibration with an actuator and controls the actuator to attenuate the vibration.

In addition to requests for miniaturization and refinement associated with improvement in performance in recent years, equipment for improving productivity has been increased in size and speed. Accordingly, also in a vibration isolation device that supports an apparatus, demand for an increase in size of the apparatus itself, an increase in control force, and multifunctionalization is increasing, in addition to improvement in performance of removing disturbance vibration.

2. Active vibration isolator with pneumatic servo

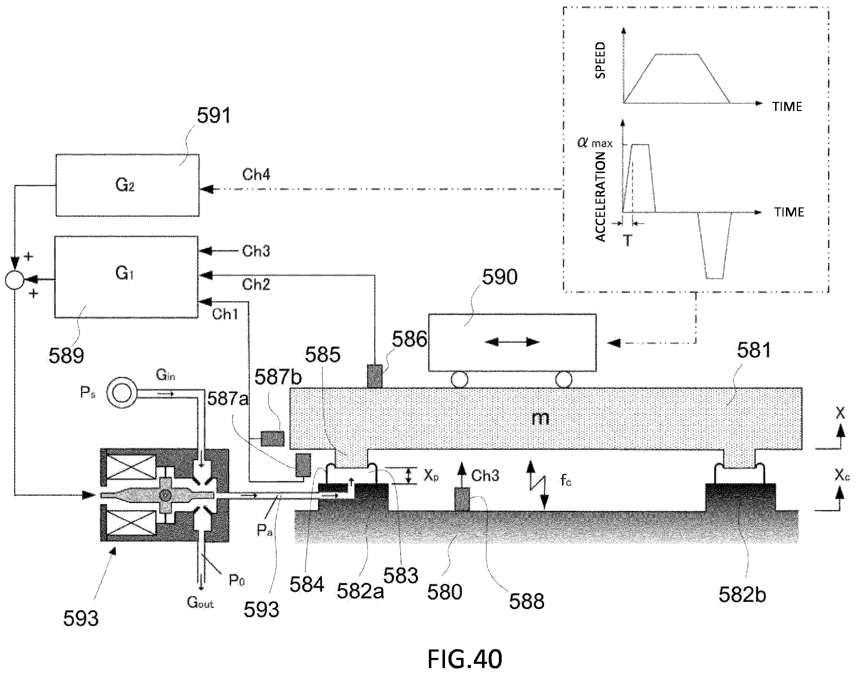

With the trend of increasing the size of the apparatus supported by the vibration isolator, an air spring type vibration isolator utilizing advantages of a pneumatic actuator has been widely used for fine vibration control of ultra-precision instruments. FIG. 40 illustrates a model diagram of an active vibration isolator using a pneumatic actuator. This active vibration isolator is known as described in Patent Literature 1 and Patent Literature 2. A plurality of sets of pneumatic actuators (582a, 582b) for supporting a surface plate 581 are arranged on a floor surface 580. A precision device (details are not illustrated) is mounted on the surface plate 581. The pneumatic actuator includes an air chamber 583 internally filled with high-pressure air for supporting a load in a vertical direction, and a piston 585 that is inserted into an upper portion of the air chamber through a diaphragm 584. To the air chamber 583, a servo valve 593 controlled by outputs of two controllers $G_1$ and $G_2$ is connected via a pipe 593. An internal pressure $P_a$ of the air chamber 583 is controlled by adjusting a flow rate of compressed air supplied to and exhausted from the air chamber 583 by the servo valve 593 which is an electro-pneumatic converter. Here, the servo valve 593 has a function of supplying gas having a supply pressure $P_S$ from the outside, adjusting the gas pressure to the desired gas pressure $P_a$ by being given a control signal by the controllers $G_1$ and $G_2$, and outputting the gas and partially exhausting the gas to atmosphere $P_0$.

The active vibration isolator includes two control systems of feedback control (FB control) and feedforward control (FF control).

(1) Feedback control

Reference numerals 586, 587a, and 587b denote an acceleration sensor and displacement sensors for respectively detecting acceleration of the surface plate 581 in the vertical and horizontal directions and a relative displacement of the surface plate 581 with respect to the floor surface 580. Reference numeral 588 denotes an acceleration sensor that detects acceleration of the floor surface 580 (a vibration state of a foundation). Output signals from these sensors are individually input to the controller $G_1$ 589 of feedback control.

(2) Feedforward control

Reference numeral 590 denotes a stage mounted on the surface plate 581. A behavior signal (chain line) of this stage is input to the controller $G_2$ 591 of feedforward control (FF control). As the behavior signal of the stage, an input signal (two-dot chain line 592) of a driver that drives the stage is used. The feedforward control is applied to reduce vibration generated in the vibration isolation device by vibration application at a time of acceleration/deceleration of the stage. The feedback control (FB control) in (1) improves time during which free vibration is settled, but cannot reduce an instantaneous response of the stage acceleration/deceleration. On the other hand, the stage FF control has an effect of suppressing an instantaneous disturbance input. In a case of a large weight stage, the stage is inclined due to a change in load on the vibration isolation device accompanying movement of the stage, and low-frequency vibration is generated. When the stage FF is applied, the vibration can be greatly suppressed as compared with a case of only the FB control.

(3) Structure of conventional servo valve

In the active vibration isolator which is a pneumatic servo device using a pneumatic actuator, a nozzle flapper valve has been mainly used to perform pressure and flow rate control of an actuator. This nozzle flapper valve is disclosed in, for example, Patent Literature 3, and an operation principle thereof is generally widely used. FIG. 41 is a structural diagram modeling an operation principle of a conventional servo valve. A configuration of the servo valve can be roughly divided into an actuator portion A-1 and a fluid control portion B-1. In the actuator portion A-1, reference numeral 551 denotes a magnet (permanent magnet), reference numeral 552 denotes a coil, reference numeral 553 denotes a body that houses the coil, reference numeral 554 denotes a flapper, reference numerals 555a and 555b denote a pair of yokes attached with their tips facing each other, and reference numeral 556 denotes a flapper tip portion on the actuator side. Reference numeral 557 denotes a leaf spring also serving as a sealing member, and reference numeral 558 denotes a support central portion of the leaf spring.

In the fluid control portion B-1, reference numeral 560 denotes a forward nozzle, reference numeral 561 denotes a backward nozzle, and reference numeral 562 denotes a flapper tip portion on the fluid control portion side. Reference numeral 563 denotes a supply port, reference numeral 564 denotes an exhaust port, reference numeral 565 denotes a load port (control port), and reference numeral 566 denotes a control chamber. Gas having a supply pressure $P_S$ is supplied to the control chamber 566 via the forward nozzle 560. At the same time, gas in the control chamber 566 flows out to atmosphere through the backward nozzle. A control pressure $P_a$ in the control chamber 566 and an outflow amount from the load port 565 are determined by a difference between an inflow amount from the forward nozzle and an outflow amount from the backward nozzle. However, a structure of a servo valve to be actually used is a three-dimensional structure in which a magnetic circuit of a permanent magnet and a magnetic circuit of an electromagnet are arranged orthogonally. A basic structure of the pneumatic servo valve is derived from application of a technique of a hydraulic servo valve having a long history, and is used as a primary control valve (pilot valve) of an electrohydraulic control valve.

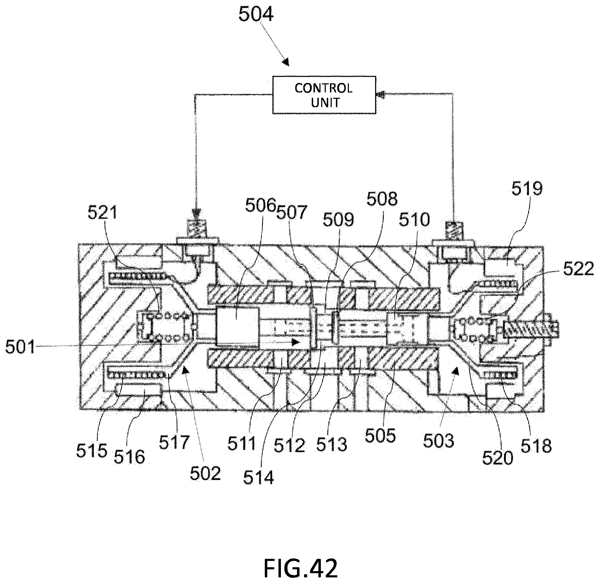

Patent Literature 4 discloses a gas pressure control valve obtained by improving a spool type used as a secondary control valve of the electrohydraulic control valve. The gas pressure control valve illustrated in FIG. 42 roughly includes a spool 501, a linear motor 502, a speed detection sensor 503, and a control unit 504. The spool 501 is supported by a sleeve 505 so as to be axially movable. In the spool, a left land portion 506, a first plunger 507, a second plunger 508, a central land portion 509, and a right land portion 510 are formed. The left land portion 506 and the right land portion 510 are supported without contact with the sleeve 505 by a static pressure bearing. A supply port 511, a load port 512, and an exhaust port 513 are formed in the sleeve 505. Reference numeral 514 denotes a control pressure chamber. The linear motor 502 includes a coil 515, a magnet 516, and a mobile body 517. Similarly, the speed detection sensor 503 includes a coil 518, a magnet 519, and a mobile body 520. The spool 501 is moved and driven in the axial direction by the linear motor 502. Reference numerals 521 and 522 denote balance springs that support the spool 501 at both ends. While a pressure in the control pressure chamber 514 changes according to a relative positional relationship between the load port 512 of the sleeve 505 and the central land portion 509, a drive current and an output pressure of the linear motor can be in a proportional relationship by forming the spool 501 and the sleeve 505 into a stepped structure.

3. Active vibration isolator with linear motor method

In order to improve vibration damping performance, a linear motor, which is considered to have higher responsiveness than a pneumatic actuator, is applied to an active vibration isolator. FIG. 43 is disclosed in Patent Literature 5, and illustrates a configuration of a stage device including a vibration isolation means in a semiconductor exposure apparatus as viewed from above. Reference numeral 601 denotes a vibration isolator, reference numeral 602 denotes a Y stage, reference numerals 603a and 603b denote Y-axis linear motors, reference numeral 604 denotes an X stage, reference numeral 605 denotes an X-axis linear motor, reference numerals 606a and 606b denote Y-axis actuators that drive the vibration isolator 601 in a Y-axis direction, and reference numerals 607a and 607b denote X-axis actuators that drive the vibration isolator 601 in an X-axis direction.

The vibration isolator 601 has a receiving surface 601a perpendicular to the X axis and a receiving surface 601b perpendicular to the Y axis, and is held on a floor in a predetermined orientation. The Y-axis linear motors 603a and 603b and the X-axis linear motor 605 are included in a plurality of stage drive mechanisms for driving the corresponding Y stage 602 and X stage 604, respectively. The Y-axis actuators 606a and 606b are supported on a floor F or the like via a damper (not illustrated), and apply a force in the Y-axis direction to the vibration isolator 601 via a transmission member 612 engaged with the receiving surface 601b of the vibration isolator 601. The X-axis actuators 607a and 607b apply a force in the X-axis direction to the vibration isolator 601 via a transmission member 614 engaged with the receiving surface 601a of the vibration isolator 601.

The vibration isolator 601 is supported by a mount (not illustrated) so as not to transmit vibration from the outside. The XY stages are mounted on the vibration isolator 601, and the two Y-axis linear motors 603a and 603b drive the entire XY stages in the Y-axis direction. The X stage 604 and the X-axis linear motor 605 are mounted on the Y stage 602, and the X-axis linear motor 605 drives the X stage 604 in the X-axis direction. The corresponding Y-axis actuators 606a and 606b are arranged on straight lines same as the two Y-axis linear motors 603a and 603b, and drive the vibration isolator 601 so as to suppress shaking due to a Y-direction drive reaction force of the XY stages. The X-axis actuators 607a and 607b drive the vibration isolator 601 so as to suppress shaking due to an X-direction drive reaction force of the XY stages.

Citation List

Patent Literature

Patent Literature 1: JP 2006-283966 A Active vibration isolator
Patent Literature 2: JP 2007-155038 A Active vibration isolator
Patent Literature 3: JP H11-294627 Nozzle flapper valve
Patent Literature 4: JP 4636830 B2 Spool valve
Patent Literature 5: JP 2001-93798 A Linear motor
Patent Literature 6: JP 2008-69890 A Canon Patent
Patent Literature 7: JP 2003-74620 A Fujikura Rubber Patent
Patent Literature 8: JP 2015-24794 A MV valve Basic patent

Summary of Invention

Technical Problem

In recent years, a new problem has emerged due to a trend of semiconductor-related business. With further increase in throughput of semiconductor-related devices, there is a demand for significant improvement of a vibration isolator in vibration damping performance. An exposure apparatus and an inspection apparatus are provided with a movable stage for workpiece conveyance, and an active vibration isolation device equipped with the movable stage needs vibration damping control capable of attenuating vibration of a surface plate accompanying acceleration/deceleration of the movable stage, at high speed and with high accuracy.

A case is assumed in which the acceleration $\alpha$ is set to 2G ($2 \times 9.8$ m/s$^2$) with acceleration/deceleration time of the stage on the order of 4 to 8 milliseconds. Because a reaction force of an inertial force $F = m\alpha$ determined by a stage mass m and the acceleration $\alpha$ is applied to the vibration isolator, for example, in a case where the stage mass m is set to 100Kg, vibration damping control for attenuating an impact load of $F = 2000$ N is required. A key point for achieving the high acceleration and vibration damping control is achievement of a new drive system having both large generated force and high responsiveness. Furthermore, the new drive system is also required to have vibration isolation performance in a low frequency range similarly to the conventional active vibration isolation device.

Hereinafter, feasibility of the new drive system will be considered on the basis of comparison of advantages and disadvantages of the two methods, (1) linear motor method and (2) pneumatic servo method.

1. Problem of conventional linear motor method

In a case of the linear motor method, responsiveness is excellent, but the generated force of the motor alone is limited to about 100 to 150 N due to restrictions regarding heat generation and the like. As compared to a magnetic attraction force (Maxwell's stress) of a pneumatic electromagnetic valve, the linear motor method using the Lorentz force as an operation principle has poor electrical/mechanical conversion efficiency and requires high power driving. As a problem regarding heat generation, an allowable limit temperature of a coil insulating film included in the linear motor, an influence of a temperature rise on a semiconductor exposure apparatus and the like mounted on the vibration isolator, and the like are restriction conditions of an allowable amount of heat generation.

For example, in order to attenuate an impact load of $F = 2000$ N, several tens of linear motors that suppress vibration of individual axes of the active vibration isolator in a direction of six degrees of freedom are required, and there has been a large problem in terms of cost.

2. Problems of conventional pneumatic servo method

(1) Nozzle flapper valve

Conventionally, many vibration isolation devices have been applied for the purpose of achieving vibration insulation from an installation floor surface, in order to improve an installation environment of precision instruments. In this case, a nozzle flapper type servo valve has been mainly used to control a pressure and a flow rate of an actuator. Conventionally, a maximum control flow rate of the nozzle flapper valve that has been applied to the active vibration isolator has been about Q = 15 to 50 L/min. Using a basic structure of the nozzle flapper valve, a pneumatic servo with high acceleration and vibration damping control is assumed, for example, a pneumatic servo in which acceleration/deceleration time of a stage is on the order of several milliseconds and acceleration $\alpha$ = 2G or more is set. In this case, a maximum control flow rate required for the nozzle flapper valve is 5 to 10 times that of the conventional servo valve, that is, on the order of 200 to 400 L/min. The nozzle flapper valve has a largest air consumption flow rate at an operating point (neutral point), due to an operation principle thereof. For example, an air consumption flow rate of a nozzle flapper valve having a maximum control flow rate of 200 L/min is 100 L/min. This air consumption flow rate is a useless energy loss that does not contribute to specific production. As an example of configuring the active vibration isolator, four-point support active control is assumed. In this case, pneumatic actuators are arranged at four corners, and units are installed in an orientation in which two units are diagonally arranged in a horizontal X direction and two units are diagonally arranged in a Y direction. Further, for each actuator, an actuator that supports a load in a Z direction is also incorporated. Thus, a total of eight pneumatic actuators are arranged, requiring a total of eight sets of pneumatic servo valves for controlling the individual actuators. Therefore, there has been a problem that an air consumption flow rate in a steady state (standby time) greatly increases in the entire active vibration isolator.

(2) Spool valve

A spool valve having a basic driving principle different from that of the nozzle flapper valve has an advantage that an air consumption flow rate in the steady state can be reduced and a maximum control flow rate can be increased. However, as compared with the nozzle flapper valve, there have been the following problems in terms of performance and cost. As shown in an example of the spool-type gas pressure control valve disclosed in Patent Literature 4, a major problem in applying the spool-type valve to an active vibration isolator is that a primary resonance frequency of a movable portion cannot be increased. In FIG. 42, a resonance frequency of a movable portion including the spool 501 is determined by a mass m of the movable portion and a spring constant K of the balance springs 521 and 522. The primary resonance frequency is set to

$$\sqrt{K/m}$$

or is proportional to the square root of K/m, and thus can be made higher as the mass m is smaller and the spring constant K is larger. However, there is a limit to weight reduction of the spool shaft formed with an opening with a large flow rate. Further, in a case of the linear motor 502 using the Lorentz force, an electromechanical conversion efficiency of a generated force with respect to an input current is small, and a large generated force cannot be obtained. Therefore, a rigidity K of the springs 521 and 522 has to be reduced, and it is difficult to increase the resonance frequency of the movable portion. In order to apply a pneumatic servo valve to the active vibration isolator, it is necessary to satisfy a condition of "a primary resonance point of a servo valve is sufficiently high, and is several hundred Hz or more". Therefore, in the spool-type control valve, acceleration feedback control is performed using a signal of the speed detection sensor 503. That is, by performing the acceleration feedback, a transfer characteristic of a low frequency is compensated using the fact that a natural frequency of a system can be reduced from a control aspect. In summary, in the spool-type gas pressure control valve incorporating the speed detection sensor 503 and the control unit 504 in addition to the linear motor 502 that drives the spool 501, there has been a problem that the structure becomes complicated and large.

Furthermore, in the spool-type gas pressure control valve, the spool 501 is housed in the sleeve 505 so as to be axially movable, and is driven by the linear motor 502. The spool is supported without contact with the sleeve by a static pressure bearing. The reason for the application of the static pressure bearing is to maintain a narrow radial gap ($\delta_r$ = 5 to 6 $\mu$m) between the spool and the sleeve without metal-to-metal contact. By maintaining the narrow radial gap, air leakage from a high pressure to a low pressure is reduced by viscous resistance of air, and a function as the servo valve is established.

Therefore, as shown in an example in Patent Literature 4, the spool-type gas pressure control valve requires highly accurate component processing and assembly in addition to complication of the structure described above, and there has been a problem that cost is significantly higher than that of the nozzle flapper valve. In addition, similarly to the nozzle flapper valve, a total of eight sets of pneumatic servo valves for controlling individual actuators are required, so that it is often difficult to apply the pneumatic servo valve to the active vibration isolator in terms of cost.

(4) New problem of pneumatic servo method · · · achieving higher accuracy and higher acceleration of vibration damping control

As described above, due to the trend of the semiconductor-related business, a new problem has emerged in the vibration damping control technology of the active vibration isolator. In order to achieve the high acceleration and vibration damping control, the actuator is required to have a generated force that reproduces a target waveform of the feedforward control with accuracy on the order of several milliseconds or 0.1 milliseconds. It is clear that the pneumatic method is advantageous in terms of the generated force, as compared to the linear motor with a limit in the generated force. However, any prior example or any research example in which the pneumatic method is applied to high acceleration and vibration damping control is not found at the present moment.

As described above, in a case where the nozzle flapper valve is applied to the pneumatic servo for high acceleration and vibration damping control, there has been a problem that air consumption in the steady state is large. In a case where the application of the spool-type gas pressure control valve is assumed as an alternative to the nozzle flapper valve, there has been a problem that cost is significantly higher than that of the nozzle flapper valve because the complicated valve structure and highly accurate component processing are required.

Furthermore, there have been the following problems in common between the nozzle flapper valve and the spool-type gas pressure control valve. When a flow rate of the servo valve is increased in order to improve the vibration damping performance (responsiveness), the vibration isolation performance is reduced. The reason is that, as the flow rate increases, a gradient of a control flow rate with respect to a valve input current increases, and a resolution of the servo valve decreases. That is, the vibration damping performance and the vibration isolation performance have been originally in a trade-off relationship. It seems that these problems that seem to be fatal cause a mental lock effect (thought stop) that prevents a developer from further deepening his/her thoughts, and attempts to achieve higher accuracy and higher acceleration of the vibration damping control by the pneumatic servo have been abandoned. Solution to Problem

Specifically, a first aspect of the invention of the present application includes: a vibration isolator; a means configured to suppress vibration transfer between a foundation and the vibration isolator, and support the vibration isolator with respect to the foundation; a vibration isolation means having a function of reducing minute vibration of the vibration isolator; and a vibration damping actuator configured to provide the vibration isolator with a vibration damping force for attenuating disturbance generated in the vibration isolator, on the basis of information on a vibration force provided by a vibration generation source to the vibration isolator that is installed in an environment having the vibration generation source that applies vibration to the vibration isolator, in which the vibration damping actuator is configured with a gas pressure method of being driven by a vibration damping valve that performs intake and exhaust of gas inside the vibration damping actuator, and the vibration isolation means and the vibration damping actuator are arranged independently of each other to have generated forces having a same direction component.

That is, in the present invention, the vibration isolation means, the gas type vibration damping actuator, and the vibration damping valve that performs intake and exhaust of gas inside the gas type vibration damping actuator are separately and independently arranged. The two actuators are arranged so as to have generated force components in the same direction.

As described above, in a case where the pneumatic servo is applied to the vibration damping control, there has been a problem that air consumption is large and responsiveness is poor. Increasing a flow rate of the servo valve is an essential condition for high acceleration and vibration damping control. In the conventional pneumatic servo, in a case where a flow rate of the servo valve is to be increased, there has been a problem that air consumption in steady time increases. In the case of the present invention configured by separating the vibration isolation means and the gas type vibration damping actuator, a large flow rate through the vibration damping servo valve during the vibration damping control is only instantaneous (several milliseconds to several tens of milliseconds). Therefore, magnitude of average air consumption is not problematic.

In addition, in the conventional servo valve that performs both vibration isolation and vibration damping, there has been a problem that vibration isolation performance is reduced when a flow rate of the servo valve is increased in order to improve the vibration damping performance. The reason is that, as the flow rate increases, a gradient of a control flow rate with respect to a valve input current increases, and a resolution of the servo valve decreases. That is, the vibration damping performance and the vibration isolation performance have been originally in a trade-off relationship. In the present invention configured by separating vibration isolation and vibration damping, a driving principle and a control method that can achieve the best performance can be selected individually for the vibration isolation actuator and the vibration damping actuator and the servo valve.

Specifically, according to a second aspect of the invention of the present application, two sets of a vibration damping actuator that generate forces in mutually opposite directions are respectively arranged on opposed surfaces to attenuate a vibration force $F_A$ and a vibration force $F_B$, where the vibration force $F_A$ is a positive direction component of the vibration force applied to the vibration isolator by the vibration generation source, and the vibration force $F_B$ is a negative direction component of the vibration force.

That is, in the present invention, since the vibration damping actuator is configured independently, a range of the control pressure is not limited. The two sets of an actuator are respectively arranged on opposed surfaces so as to generate forces in opposite directions by utilizing the fact that the actuators can be driven in a wide range from an atmospheric pressure to a pressure close to a maximum pressure (supply pressure). As a result, it is possible to obtain a large vibration damping force (generated force) for the vibration force applied to the vibration isolator, for attenuating the vibration force.

Specifically, according to a third aspect of the invention of the present application, a vibration isolation actuator is used for the vibration isolation means, and the vibration isolation actuator is driven by a vibration isolation pneumatic servo valve.

That is, in the present invention, in a case of a conventional pneumatic servo system in which one pneumatic actuator is used for both the vibration damping function and the vibration isolation function, the vibration damping performance and the vibration isolation performance have been in a trade-off relationship. For example, (1) when an air void of the pneumatic actuator is narrowed in order to increase a speed of the vibration damping control, the vibration isolation performance is reduced. (2) When the air void of the pneumatic actuator is increased in order to improve the vibration isolation performance, the vibration damping performance is reduced. At the compromise of (1) and (2), it has been necessary to choose between the vibration damping performance and the vibration isolation performance. In the present invention in which the pneumatic actuators for vibration isolation and vibration damping are independently arranged, the fluid control system can simultaneously obtain the best vibration damping performance and vibration isolation performance.

Specifically, according to a fourth aspect of the invention of the present application, during vibration damping control, the vibration damping actuator is driven in a range from a vicinity of an atmospheric pressure to a supply source pressure or less, and the vibration damping valve is driven such that an internal pressure of the vibration damping actuator is maintained in a state in a vicinity of an atmospheric pressure before a start and after an end of the vibration damping control.

That is, in the present embodiment, an air chamber of the vibration damping actuator is set to be released to the atmosphere when the vibration damping control is ended. This setting solves a problem of an increase in resonance frequency due to parallel connection of air chamber springs of the vibration damping actuator and the vibration isolation actuator after transition from the vibration damping control to the vibration isolation control. That is, the presence of the vibration damping actuator does not affect the vibration isolation performance, by keeping a spring rigidity of the vibration damping actuator zero or close to zero at a step of the vibration isolation control.

Further, since the independently configured vibration damping actuator can be driven in a wide range from the atmospheric pressure to a pressure close to a maximum pressure (supply pressure), a large generated force can be obtained. For obtaining a maximum generated force, an opening degree between a flapper and an intake-side nozzle of the vibration damping servo valve may simply be subjected to full-stroke drive to the maximum opening degree from a state where the opening degree is zero.

Specifically, according to a fifth aspect of the invention of the present application, when a supply source pressure, an air chamber volume, and a pressure receiving area of the vibration isolation actuator are $P_{sv}$, $V_v$, and $A_v$, respectively, and a supply source pressure, an air chamber volume, and a pressure receiving area of the vibration damping actuator are $P_{sd}$, $V_d$, and $A_d$, respectively, $P_{sv}A_v^2/V_v < P_{sd}A_d^2/V_d$ is satisfied.

That is, in the present invention, characteristics required for the vibration isolation actuator and the vibration damping actuator are evaluated by a rigidity of the air spring as follows. When pressure receiving areas of the vibration isolation actuator and the vibration damping actuator are $A_v$ and $A_d$, and volumes of the air chambers are $V_v$ and $V_d$, a pressure $P_{av}$ in the air chamber vibration isolation is set to $P_{av} = P_{sv}/2$ assuming that 1/2 of a supply source pressure $P_{sv}$ is an operating point. Similarly, a pressure $P_{ad}$ in the vibration damping air chamber is set to $P_{ad} = P_{sd}/2$. Therefore, the rigidities of the air springs of the vibration isolation actuator and the vibration damping actuator are $K_v = P_{sv}A_v^2/V_v$ and $K_d = P_{sd}A_d^2/V_d$. The rigidities of the two air springs can be set to any values.

The air spring for vibration isolation may simply be configured to be as soft as possible in order to obtain vibration isolation performance in a low frequency range, and the air spring for vibration damping may simply be configured to be as hard as possible in order to obtain high responsiveness. In summary, it suffices that a specification and an application condition of each actuator are set so as to satisfy $K_v < K_d$, that is, $P_{sv}A_v^2/V_v < P_{sd}A_d^2/V_d$.

Specifically, according to a sixth aspect of the invention of the present application, the vibration damping valve and the vibration damping actuator are arranged such that a control port of the vibration damping valve and an intake hole of the vibration damping actuator are connected by a substantially linear flow path.

That is, in the present invention, the intake hole of the vibration damping actuator, the control port, and the intake hole are coupled by a linear flow path without a complicated bent flow path. This configuration is advantageous in achieving high acceleration vibration damping control that requires rising and falling characteristics on the order of several milliseconds.

Specifically, according to a seventh aspect of the invention of the present application, the vibration damping valve and the vibration damping actuator are arranged such that a control port of the vibration damping valve and an intake hole of the vibration damping actuator are connected by an approximately L-shaped flow path.

That is, in the present invention, the intake hole of the vibration damping actuator, the control port, and the intake hole are coupled only by an approximately L-shaped flow path without many complicated bent flow paths. A flow path shape having a low flow path resistance according to the coupling of the linear flow path described above is obtained.

Specifically, according to an eighth aspect of the invention of the present application, a characteristic of the vibration damping valve alone is that a generated pressure with respect to an input signal has a non-linear characteristic, a correction means for the non-linear characteristic is provided on a drive side of the vibration damping valve and configured to reduce an influence of the non-linear characteristic on the vibration damping force, and the vibration damping valve is driven with a drive input waveform obtained by the correction means for the non-linear characteristic.

That is, in the present invention, as the reason why no prior research example in which the pneumatic method is applied to high acceleration and vibration damping control has been found in the past, attention has been paid to a problem that has not been seen in any research examples that have been investigated so far, that is, (iii) achieving higher accuracy of vibration damping control, in addition to the known problems of the pneumatic servo, (i) large air consumption and (ii) poor responsiveness. That is, the non-linear characteristic of the servo valve is an important factor that hinders the achievement of (iii) above. By driving the vibration damping valve with a drive input waveform obtained by the correction means for the non-linear characteristic, high acceleration and vibration damping control can be achieved with high accuracy.

Specifically, according to a ninth aspect of the invention of the present application, a non-linear characteristic of the vibration damping valve alone is that an output characteristic such as a flapper displacement or a pressure with respect to an input signal has any of: a dead zone characteristic in which a state where an output does not increase is maintained in a vicinity of a start of input signal application; non-linearity of an output characteristic with respect to an input signal value; and a variation in an input signal value reaching a target output.

That is, in the present invention, on the basis of comparison with a linear motor characteristic in which a generated force with respect to an input current has a direct proportional relationship, attention is paid to the fact that a problem unique to the pneumatic servo is three non-linear characteristics of the servo valve. That is, there are the dead zone characteristic at a start of input, non-linearity of the output characteristic, and variation in the input signal value reaching a target output.

Specifically, according to a tenth aspect of the invention of the present application, in the vibration damping valve in which an output characteristic such as a flapper displacement or a pressure with respect to an input signal I has a dead zone characteristic in which a state where an output does not increase is maintained in a range of $0 \leq I \leq I_1$, the vibration damping valve is driven with an input waveform that steeply rises at time $t \approx 0$ that is when the vibration damping control is started.

That is, in the present invention, it is essential to block a supply-side flow path when the input current I = 0 is satisfied regardless of a type of the servo valve, and the presence of the dead zone cannot be avoided. Magnitude of a preload applied to the flapper is set at a final assembly step, in consideration of an accumulation error of valve component accuracy. Therefore, a solution is found on the premise that a width of the dead zone $\Delta I_1$ varies. Here, the width of the dead zone $\Delta I_1$ indicates magnitude of the signal value range $0 \leq I \leq I_1$.

An influence of the dead zone can be eliminated by driving the servo valve with a steeply rising pulse waveform immediately after the start of the vibration damping control. According to this knowledge, it is possible to obtain a transient response characteristic asymptotically approaching a target FF signal regardless of magnitude of the dead zone of the flapper displacement. Therefore, when the input signal I = 0 is satisfied at the time $t \approx 0$ that is when the vibration damping control is started, the best response waveform can be achieved by inputting the pulse waveform of $I = I_1$.

Specifically, according to an eleventh aspect of the invention of the present application, in the vibration damping valve in which an output characteristic such as a flapper displacement or a pressure with respect to an input signal I has non-linearity, when a reference characteristic is of a case where the output characteristic with respect to an input signal of the vibration damping valve is assumed to have a straight line, and an output value of the reference characteristic with an input signal value $I = I_0$ is $X = X_0$ and an output value when an output characteristic has non-linearity is $Y = Y_0$, the vibration damping valve is driven with an input waveform corresponding to magnitude of a difference $\varepsilon = Y_0 - X_0$ from the reference characteristic.

That is, in the present invention, a characteristic of an element component included in the servo valve is non-linear. Flow rate characteristics of the intake and exhaust nozzles determined by a pressure ratio and an opening area are originally non-linear, and magnetic characteristics of an electromagnet, a permanent magnet, and the like accompanied by hysteresis and a magnetic saturation phenomenon are also non-linear. In addition, a solution has been found on the premise that the servo valve is formed by many precision components and is assembled through a complicated adjustment process, so that variations in characteristics due to accumulation errors are unavoidable.

Specifically, according to a twelfth aspect of the invention of the present application, in the vibration damping valve having a variation in an input signal value $I = I_0$ reaching a target output value in an output characteristic such as a flapper displacement or a pressure with respect to an input signal of the vibration damping valve, when a maximum value of the input signal is $I = I_{max}$ and a variation width is $\Delta I_2 = I_{max} - I_2$, the vibration damping valve is driven such that a drive waveform and a final value of a drive input become smaller as a variation width $\Delta I_2$ is larger in a range of $0 \leq I \leq I_{max}$.

That is, in the present invention, due to the valve characteristics having the dead zone and the non-linearity, the variation $\Delta I_2$ also occurs in the input current reaching the control pressure maximum pressure. According to this knowledge, it is possible to obtain a transient response characteristic asymptotically approaching the target FF signal regardless of magnitude of the current value variation at the time of reaching.

Specifically, a thirteenth aspect of the invention of the present application further includes: a generated force detection means configured to detect a generated force of the vibration damping actuator, in which the vibration damping valve is driven to attenuate the vibration force on the basis of information obtained by the generated force detection means.

That is, in high accuracy and high acceleration vibration damping control proposed by the present invention, attention is paid to a point that a generated force of a pneumatic actuator driven by a servo valve is determined only by a drive input current waveform $I(t)$ of the servo valve. That is, as long as the drive input current waveform $I(t)$ is obtained, the non-linearity/responsiveness correction means may be any method. In order to enable the non-linearity/responsiveness correction means to be performed, information on the generated force of the pneumatic actuator measured by the generated force detection means such as a pressure sensor and a load cell is essential.

Specifically, according to a fourteenth aspect of the invention of the present application, when $F_0(t)$ is a target value of a vibration damping control signal for applying a force in an opposite phase for attenuating the vibration force, and $F(t)$ is an actual measurement value of a generated force of the vibration damping actuator obtained on the basis of an output of the pressure detection means, the vibration damping valve is driven with generated force feedback for reducing a deviation $\varepsilon$ between the target value and the actual measurement value.

That is, in the present invention, the servo valve is driven by performing the generated force feedback such that the deviation $\varepsilon = F_0(t) - F(t) \to 0$ is obtained between the target value and the actual measurement value. As a result, FF control with high accuracy can be achieved without being affected by (i) non-linearity of valve characteristics, (ii) variation in valve characteristics, (iii) change in production conditions such as supply pressure setting, and the like. In addition, by the generated force feedback, it is possible to obtain an effect of improving responsiveness of these transfer characteristics including all delay elements such as volumes of the pneumatic actuator, the pipe, and the like, fluid resistance of the pipe, and the like. Furthermore, in the adjustment process, an operator does not need to have a special skill, and high-precision FF control can be easily achieved.

Furthermore, the generated force feedback exerts a great effect on unpredictable disturbance. It has been found that, in a pressure reduction valve installed on an upstream side of the intake hole of the servo valve, a pressure on the upstream side of the intake hole steeply drops when a large flow rate flows during the vibration damping control. For the problem of supply source pressure fluctuation, an accurate target value can be always maintained for the generated force (control pressure) during the vibration damping control by performing the generated force feedback in real time.

Specifically, according to a fifteenth aspect of the invention of the present application, the generated force detection means is a pressure sensor arranged in any place of: a control chamber of the vibration damping valve; an air chamber of the vibration damping actuator; and a flow path connecting the control chamber and the air chamber.

That is, in the present invention, the pressure sensor is used to detect an actual measurement value of the generated force. With a piston area S of the air chamber, an actual measurement value $F(t) (= P \times S)$ of the generated force is obtained on the basis of a pressure P of the pressure sensor. In the present invention, the pressure FB control using the pressure sensor is performed only during the vibration damping control, and the pressure FB control is not performed during the vibration isolation control. This is a proposal on the premise of knowledge that the pressure sensor has a poor resolution and is difficult to be applied to fine vibration control.

In a case of the conventional pneumatic servo system in which one pneumatic actuator is used for both the vibration damping function and the vibration isolation function, it is expected that it has been difficult to use a pressure sensor and an acceleration sensor in combination. This is because, when both sensors are used in combination, the vibration isolation performance is dominated by the pressure sensor having a poor resolution. In the fluid control system of the present invention configured by separating the vibration isolation and the vibration damping, the application of the pressure sensor having a resolution significantly lower than that of the acceleration sensor used in the vibration isolation control does not cause a problem in the vibration damping control.

Specifically, according to a sixteenth aspect of the invention of the present application, the vibration damping valve includes an electromagnet, a flapper, a nozzle arranged to be opposed to the flapper, a flapper support member that fixes the flapper, and an intake hole and an exhaust hole for a fluid that communicate with the nozzle, and the vibration damping valve has a configuration in which a closed loop magnetic circuit is formed by the electromagnet, the flapper, and a yoke material, the flapper is operated by a suction force generated between a magnetic pole of an electromagnet and the flapper, and a length of a flow path formed between the flapper and the nozzle is made variable to control a pressure or a flow rate of the fluid.

That is, in the present invention, a nozzle flapper valve is used for the vibration damping servo valve. The nozzle flapper valve has a largest air consumption flow rate at an operating point (neutral point) due to an operation principle thereof, and there has been a problem that an air consumption flow rate in steady time is greatly increased when the nozzle flapper valve is applied to high acceleration and vibration damping control. As an alternative to the nozzle flapper valve, a spool valve having a different basic driving principle can reduce the air consumption flow rate in the steady state. However, the spool valve has a complicated structure and requires high-precision component processing and assembly, and there has been a problem that cost is significantly higher than that of the nozzle flapper valve.

In the case of the present invention configured by separating the vibration isolation actuator and the gas type vibration damping actuator from each other, as described above, a large flow rate flowing through the vibration damping servo valve during the vibration damping control is only instantaneous (several milliseconds to several tens of milliseconds). Therefore, since magnitude of average air consumption is not problematic, the nozzle flapper valve with a larger flow rate can be applied. As a result, it is possible to achieve significant cost down of the entire active vibration isolator that requires a large number of servo valves to control individual actuators.

Specifically, a seventeenth aspect of the invention of the present application is a control method of the fluid control system according to the sixth aspect of the invention of the present application, in which a characteristic of the vibration damping valve alone is that a generated pressure with respect to an input signal has a non-linear characteristic, a correction means for the non-linear characteristic is provided on a drive side of the vibration damping valve and configured to reduce an influence of the non-linear characteristic on the vibration damping force, in which the vibration damping valve is driven with a drive input waveform obtained by the correction means for the non-linear characteristic, in which the control method includes: obtaining a drive input waveform of the vibration damping valve with the fluid control system in an adjustment step of a vibration isolation device including the fluid control system, and then driving the vibration damping valve with the drive input waveform in a state where the correction means for the non-linear characteristic is not applied in an implementation step of the vibration isolation device.

That is, in the present invention, the non-linearity/responsiveness correction means applied in the adjustment step is not applied in the implementation step, and only the input drive signal of the servo valve obtained in the adjustment step is used.

The present invention focuses on a point that, in vibration damping control, a generated pressure (generated force) of a pneumatic actuator driven by a servo valve is determined only by a drive input current waveform (A) of the servo valve. That is, a role of the non-linearity/responsiveness correction means is to determine a profile of the drive input current waveform (A) such that the generated pressure (generated force) becomes the target input value (FF signal). Therefore, in the next step, the same pressure characteristic can be obtained by driving the servo valve with the drive input current waveform (A), without performing the non-linearity/responsiveness correction means.

Specifically, an eighteenth aspect of the invention of the present application is a control method of the fluid control system of the fourteenth aspect of the invention of the present application in which, when $F_0$ (t) is a target value of a vibration damping control signal for applying a force in an opposite phase for attenuating the vibration force, and F (t) is an actual measurement value of a generated force of the vibration damping actuator obtained on the basis of an output of the pressure detection means, the vibration damping valve is driven with pressure feedback for reducing a deviation $\varepsilon$ = F (t) - $F_0$ (t) between the actual measurement value and the target value, in which a drive input waveform of the vibration damping valve is obtained by the fluid servo system in an adjustment step of a vibration isolation device including the fluid control system, and then the vibration damping valve is driven with the drive input waveform in a state where the pressure feedback is released in an implementation step of the vibration isolation device.

That is, the present invention focuses on a point that, in the vibration damping control, a generated pressure (generated force) of a pneumatic actuator driven by a servo valve is determined only by a drive input current waveform (A) of the servo valve. Therefore, the pressure feedback applied in the adjustment step is not applied in the implementation step, and it suffices that only the input drive signal of the servo valve obtained in the adjustment step is used. That is, the role of pressure feedback is to determine a profile of the drive input current waveform (A) such that the generated pressure (generated force) becomes the target input value (FF signal). Therefore, in the next step, the same pressure characteristic can be obtained by driving the servo valve with the drive input current waveform (A), without performing the pressure feedback.

Specifically, according to a nineteenth aspect of the invention of the present application, the fluid control system is configured to allow a data storage means to be applied, in which the drive input waveform can be specified, selected, and extracted in accordance with a difference in element equipment such as the vibration damping valve or the vibration damping actuator or in accordance with a difference in a production condition such as production takt and a set value of a supply pressure.

That is, in the present invention, the servo valve drive input waveform obtained by applying the non-linearity/responsiveness correction means is stored in a server of a computer or the like with production conditions specified. A specified production condition number is a specification at a time of adjustment that can be reproduced under the same condition at a time of mass production, such as a product number of the servo valve, a specification of the pneumatic actuator, an intake/exhaust pipe specification, a supply source set pressure, and production takt.

At the mass production step, the non-linearity/responsiveness correction means is not performed, a drive input waveform of the specified production condition number stored in the server or the like of the computer is selected, and the servo valve is driven.

Specifically, according to a twentieth aspect of the invention of the present application, the vibration damping valve is driven through a compensation circuit such as a proportional amplifier, an integral amplifier, or a differential amplifier incorporated in a control circuit that drives the vibration damping valve in an adjustment step of the fluid control system, and the vibration damping valve is driven in a state where the compensation circuit is invalid in an implementation step of the fluid control system.

That is, in the present invention, a PID control device for causing the deviation ε between a target signal and a generated force feedback signal to asymptotically approach zero is required in the adjustment step, whereas only the drive circuit of the vibration damping valve is required in the implementation step of the fluid control system.

Specifically, a twenty-first aspect of the invention of the present application includes: a control circuit (A) configured to drive the vibration damping valve on the basis of information from the generated force detection means; and a control circuit (B) configured to drive the vibration damping valve in a state where information from the generated force detection means is blocked, in which the control circuit (A) and the control circuit (B) are configured to be switchable.

That is, in the present invention, in the adjustment step, the vibration damping valve is driven through the control circuit (A) on the basis of information from the pressure detection means. In the mass production step, the input current waveform stored in the server or the like of the computer is selected, and the servo valve is driven through the control circuit (B). The control circuit (B) mainly includes only a servo valve drive circuit without the PID control device or the like.

In the present invention, the control circuit (A) and the control circuit (B) are not separately provided, but the control circuit (A) and the control circuit (B) are configured to be switchable. Examples of a means of enabling switching between the control circuit (A) and the control circuit (B) include replacement of a circuit board. Alternatively, an operation may be performed on a panel surface in consideration of workability at the time of implementation.

Specifically, according to a twenty-second aspect of the invention of the present application, a pressure sensor is used for the pressure detection means, and the pressure sensor is configured to be attachable to and detachable from the vibration damping valve, the vibration damping actuator, or the like.

That is, the present invention utilizes a point that the pressure feedback using the pressure sensor may not be applied in the mass production step, and it suffices that only the input drive signal of the servo valve obtained in the adjustment step is used. Therefore, in the adjustment step, one highly accurate (expensive) pressure sensor may be used while being replaced for adjustment of each control shaft.

Specifically, according to a twenty-third aspect of the invention of the present application, in a fluid space including a control chamber formed inside the vibration damping valve, a pipe connecting the control chamber and the vibration damping actuator, and an air chamber of the vibration damping actuator, the pressure detection means is installed at, in the fluid space, a place in a stagnant state that is less susceptible to a dynamic pressure of gas during intake of gas into the air chamber or exhaust of gas from the air chamber.

That is, in the present invention, in an air flow path including the air chamber of the actuator and the pipe connecting the actuator and the control chamber of the valve, a large flow rate of air flows into each air flow path during acceleration/deceleration. According to Bernoulli's theorem in which a sum of a static pressure and a dynamic pressure of fluid is constant, a speed is high and a dynamic pressure is high at a place where a flow path area is small. Since the generated force of the actuator is determined by magnitude of the static pressure, it is preferable to install a pressure sensor at a place where the dynamic pressure is small in order to accurately detect the generated force. Therefore, in the present embodiment, the pressure sensor is installed at a place that is to be a stagnant space that is less susceptible to dynamic pressure.

Specifically, according to a twenty-fourth aspect of the invention of the present application, a place where a pressure is detected in the stagnant space is a position at a maximum distance from an opening of the pipe in the control chamber of the vibration damping valve or in the air chamber.

That is, in the present invention, the pressure sensor is installed at the position (near an outer peripheral end of the pneumatic actuator) at the maximum distance from the opening of the pipe in the control chamber of the vibration damping valve or in the air chamber, as a place that is to be the stagnant space that is less susceptible to dynamic pressure.

Specifically, according to a twenty-fifth aspect of the invention of the present application, in a state where an intake side of the vibration damping valve is connected to a supply pressure source and an exhaust side is opened to atmosphere, when a state where a drive input value I is zero is $I = 0$, the drive input value with which air flows into the control chamber and the control chamber pressure starts to increase is $I = I_1$, and a range of $0 \leq I \leq I_1$ is a dead zone of the vibration damping valve, the drive input value I is controlled while avoiding the dead zone.

That is, the present invention shows the following two measures (1) and (2) capable of reducing an influence of a dead zone characteristic on a vibration damping control characteristic even in a case where the correction means for non-linearity/responsiveness is not performed.

(1) A current value $I_0$ at standby time of vibration damping control is set in a range of $0 \leq I_0 \leq I_1$

(2) A current value $I_0$ at standby time of vibration damping control is set in a range of $I_0 \geqq I_1$

In a case where the standby current value $I_0$ of vibration damping control is set in the range of (1), a pressure in the control chamber is maintained at the atmospheric pressure. By approximation of the standby current value $I_0 \to I_1$, a dead zone width $\Delta I$ $(= I_1 - I_0) \to 0$ in the static characteristic can be obtained, and a "dead time element" $\Delta T \to 0$ in the dynamic characteristic can be obtained.

In a case where the standby current value $I_0$ of the vibration damping control is set in the range of (2), a pressure in the vibration damping valve control chamber is higher than the atmospheric pressure. In this case, the function of the vibration isolation control supports the vibration damping actuator. That is, position control is performed by the vibration isolation actuator such that a distance on a movable side (surface plate side) with respect to a fixed side is maintained at a constant value. If a pressure rise in the air chamber of the vibration damping actuator is minute, the air spring rigidity $K_d$ proportional to the pressure can be sufficiently small, so that the influence on the vibration isolation performance can be made small.

In summary, in the servo valve having the dead zone width in the range of $0 \leq I_0 \leq I_1$, if $I = I_1$ is set as a center value and a standby current value is set such that an error $\pm \Delta I_1$ with respect to the center value $I_1$ is as small as possible, the influence on the vibration damping control and the vibration isolation control can be reduced.

Specifically, a twenty-sixth aspect of the invention of the present application is a fluid control system including: a vibration isolator; a stage configured to move on the vibration isolator; a stage driving means configured to drive the stage; a vibration isolation actuator configured to support the vibration isolator with respect to a foundation and having a function of reducing minute vibration applied from an outside to the vibration isolator; a first vibration damping actuator configured with a gas pressure method and configured to give a vibration damping force for attenuating a vibration force to the vibration isolator, on the basis of information on the vibration force applied to the vibration isolator accompanying acceleration and deceleration of the stage; a second vibration damping actuator having higher responsiveness than the first vibration damping actuator and having a different operation principle; and a generated force detection means configured to detect a generated force of the first vibration damping actuator, in which, when $F(t)$ is an actual measurement value of a generated force of the first vibration damping actuator obtained by the generated force detection means, $F_0(t)$ is a generated force target value set to attenuate the vibration force on the basis of information on the vibration force applied to the vibration isolator accompanying movement of the stage, and $\Delta F = F_0(t) - F(t)$ is a deviation between the target value and the actual measurement value, the second vibration damping actuator is driven such that $\Delta F$ asymptotically approaches zero.

That is, the present invention assumes the drive system including the pneumatic actuator as the first vibration damping actuator, and the second vibration damping actuator having higher responsiveness than the first vibration damping actuator and having a different operation principle, and proposes a "hybrid control" that utilizes respective advantages to compensate for disadvantages.

Specifically, according to a twenty-seventh aspect of the invention of the present application, the second vibration damping actuator is a linear motor driven by the Lorentz force.

That is, instead of selecting either the pneumatic servo method or the linear motor method, the present invention proposes to further improve the performance by combining both methods and utilizing the respective advantages. That is, since there is no mechanical movable portion, a higher level of the high acceleration and vibration damping control can be achieved by combining the linear motor method having excellent high-speed responsiveness and the pneumatic servo.

Specifically, according to a twenty-eighth aspect of the invention of the present application, the vibration isolation actuator includes a linear motor.

That is, in the present invention, the linear motor method which is the second vibration damping actuator is used for the vibration isolation actuator. As a basic mode of the present invention, since the vibration isolation actuator and the vibration damping actuator are configured separately, it is possible to select a driving principle and a control method that can achieve the best performance for each of the vibration isolation actuator and the vibration damping actuator and driving means thereof. Considering that the vibration isolation actuator does not require a large generated force as compared with the vibration damping actuator, the linear motor method having excellent high-speed responsiveness can be applied. That is, in the present embodiment, the linear motor method plays two roles of "shaping of vibration damping control waveform" and "vibration isolation effect". The linear motor method can also be applied as the vibration isolation actuator for applications other than the present embodiment. Brief Description of Drawings

FIG. 1 is a model diagram of an active vibration isolator according to a first embodiment of the present invention, in which FIG. 1a is a front cross-sectional view and FIG. 1b is a view as viewed from a direction of an AA arrow of FIG. 1a.
FIG. 2 illustrates a vibration damping pneumatic servo valve applied to the first embodiment of the present invention, in which FIG. 2a is a front cross-sectional view, and FIG. 2b is an enlarged view of a nozzle portion.
FIG. 3 is an enlarged view of a BB portion in FIG. 1b, in which a vibration damping actuator and a vibration isolation actuator are arranged in parallel.

FIG. 4 is a graph for evaluating an influence of a gap of an actuator air chamber on pressure responsiveness.

FIG. 5 is a graph illustrating a relationship between a resonance frequency and an air chamber gap.

FIG. 6 is a view illustrating a vibration damping pneumatic actuator, a vibration isolation pneumatic actuator, and the servo valve applied to the first embodiment of the present invention, in which FIG. 6a is an overall view as viewed from a direction of an arrow, and FIG. 6b is a cross-sectional view of a chain line portion CC in FIG. 6a.

FIG. 7a is a model diagram of a horizontal direction actuator portion in a fluid control system according to a second embodiment of the present invention, and FIG. 7b is an enlarged view of a chain line portion CC in FIG. 7a.

FIG. 8 is a model diagram of a vertical direction actuator portion in the fluid control system according to the second embodiment of the present invention.

FIG. 9 is a model diagram illustrating a characteristic of a linear motor generated force with respect to an input current.

FIG. 10 is a model diagram illustrating a characteristic of a pneumatic actuator generated force with respect to an input current.

FIG. 11 is a diagram illustrating a positional relationship between an intake nozzle and a flapper, in which FIG. 11a illustrates a state where the flapper shields the intake nozzle, and FIG. 11b illustrates a state where the flapper is separated from the intake nozzle.

FIG. 12 is a model diagram in a case where a disk displacement characteristic with respect to a current has a dead zone.

FIG. 13 is a model diagram in a case where a disk displacement characteristic with respect to a current has non-linearity.

FIG. 14 is a model diagram in a case where a current value at a time of reaching a maximum pressure varies.

FIG. 15 is a graph illustrating a transient response characteristic of a pressure in a case where a flapper displacement characteristic has a dead zone.

FIG. 16 is a graph illustrating a drive current characteristic of a servo valve with respect to time when a correction means for non-linear characteristic is performed in a dead zone characteristic C, in which FIG. 16a is an overall view, and FIG. 16b is an enlarged view of a chain line portion in FIG. 16a.

FIG. 17 is a graph illustrating a transient response characteristic of a pressure in a case where the flapper displacement characteristic has non-linearity.

FIG. 18 is a graph illustrating a drive current of the servo valve with respect to time in a case where the correction means for non-linear characteristic is performed in a case where the flapper displacement characteristic has non-linearity.

FIG. 19 is a graph illustrating a transient response characteristic of a pressure in a case where the flapper displacement characteristic has a current value variation when maximum displacement is reached.

FIG. 20 is a graph illustrating a drive current of the servo valve with respect to time in a case where the correction means for non-linear characteristic is performed in a case where the flapper displacement characteristic has a current value variation when the maximum displacement is reached.

FIG. 21 is a model diagram of a pneumatic servo system according to a fourth embodiment of the present invention.

FIG. 22 is a model diagram illustrating a static characteristic of a pneumatic actuator generated force with respect to an input current in conventional vibration damping control.

FIG. 23 is a model diagram illustrating a static characteristic of a pneumatic actuator generated force with respect to an input current in vibration damping control of the present invention.

FIG. 24 is a front cross-sectional view of a servo valve used in the fourth embodiment.

FIG. 25 is a diagram obtained by extracting only a pneumatic actuator and the servo valve in FIG. 1b.

FIG. 26 is a graph illustrating a target value of a generated force of each actuator illustrated in FIG. 5, in which FIG. 26a is a graph illustrating a target value of an L-side actuator and FIG. 26b is a graph illustrating a target value of an R-side actuator.

FIGS. 27a and 27b are graphs illustrating analysis results corresponding to generated force actual measurement values obtained from theoretical analysis.

FIG. 28 is a graph illustrating an analysis result of obtaining a sum of two generated forces $F = F_{X1} - F_{X2}$.

FIG. 29 is a conceptual diagram of an analysis block diagram for obtaining the generated force obtained in FIG. 28.

FIG. 30 is a graph illustrating an analysis result of each characteristic of the servo valve, in which FIG. (a) is a graph illustrating the control flow rate characteristic, FIG. (b) is a graph illustrating the intake flow rate characteristic, FIG. (c) is a graph illustrating the exhaust flow rate characteristic, FIG. (d) is a graph illustrating the disk displacement characteristic, and FIG. (e) is a graph illustrating the input current characteristic.

FIG. 31 is a graph illustrating enlarged views of waveforms [FIGS. (a) to (e)] of FIG. 30, in which FIG. 31a is a graph illustrating a control flow rate characteristic, FIG. 31b is a graph illustrating an intake flow rate characteristic, FIG. 31c is a graph illustrating an exhaust flow rate characteristic, FIG. 31d is a graph illustrating a disk displacement characteristic, and FIG. 31e is a graph illustrating an input current characteristic.

FIG. 32 is a control block diagram of a fifth embodiment of the present invention.

FIG. 33 is a diagram illustrating "hybrid control" which is a sixth embodiment of the present invention.

FIG. 34 is a graph illustrating an input waveform of a generated force target value $F_0$ (t) of a pneumatic actuator.

FIG. 35 is a graph illustrating an output response waveform of an FF signal target value with respect to an input signal.

FIG. 36 is a graph illustrating a drive input waveform of a linear motor.

FIG. 37 is a graph illustrating a generated force of a vibration damping actuator with respect to an input current of a vibration damping valve when a current value $I_0$ is set in a range of $0 \leq I_0 \leq I_1$.

FIG. 38 is a graph illustrating a generated force of the vibration damping actuator with respect to an input current of the vibration damping valve when the current value $I_0$ is set in a range of $I_0 \geq I_1$.

FIG. 39a is a diagram illustrating a state where a vibration isolation actuator and a vibration isolation valve support functions of the vibration damping actuator and the vibration damping valve when $I_0 \geq I_1$ is satisfied, and FIG. 39b is an enlarged view of an AA portion of FIG. 39a.

FIG. 40 is a model diagram of an active vibration isolator using a pneumatic servo valve.

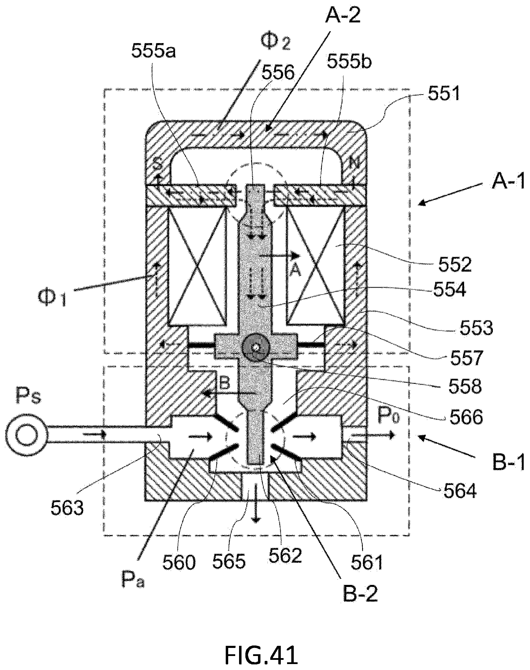

FIG. 41 is a view in which a conventional nozzle flapper type pneumatic servo valve is modeled.

FIG. 42 is a front cross-sectional view of a conventional spool-type pneumatic servo valve.

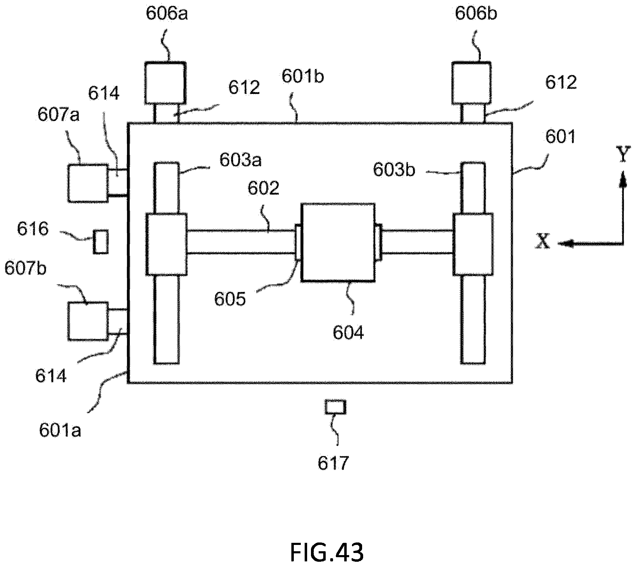

FIG. 43 illustrates an active vibration isolator of a conventional linear motor method.

Description of Embodiments

[First embodiment]

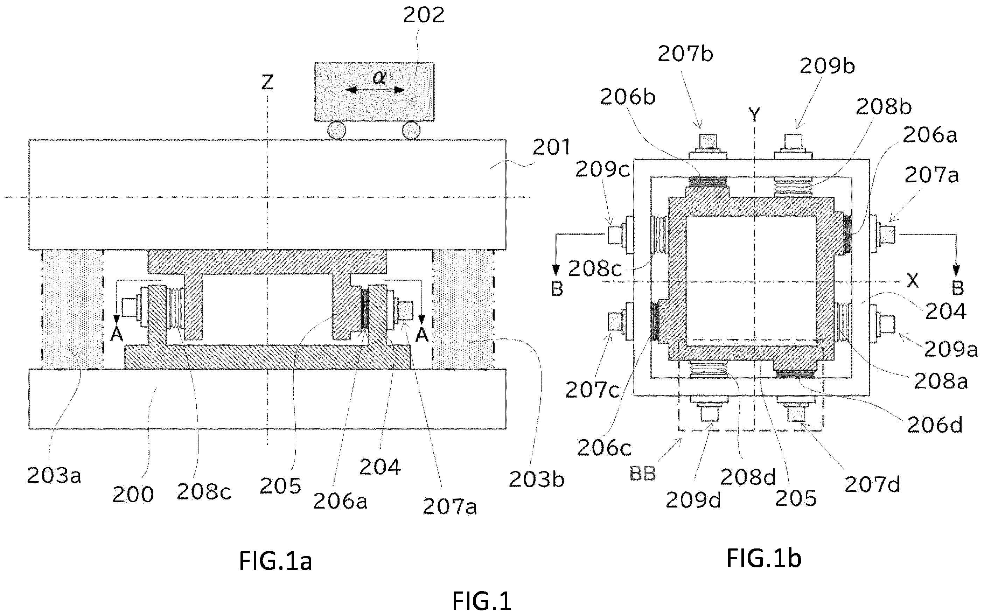

FIG. 1 is a model diagram of a fluid control system (active vibration isolator) provided with feedforward vibration damping control (FF control) according to a first embodiment of the present invention, in which FIG. 1a is a front cross-sectional view and FIG. 1b is a view as viewed from a direction of an AA arrow of FIG. 1a.

[1] Configuration of active vibration isolator

A plurality of sets of pneumatic actuators for supporting a surface plate 201 (vibration isolator) are arranged on a floor surface 200 (foundation), and a precision device (not illustrated) is mounted on the surface plate 201. Reference numeral 202 denotes a stage mounted on the surface plate 201. In the present embodiment, acceleration $\alpha$ at a time of acceleration/deceleration of the stage and a reaction force of an inertial force $F = m\alpha$ determined by a stage mass m serve as a vibration generation source that applies vibration to the surface plate. Information on the vibration force applied to the surface plate by the vibration generation source, that is, information on the vibration force applied to the surface plate accompanying the movement of the stage is input to a controller (not illustrated) of feedforward control.

Reference numerals 203a and 203b denote pneumatic actuators (vibration isolation means) that support a vertical Z-axis direction. This pneumatic actuator suppresses vibration transfer between the floor surface and the surface plate, and is a supporting means for the surface plate with respect to the floor surface.

A configuration including a plurality of sets of actuators supporting horizontal XY directions is referred to as "torque balance type", and is modeled and illustrated in the figure. Reference numeral 204 denotes a floor-surface-side outer frame portion, and reference numeral 205 denotes a surface-plate-side inner frame portion. Four sets of vibration damping pneumatic actuators 206a, 206b, 206c, and 206d, vibration damping pneumatic servo valves 207a, 207b, 207c, and 207d, and vibration isolation pneumatic actuators (vibration isolation means) 208a, 208b, 208c, and 208d, and vibration isolation pneumatic servo valves 209a, 209b, 209c, and 209d are arranged axisymmetrically at positions away from axial centers of XY axes.

[2] Structure of vibration damping servo valve

[2-1] Valve basic structure

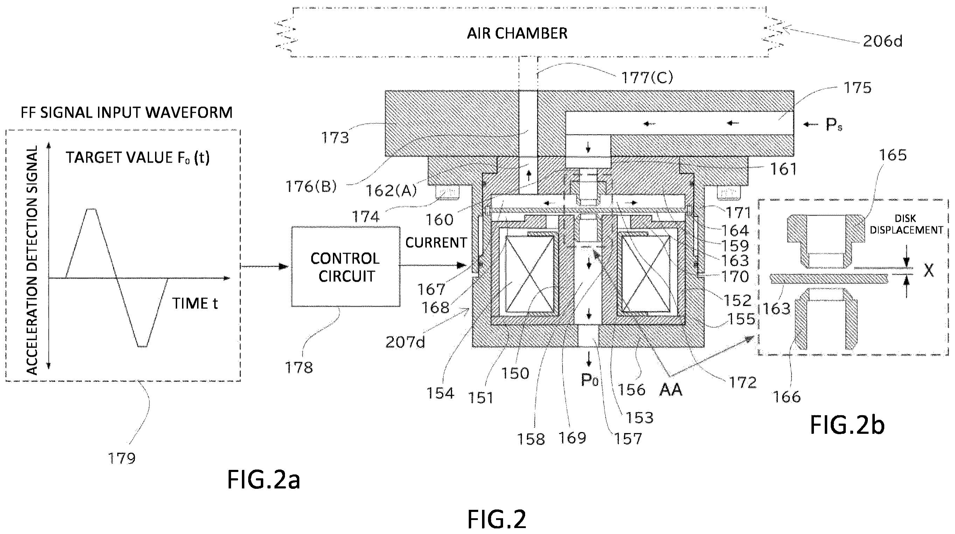

FIG. 2 illustrates the vibration damping pneumatic servo valve (207d in FIG. 1b) applied to the embodiment of the present invention, in which FIG. 2a is a front cross-sectional view, and FIG. 2b is an enlarged view of a nozzle portion described later. The servo valve is being proposed by the present inventors (Patent Literature 8), and a basic operation principle is a nozzle flapper type. This figure illustrates a control circuit 178 that drives the servo valve to be described later, and a feedforward signal (FF signal) input waveform 179.

Reference numeral 150 denotes a central axis of a cylindrical shape, reference numeral 151 denotes a bottom portion of the central axis, reference numeral 152 denotes an outer frame portion of the central axis formed concentrically with an axial center of the central axis, reference numeral 153 denotes a coil bobbin attached to the central axis, and reference numeral 154 denotes a coil wound around the coil bobbin. The central axis 150, the central axis bottom portion 151, the outer frame portion 152 of the central axis, the coil bobbin 153, and the coil 154 constitute an electromagnetic actuator that suctions a flapper (described later) to control displacement thereof.

Reference numeral 155 denotes an exhaust-side housing that has a tubular shape and houses the bottom portion 151 of the central axis and the outer frame portion 152, reference numeral 156 denotes an exhaust-side housing bottom portion, reference numeral 157 denotes an exhaust hole formed in the housing bottom portion 156, reference numeral 158 denotes an exhaust-side flow passage formed in the central axis 150, reference numeral 159 denotes an intake-side housing, reference numeral 160 denotes an intake-side flow path formed in a central portion of this supply-side housing, and reference numeral 161 denotes an intake hole. Reference numeral 162 denotes a control-side flow path A connected to a pneumatic actuator (described later). Reference numeral 163 denotes a flapper having a disk shape and held between the intake-side housing 159 and the exhaust-side housing 155 by a positioning pin 164 at an outer peripheral end. The flapper 163 includes a spiral groove portion (groove) and a ridge portion (ridge) (not illustrated). Reference numeral 165 denotes an intake-side nozzle (forward nozzle) attached to the intake-side flow path 160, and 166 denotes an exhaust-side nozzle (backward nozzle) attached to the exhaust-side flow passage 158. FIG. 2b illustrates an enlarged view of the nozzle portion.

Reference numeral 167 denotes an intake-side void portion formed between the intake-side housing 159 and the flapper 163, and reference numeral 168 denotes an exhaust-side void portion formed between the flapper 163 and the exhaust-side housing. Reference numeral 169 denotes a flapper-valve-side end surface (central axis end surface) of the central axis 150, and is a first magnetic pole of an electromagnet. Reference numeral 170 denotes a second magnetic pole formed on the flapper-side end surface of the outer frame portion 152. Reference numeral 171 denotes an outer sleeve that houses outer peripheral portions of the intake-side housing 159 and the exhaust-side housing 155. Further, the groove portion (groove) of the flapper 163 passes through the intake-side void portion and the exhaust-side void portion, and the two void portions form a control chamber 172 of the valve.

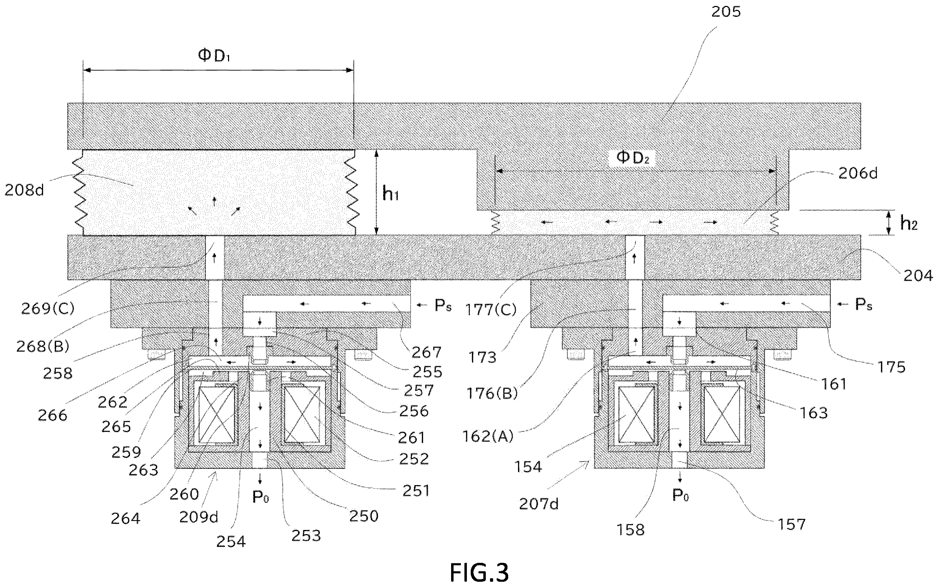

Reference numeral 173 denotes a valve fastening member, and a servo valve body is fastened to the valve fastening member with a bolt 174. Reference numeral 175 denotes an intake-side flow path formed in the valve fastening member, and reference numeral 176 denotes a control-side flow path B. Reference numeral 177 indicated by an imaginary line denotes a control-side flow path C formed in the floor-surface-side outer frame portion 204 (FIG. 1), and is connected to an air chamber (described later in FIG. 3) of the vibration damping pneumatic actuator 206d.

Summarizing the basic operation principle of the nozzle flapper type servo valve described above, the intake-side nozzle and the exhaust-side nozzle are arranged to be opposed to the flapper, the flapper is operated by a suction force generated between a magnetic pole of the electromagnet and the flapper, and a length of a flow path formed between the flapper and the nozzle is made variable to control a fluid pressure or a flow rate in the control chamber.

[2-2] Control circuit for driving valve

Reference numeral 178 denotes the control circuit that drives the servo valve 207d. Reference numeral 179 denotes a feedforward signal (FF signal) $F_0(t)$ for canceling an impact load accompanying stage movement. That is, in order to prevent vibration application to the vibration isolator caused when the stage repeats acceleration and deceleration on the vibration isolator, a force (counter force) having the same magnitude as the vibration force and having an opposite phase is set as a target value of the input waveform. The FF signal is obtained on the basis of a command signal to a stage drive mechanism, an actual measurement value of an acceleration sensor provided in each control shaft, or the like.

[3] Separated structures of vibration isolation actuator and vibration damping actuator

[3-1] Description of parallel arrangement structure

FIG. 3 is an enlarged view of a BB portion in FIG. 1b, in which the vibration damping actuator 206d and the vibration isolation actuator 208d are arranged in parallel so as to have generated force components in the same direction.

Here, in the present invention, the meaning of "having generated force components in the same direction" is defined as follows. A generated force F of an actuator is assumed to be a vector sum of two component forces $F_x$ and $F_y$ in the X-axis direction and the Y-axis direction. In a case where the respective actuators for vibration damping and vibration isolation both have the component force $F_x$ in the X-axis direction or the component force $F_y$ in the Y-axis direction, the component forces of the actuators have generated force components in the same direction. In the case of FIG. 3 (BB portion in FIG. 1b), since the two actuators are arranged in parallel to the X axis, only Y-axis direction component forces $F_y$ of the individual actuators have the generated force components in the same direction. Since an X-axis direction component force $F_x = 0$, there is no generated force component in the same direction.

The vibration isolation pneumatic servo valve 209d in the present embodiment uses a nozzle flapper valve similarly to the vibration damping pneumatic servo valve 207d. Hereinafter, only a main configuration of the vibration isolation pneumatic servo valve 209d will be described. Reference numeral 250 denotes a central axis of a cylindrical shape, reference numeral 251 denotes a coil bobbin, and reference numeral 252 denotes a coil wound around the coil bobbin. Reference numeral 253 denotes an exhaust hole, reference numeral 254 denotes an exhaust-side flow passage formed in the central axis, reference numeral 255 denotes an intake-side housing, reference numeral 256 denotes an intake-side flow path formed in a central portion of the intake-side housing, and reference numeral 257 denotes an intake hole. Reference numeral 258 denotes a control-side flow path A connected to the pneumatic actuator. Reference numeral 259 denotes a flapper having a disk shape, reference numeral 260 denotes an intake-side nozzle (forward nozzle), and reference numeral 261 denotes an exhaust-side nozzle (backward nozzle). Reference numeral 262 denotes an intake-side void portion, reference numeral 263 denotes an exhaust-side void portion, reference numeral 264 denotes a first magnetic pole of an electromagnet, reference numeral 265 denotes a second magnetic pole, and reference numeral 266 denotes a control chamber of the valve. Reference numeral 267 denotes an intake-side flow path formed in a valve fastening member, reference numeral 268 denotes a control-side flow path B, and reference numeral 269 denotes a control-side flow path C formed in the floor-surface-side outer frame portion 204 and connected to an air chamber of the vibration isolation pneumatic actuator 208d.

[3-2] Features of separated structures of vibration damping and vibration isolation

In the present embodiment, the vibration isolation actuator, the gas type vibration damping actuator, and the vibration damping valve that performs intake and exhaust of gas inside the gas type vibration damping actuator are separately and independently arranged. The two actuators are arranged so as to have generated force components in the same direction. The following effects can be obtained by the structure in which the vibration damping function and the vibration isolation function are separated.

(1) Air consumption is small

As described above, in a case where the pneumatic servo is applied to the vibration damping control, there has been a problem that air consumption is large and responsiveness is poor. Increasing a flow rate of the servo valve is an essential condition for high acceleration and vibration damping control. In the conventional pneumatic servo, in a case where a flow rate of the nozzle flapper type servo valve mainly used is to be increased, there has been a problem that air consumption in steady time increases. The nozzle flapper valve has a largest air consumption flow rate at an operating point (neutral point) due to an operation principle thereof, and there has been a problem that an air consumption flow rate in steady time is greatly increased when the nozzle flapper valve is applied to high acceleration and vibration damping control. As an alternative to the nozzle flapper valve, a spool valve having a different basic driving principle can reduce the air consumption flow rate in the steady state. However, the spool valve has a complicated structure and requires high-precision component processing and assembly, and there has been a problem that cost is significantly higher than that of the nozzle flapper valve.
In the case of the present invention configured by separating the vibration isolation actuator and the gas type vibration damping actuator from each other, as described above, a large flow rate flowing through the vibration damping servo valve during the vibration damping control is only instantaneous (several milliseconds to several tens of milliseconds). Therefore, since magnitude of average air consumption is not problematic, the nozzle flapper valve with a larger flow rate can be applied. As a result, it is possible to achieve significant cost down of the entire active vibration isolator that requires a large number of servo valves to control individual actuators.
Further, a natural frequency of the movable portion of the nozzle flapper type servo valve used in the present embodiment has been around $f_0 = 600$ to 800 Hz. This is because the equivalent mass m of the movable portion (disk-shaped flapper 163) can be made sufficiently small. On the basis of information on the vibration force accompanying movement of the stage, the vibration damping valve is preferably configured to satisfy $f_0 > 1/T$, where T (sec) is rise time from a vibration application start to a maximum acceleration, and $f_0$ (Hz) is a natural frequency of the vibration damping valve. In the present embodiment, it has been able to sufficiently satisfy the above condition even in a case where T = 2 ms is set.

(2) Vibration isolation function that achieves best vibration isolation performance can be selected

In the conventional servo valve that performs both vibration isolation and vibration damping, there has been a problem that vibration isolation performance is reduced when a flow rate of the servo valve is increased. The reason is that, as the flow rate increases, a gradient of a control flow rate with respect to a valve input current increases, and a resolution of the servo valve decreases. In the present invention in which the vibration isolation actuator and the vibration damping actuator are configured separately, the driving principle and control method for achieving the best performance according to needs of an active vibration isolator application target • • • for example, a linear motor, a pneumatic servo, a piezo drive system, or the like can be selected for the vibration isolation actuator.

(3) Large vibration damping force is obtained

The air chamber of the vibration damping actuator is set to be released to the atmosphere when the vibration damping control is ended. This setting solves a problem of an increase in resonance frequency due to parallel connection of air chamber springs of the vibration damping actuator and the vibration isolation actuator after transition from the vibration damping control to the vibration isolation control. That is, the presence of the vibration damping actuator does not affect the vibration isolation performance, by keeping a spring rigidity of the vibration damping actuator zero or close to zero at a step of the vibration isolation control.

Further, since the independently configured vibration damping actuator can be driven in a wide range from the atmospheric pressure to a pressure close to a maximum pressure (supply pressure), a large generated force can be obtained. For obtaining a maximum generated force, full-stroke drive may simply be performed to cause an opening degree between the flapper and the intake-side nozzle of the vibration damping servo valve to reach the maximum opening degree from a state where the opening degree is zero.

(4) In a case of performing vibration damping and vibration isolation by the pneumatic method, a trade-off relationship is eliminated.

In a case of the conventional pneumatic servo system in which one pneumatic actuator is used for both the vibration damping function and the vibration isolation function, the vibration damping performance and the vibration isolation performance have been in a trade-off relationship. For example, (1) when an air void of the pneumatic actuator is narrowed in order to increase a speed of the vibration damping control, the vibration isolation performance is reduced. (2) When the air void of the pneumatic actuator is increased in order to improve the vibration isolation performance, the vibration damping performance is reduced. At the compromise of (1) and (2), it has been necessary to choose between the vibration damping performance and the vibration isolation performance. In the present invention in which the pneumatic actuators for vibration isolation and vibration damping are independently arranged, the fluid control system can simultaneously obtain the best vibration damping performance and vibration isolation performance.

[4] Theoretical analysis of vibration damping control

In the model diagram of the active vibration isolator illustrated in FIG. 1, the vibration damping valves (207a, 207c) and the vibration damping actuators (206a, 206c) are arranged on the left and right for vibration damping control in the X-axis direction. A vibration damping force in the X-axis direction applied to the surface plate 201 is a sum of vibration damping forces generated in the left and right actuators. In the present embodiment, in order to achieve both the vibration isolation performance and the vibration damping performance, the pneumatic actuators for vibration isolation and vibration damping having greatly different characteristics are arranged in parallel. In order to clarify the effect, paying attention to only the vibration damping actuator 206a and the vibration damping valve 207a arranged on the R side, theoretical analysis for obtaining pressure responsiveness is performed.

[4-1] Basic formula

For a mass flow rate of gas passing through the nozzle of the servo valve, Equations (1) and (2) of the nozzle in an isentropic flow of compressible fluid are used. An effective cross-sectional area between the nozzle and the flapper is an annular flow path area formed between a nozzle tip and the flapper. When a nozzle inner diameter is d, displacement of a micro piston is x, and a stroke of the flapper is $\delta_a$, a supply-side effective cross-sectional area is $a_{in} = d\pi x$ and an exhaust-side effective cross-sectional area is $a_{out} = d\pi (\delta_a - x)$. Hereinafter, a mass flow rate $G_{in}$ of gas flowing into the air chamber from the supply source side is expressed by the following equation. Here, $P_s$ is a supply source pressure, $P_a$ is a control chamber pressure of the servo valve, $\rho_s$ is a supply source gas density, and $\kappa$ is a specific heat ratio.
[Mathematical formula 1]

$$G_{in} = a_{in}\sqrt{2\rho_s P_s \frac{\kappa}{\kappa-1}\left[\left(\frac{P_a}{P_s}\right)^{\frac{2}{\kappa}} - \left(\frac{P_a}{P_s}\right)^{\frac{\kappa+1}{\kappa}}\right]} \qquad \cdots\cdots(1)$$

However, when $P_a/P_s < \{2/(\kappa + 1)\}^{2/(\kappa - 1)}$,
[Mathematical formula 2]

$$G_{in} = a_{in}\sqrt{2\rho_s P_s \frac{\kappa}{\kappa-1}(\frac{2}{\kappa+1})^{2/(\kappa-1)}} \qquad \cdots\cdots(2)$$

For a mass flow rate $G_{out}$ of gas flowing out from the control chamber to the atmosphere side, $P_s \rightarrow P_a$, $P_a \rightarrow P_0$, $\rho_s \rightarrow \rho_a$, and $a_{out} = d\pi(\delta_a - x)$ may simply be set in Equations (1) and (2). $V_c$ is a volume of the control chamber 172, and R is a gas constant. With the mass flow rates $G_{in}$ and $G_{out}$, the pressure $P_a$ of the control chamber 172 is obtained by the following equation.
[Mathematical formula 3]

$$\frac{dP_a}{dt} = \frac{\kappa R T_s}{V_c}(G_{in} - G_{out}) \qquad \cdots\cdots(3)$$

[4-2] Theoretical analysis result

(1) Analysis conditions

Table 1 shows basic specifications of the vibration damping servo valve used in the present embodiment.

[Table 1]

| Table 1 Basic specifications of vibration damping servo valve | | |
|---|---|---|
| Specification | Symbol | Set value |
| Intake/exhaust nozzle outer diameter | $\Phi d_{in}$ | 3.6 mm |
| | $\Phi d_{out}$ | 3.6 mm |
| Maximum displacement of disk | $X_{max}$ | 0.85 mm |
| Thrust constant of electromagnet | $K_I$ | 156 N/l |
| Maximum value of drive current | $I_{max}$ | 80 mA |
| Spring constant of disk | $K_d$ | 13.4 N/mm |
| Maximum exhaust amount of valve | $Q_{max}$ | 450 NL/min |

(1) Influence of gap of actuator air chamber on pressure responsiveness

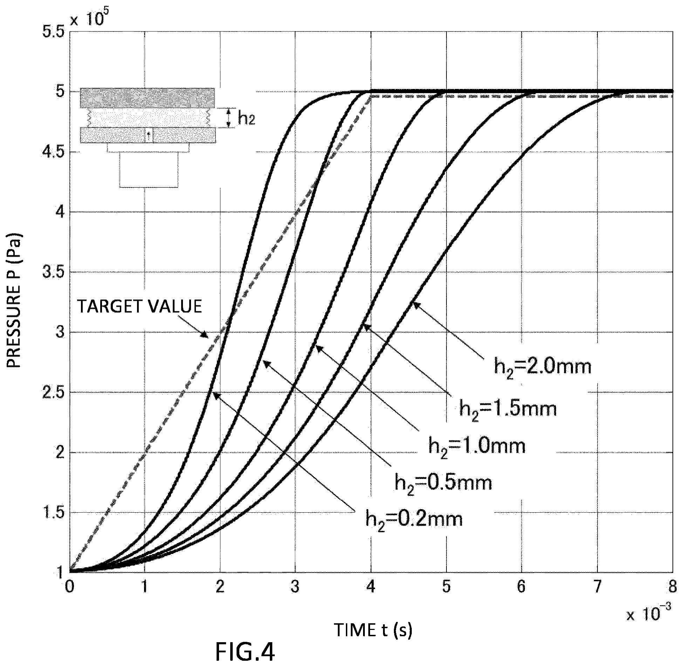

FIG. 4 illustrates a pressure response characteristic of the vibration damping actuator obtained by applying a feedforward signal to the vibration damping servo valve. A target value of a pressure waveform is a trapezoidal waveform from an atmospheric pressure (P = 0.1 MPa) to a supply pressure (P = 0.5 MPa). The flapper 163 of the vibration damping servo valve (207d in FIG. 2a) moves from a state where the intake-side nozzle 165 is completely shielded to a state where the exhaust-side nozzle 166 is completely shielded. That is, the vibration isolation servo valve is subjected to full-stroke drive. By the full-stroke drive, it is possible to obtain a large generated force that cannot be obtained by the conventional method in which the actuators for vibration isolation and vibration damping and the servo valve are integrated.
In the figure, an influence of a gap $h_2$ on pressure responsiveness is evaluated in a case of the gap $h_2$ = 0.2 to 2.0 mm of the actuator air chamber. The responsiveness is better as the gap $h_2$ is smaller, with respect to a target value of rise time (chain line in the figure) Ts = 4 ms.

(2) Relationship between resonance frequency and air chamber gap

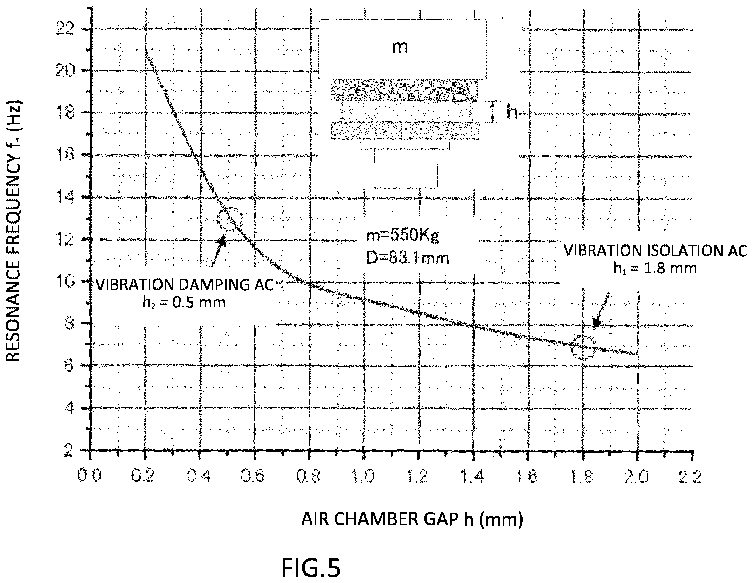

FIG. 5 illustrates, as a result obtained from Equation (4), a resonance frequency of the pneumatic actuator in a sealed state with respect to a gap h of the air chamber under the same conditions of an outer diameter and a load mass of the pneumatic actuator. In Equation (4), m is an equivalent mass handled by one actuator, $\kappa$ is a specific heat ratio, $A_a$ is a pressure receiving area of the actuator, h is an air chamber gap of the actuator, and $P_a$ is a pressure in the air chamber. In this regard, a sealed state of an air spring indicates a state where the flow paths on the supply side and the exhaust side are blocked.
[Mathematical formula 4]

$$f_0 = \frac{1}{2\pi}\sqrt{\frac{\kappa\, A_a P_a}{m\, h}} \qquad\qquad \cdots\cdots(4)$$

As illustrated in FIG. 3, an outer diameter $\Phi D_1$ of the vibration isolation actuator 208d, a gap $h_1$ of the void portion, an outer diameter $\Phi D_2$ of the vibration damping actuator 206d, and a gap $h_2$ of the void portion are defined. In the present embodiment, $\Phi D_1 = \Phi D_2 = 83.1$ mm, $h_1 = 1.8$ mm, $h_2 = 0.5$ mm, and m = 550Kg are set. A resonance frequency of the vibration damping actuator required to have high responsiveness is $f_0 = 13$ Hz. A resonance frequency of the vibration isolation actuator required to have vibration isolation performance in a low frequency range is $f_0 = 7$ Hz. In a conventional method in which an actuator is used for vibration isolation and for vibration damping and controlled by one servo valve, the resonance frequency can be set only in a trade-off relationship between the vibration isolation performance and the vibration damping performance. In the present invention, by setting the respective resonance frequencies of the vibration isolation actuator and the vibration damping actuator to $f_v$ and $f_d$, it is possible to set optimum specifications for requirements of the implementation target for any resonance frequency. Normally, it suffices that $f_v < f_d$ is satisfied.

Characteristics required for the vibration isolation actuator and the vibration damping actuator are evaluated by a rigidity K of the air spring in the sealed state as follows. In Equation (4), a resonance frequency is set to $f_0 = (K/m)^{0.5}/2\pi$ and a volume of the actuator air chamber is set to $V_0 = A_a h$.

[Mathematical formula 5]

$$K = \frac{\kappa\, P_a A_a^2}{V_0} \qquad\qquad \cdots\cdots(5)$$

Pressure receiving areas of the vibration isolation actuator and the vibration damping actuator are defined as $A_v$ and $A_d$, and volumes of the air chambers are defined as $V_v$ and $V_d$. Assuming that 1/2 of a supply source pressure $P_{sv}$ is an operating point, a pressure $P_{av}$ in the air chamber for vibration isolation is set to $P_{av} = P_{sv}/2$. Similarly, a pressure $P_{ad}$ in the vibration damping air chamber is set to $P_{ad} = P_{sd}/2$. Therefore, when the rigidity of the air spring of the vibration isolation actuator and the rigidity of the air spring of the vibration damping actuator are $K_v$ and $K_d$, respectively, the rigidity of the air spring can be set to any value. The air spring for vibration isolation may simply be configured to be as soft as possible in order to obtain vibration isolation performance in a low frequency range, and the air spring for vibration damping may simply be configured to be as hard as possible in order to obtain high responsiveness. In summary, it suffices that a specification and an application condition of each actuator is set so as to satisfy $K_v < K_d$, that is, $P_{sv}A_v^2/V_v < P_{sd}A_d^2/V_d$ when the two are relatively compared.

(3) Arrangement method for vibration damping valve and vibration damping actuator

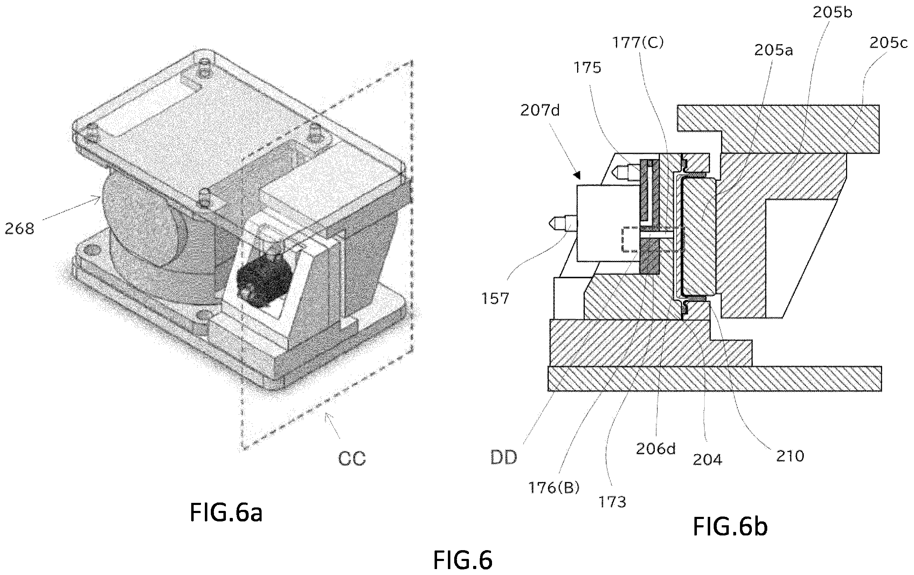

FIG. 6 illustrates an appearance of a structure in which the vibration damping actuator and the vibration isolation actuator described in FIG. 3 are arranged in parallel, in which FIG. 6a is an overall arrow view, and FIG. 6b is a cross-sectional view of a chain line portion CC in FIG. 6a.

Reference numeral 210 denotes a diaphragm (not illustrated in FIG. 3) that supports a movable portion of the vibration damping actuator. Members 205a, 205b, and 205a constitute a part of the surface-plate-side inner frame portion 205 (see FIGS. 1 and 3). Reference numeral 268 denotes a vibration isolation actuator unit, and this unit accommodates the vibration isolation actuator 208d, the vibration isolation servo valve 209d, and the like illustrated in FIG. 3.

A place indicated by a chain line DD in FIG. 6b is a flow path connecting the vibration damping valve 207d and the vibration damping actuator 206d, and is formed by the control flow path 162 (A), the control flow path 176 (B), and the control flow path 177 (C). That is, the vibration damping valve and the vibration damping actuator are arranged such that the control port of the vibration damping valve and the intake hole of the vibration damping actuator are connected by a substantially linear flow path without passing through a complicated bent flow path. Therefore, in the present invention, the configuration is extremely advantageous in achieving high acceleration vibration damping control that requires rising and falling characteristics on the order of several milliseconds.

[Supplement]

In the present embodiment, acceleration at a time of acceleration/deceleration of the stage and a reaction force of an inertial force F determined by the stage mass serve as a vibration generation source that applies vibration to the surface plate. Therefore, the vibration generation source is located inside the vibration isolator body including the surface plate. However, the present invention can be applied even in a case where the vibration generation source is located outside the vibration isolator. For example, a case is assumed in which a press machine is installed near the vibration isolator body, and an impulsive load generated by the press machine exceeds a limit of vibration damping capability by vibration isolation control of the vibration isolator body. Even in this case, disturbance generated in the surface plate can be attenuated by the vibration damping control on the basis of information on the vibration force applied by the press machine to the surface plate. That is, as long as the vibration isolator body is installed under an environment having the vibration generation source that applies vibration to the surface plate, and information on the vibration force given to the surface plate by the vibration generation source can be used, the present invention can be applied (not illustrated).

[Second embodiment]

Vibration isolation actuator and vibration damping actuator are coaxially arranged

Hereinafter, a description will be given to a second embodiment of the present invention in which a vibration isolation actuator and a vibration damping actuator are coaxially arranged. First, an embodiment of a horizontal direction actuator portion will be described.

[1] Horizontal direction actuator portion

[1-1] Actuator configuration

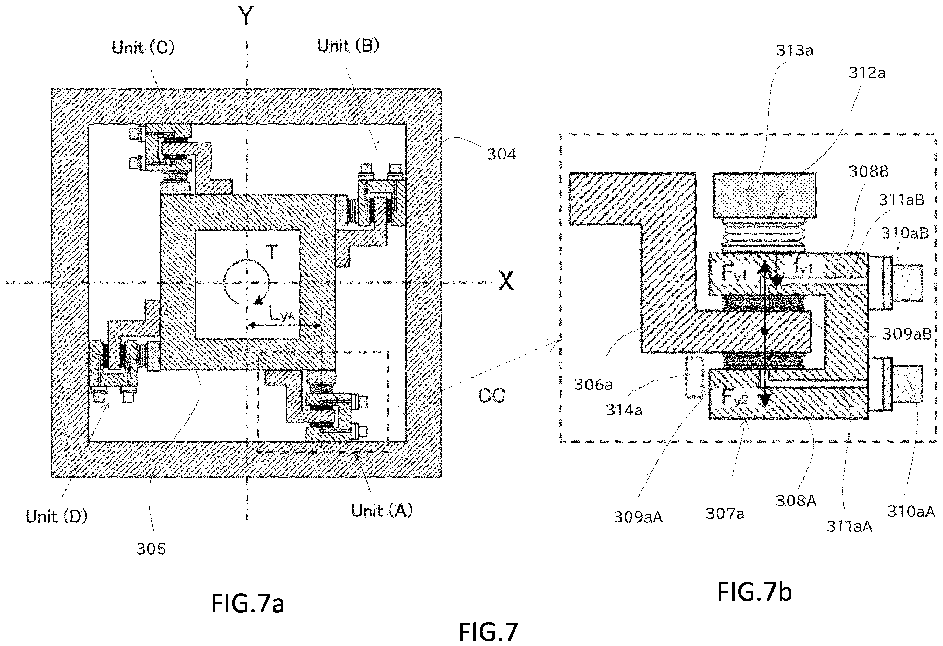

FIG. 7a is a model diagram of a horizontal direction actuator portion in a fluid control system (active vibration isolator) provided with feedforward vibration damping control (FF control) according to the second embodiment of the present invention, and FIG. 7b is an enlarged view of a chain line portion CC in FIG. 7a. FIG. 7a corresponds to the view as viewed from a direction of the AA arrow of FIG. 1a in the first embodiment.

A configuration including a plurality of sets of actuators supporting horizontal XY directions is referred to as a "torque balance type". Reference numeral 304 denotes a floor-surface-side outer frame portion, and reference numeral 305 denotes a surface-plate-side inner frame portion. The horizontal direction actuator portion of the fluid control system in the present embodiment includes four independent actuator units [Unit (A) to Unit (D)] arranged axisymmetrically. In this actuator unit, as illustrated in an enlarged view of a chain line portion CC [Unit (A)], a vibration damping actuator and a vibration isolation actuator are coaxially arranged.

In FIG. 7b, reference numeral 306a denotes a surface-plate-side intermediate support member, and reference numeral 307a denotes a floor-surface-side support member having a U-shaped cross section. Reference numeral 308A denotes a floor surface side of the floor-surface-side support member 307a, and reference numeral 308B denotes a surface plate side of the floor-surface-side support member 307a. Reference numerals 309aA and 309aB denote vibration damping actuators, and are arranged to face each other in a state of being sandwiched between the surface-plate-side intermediate support member 306a and the floor-surface-side support member 307a. Reference numerals 310aA and 310aB denote vibration damping valves installed on the floor surface side 308A and the surface plate side 308B of the floor-surface-side support member. Reference numerals 311aA and 311aB denote flow paths connecting the vibration damping valve and the vibration damping actuator. This flow path is formed in a substantially L shape, and has a flow path shape with low flow path resistance according to the above-described coupling of the linear flow path. An acceleration detector and a displacement detector that detect a signal in the Y-axis direction of Unit (A) are representatively illustrated by a sensor 314a. Reference numeral 312a denotes a vibration isolation actuator (vibration isolation means) sandwiched between the surface-plate-side inner frame portion 305 and the floor-surface-side support member 307a with a support member 313a interposed therebetween. (Vibration isolation servo valve is not illustrated)

[1-2] Effects of invention

The present embodiment includes four independent actuator units [Unit (A) to Unit (D)] having drive shafts arranged coaxially. As compared with the first embodiment (FIG. 1) in which eight sets of drive shafts for the vibration damping and vibration isolation actuators are arranged in parallel, the controller and the control method of the active vibration isolator can be greatly simplified. The reason will be described below.

In FIG. 7a, a case is assumed in which, in order to attenuate vibration (impact load) of the surface plate accompanying acceleration/deceleration of a movable stage, a vibration damping force in the Y-axis direction ($F_y = F_{y1} - F_{y2}$) is applied to the surface plate by the vibration damping actuators 309aA and 309aB. In this case, a force ($f = f_{y1}$) generated by the vibration isolation actuator 312a at the same working point and in the same direction is also applied as a series sum. As a result, a rotational torque T proportional to magnitude of a working point $L_{YA}$ is generated on the surface plate. That is, translational motion and rotational motion are dynamically combined, and cannot be individually controlled. Normally, a control target of the active vibration isolator is described by a motion equation of a multi-degree-of-freedom system in which rotational motion and translational motion are combined. Therefore, by converting the motion equation of the control target from spatial coordinates (orthogonal coordinates) to mode coordinates, the multi-degree-of-freedom system is changed to a plurality of independent one-degree-of-freedom systems, to facilitate the control of individual axes.

That is, the fact is used that the individual degrees of freedom on the spatial coordinates are combined, but the degrees of freedom on the mode coordinates are not combined.

In the present embodiment, a displacement detector and an acceleration detector that detect displacement, acceleration, and the like of both the vibration isolation actuator and the vibration damping actuator are installed for each actuator unit, which greatly contributes to simplification of the controller and the control method.

[2] Vertical direction actuator portion

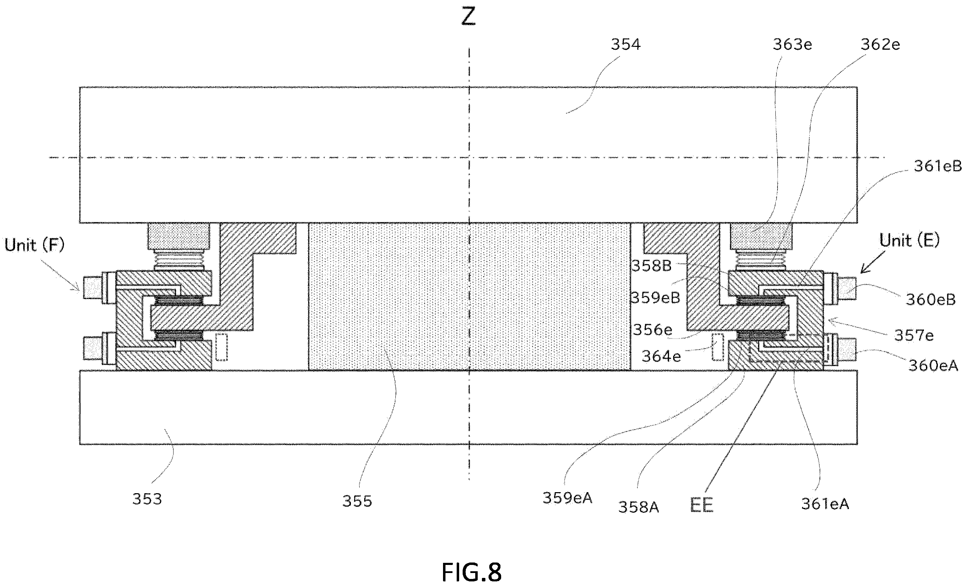

In FIG. 8, four sets of actuator units [Unit (E) to Unit (K)] for supporting a surface plate 354 (vibration isolator) are arranged on a floor surface 353, and a precision device (not illustrated) is mounted on the surface plate 354 [Unit (J) to Unit (K) are not illustrated]. Reference numeral 355 denotes the horizontal direction actuator portion described above. Hereinafter, a configuration of Unit (E) will be described, but Unit (F) to Unit (K) also have similar configurations. Reference numeral 356e denotes a surface-plate-side intermediate support member, and reference numeral 357e denotes a floor-surface-side support member having a U-shaped cross section. Reference numeral 358A denotes a floor surface side of the floor-surface-side support member 357e, and reference numeral 358B denotes a surface plate side of the floor-surface-side support member 357e. Reference numerals 359eA and 359eB denote vibration damping actuators, and are arranged to face each other in a state of being sandwiched between the surface-plate-side intermediate support member 356e and the floor-surface-side support member 357e. Reference numerals 360eA and 360eB denote vibration damping valves installed on a floor surface side 368A and a surface plate side 368B of the floor-surface-side support member. Reference numerals 361eA and 361eB denote flow paths connecting the vibration damping valve and the vibration damping actuator. A flow path indicated by a chain line EE is formed in a substantially L shape, and has a shortest flow path shape in the structure of the present embodiment in which the vibration damping actuator and the vibration isolation actuator are coaxially arranged. Therefore, this flow path shape is a flow path shape having a low flow path resistance according to the coupling of the linear flow path described above. This flow path shape is similarly adopted for the horizontal direction actuator portion described above. An acceleration detector and a displacement detector that detect a signal in the Z-axis direction of Unit (E) are representatively illustrated by a sensor 364e. Reference numeral 362e denotes a vibration isolation actuator (vibration isolation means) sandwiched between a surface-plate-side support member 363e and the floor-surface-side support member 357e (a vibration isolation servo valve is not illustrated). The vibration isolation actuator in the present embodiment suppresses vibration transfer between the floor surface (foundation) and the surface plate (vibration isolator), and also serves as a support means for the surface plate with respect to the floor surface.

The configuration of the actuator portion in which respective drive shafts of the vibration damping actuator and the vibration isolation actuator are coaxially arranged is similar to the horizontal direction actuator portion described above in that the controller and the control method of the active vibration isolator can be greatly simplified.

In the present embodiment, the respective drive shafts of the vibration damping actuator and the vibration isolation actuator are arranged coaxially, and these two actuators are connected in series. Instead of this configuration, a first actuator may be arranged at a central portion, and a ring-shaped second actuator may be arranged at an outer peripheral portion. This configuration can simplify an overall configuration of the actuator unit, and shorten a total length of the unit. Which of the first and second actuators is to be used for vibration damping or vibration isolation may be determined in accordance with specifications required for an application target (not illustrated).

In a case of the active vibration isolator, the surface plate 354 on which a movable stage and the like are mounted is often configured to be movable in a limited range (about 1 to 2 mm) also in the horizontal direction in a state of being supported in the vertical direction. Hereinafter, a vertical direction actuator portion (FIG. 8) will be described as an example. In the present embodiment, it is assumed that an axial center of the surface-plate-side intermediate support member 356e (movable side) is movable by about 1 to 2 mm with respect to an axial center of the floor-surface-side support member 357e (fixed side), in a state where the vibration damping actuators 359eA and 359eB are sandwiched between both members.

Furthermore, the vibration isolation actuator 362e is also sandwiched between the surface-plate-side support member 363e (movable side) and the floor-surface-side support member 357e (fixed side), which similarly applies to the surface-plate-side support member. If the pneumatic vibration damping actuator and pneumatic vibration isolation actuator are configured by diaphragms that also prevent air leakage, an axial center between both members sandwiching the actuators can move in the horizontal direction within a limited range.

If laminated rubber or the like having a low rigidity in the horizontal direction and a high rigidity in the vertical direction is attached between the surface-plate-side intermediate support member 356e and the vibration damping actuator 359eA and between the surface-plate-side intermediate support member 356e and the vibration damping actuator 359eB, an influence of a rigidity of the diaphragm of the vibration damping pneumatic actuator on a horizontal natural frequency can be reduced. This similarly applies to a case of the vibration isolation actuator (not illustrated).

The respective drive shafts of the vibration damping actuator and the vibration isolation actuator may not be geometrically coaxial, and are only required to be arranged so as to have coaxial generated force components. Therefore, outer diameters, shapes, and the like of the two actuators may be different. In addition, the vibration damping actuator or the vibration isolation actuator may include a plurality of actuators. In a case of the horizontal direction actuator, the vibration isolation actuator may not be pneumatic, but may be, for example, a linear motor (not illustrated).

[Third embodiment]

Non-linear characteristic of servo valve is corrected

As described above, any prior example or any research example in which the pneumatic method is applied to high acceleration and vibration damping control is not found at the present moment. As a reason therefor, as described above, in the pneumatic servo, there have been problems that (i) air consumption is large and (ii) responsiveness is poor. In addition to (i) and (ii), the present inventor has paid attention to a new problem of the pneumatic servo that has not been delved by any research example so far. That is, attention is paid to a problem of (iii) achieving higher accuracy of vibration damping control.

[1] Comparison of input/output characteristics between linear motor method and pneumatic servo method

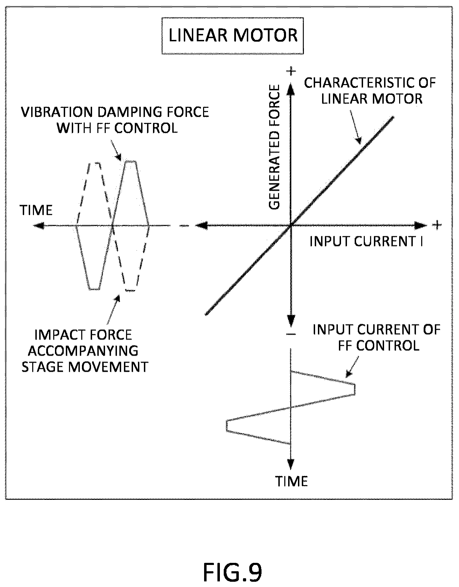

FIG. 9 is a model diagram illustrating a static characteristic of a linear motor generated force with respect to an input current. In a case of a linear motor whose operation principle is the Lorentz force, a generated force with respect to an input current is in a direct proportional relationship. Therefore, a feedforward signal for attenuating a vibration force accompanying stage movement can be easily generated, and vibration damping control with high accuracy can be performed.

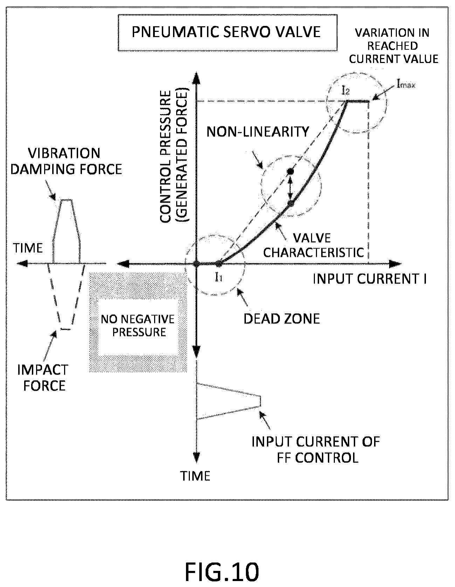

FIG. 10 is a model diagram illustrating a static characteristic of a pneumatic actuator generated force with respect to an input current. As illustrated in the figure, in a case of a pneumatic servo valve, a characteristic of a generated force (control pressure) with respect to an input current is non-linear. It is also assumed that the servo valve is subjected to full-stroke drive ($I = 0 \rightarrow I_{max}$) with an input current $I = 0$ as a start point. In a case of the pneumatic servo, a positive vibration damping force for a positive input waveform of an FF control signal is obtained, but a negative vibration damping force for a negative input waveform is not obtained. This is because, although obvious, there is no negative air pressure that is symmetrical with a positive air pressure.

[2] Non-linear characteristics of servo valve

[2-1] Three non-linear characteristics

FIG. 10 is a model diagram illustrating a static characteristic of a control pressure (generated force) of the pneumatic servo valve with respect to an input current. As illustrated in the figure, non-linear characteristics of the servo valve are organized into the following three.

(1) Dead zone

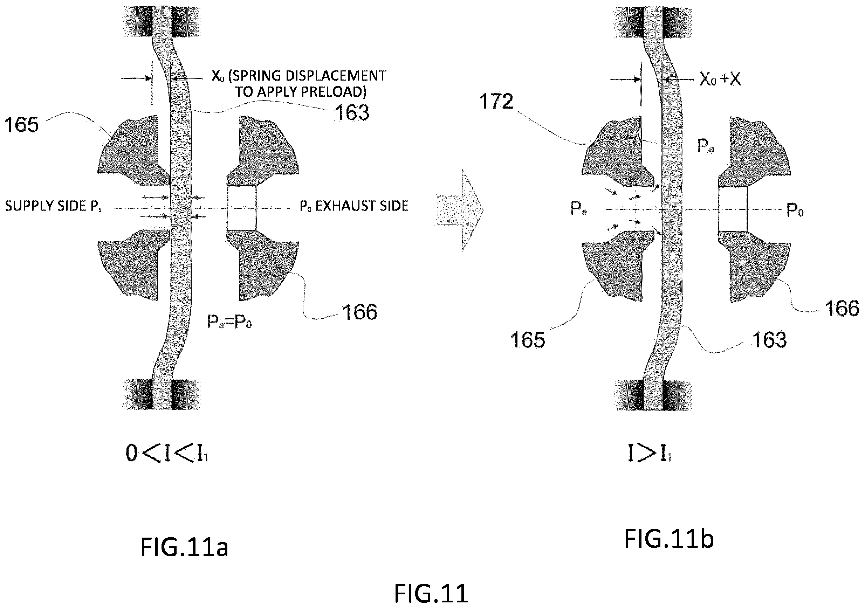

FIG. 11 illustrates a modeled positional relationship between the intake nozzle 165 and the flapper 163, in which FIG. 11a illustrates a state where the flapper 163 shields an opening end of the intake nozzle 165, and FIG. 11b illustrates a state where the flapper 163 is separated from the opening end of the intake nozzle 165, and air flows into the control chamber 172 (see FIG. 2a). When the input current $I = 0$ is satisfied, it is essential to block a supply-side flow path regardless of a type of the servo valve. Therefore, it is necessary to shield a supply-side opening by applying a preload (flapper displacement $X_0$) to the flapper at the step of initial setting.
(i) Since magnitude of the preload is set assuming a maximum allowable supply pressure $P_{Smax}$ applied to the pneumatic servo, there is always a dead zone in a case of a supply pressure $P_s < P_{Smax}$ at the time of implementation. For example, in a case where $P_{Smax} = 0.6$ MPa is set and the supply pressure is $P_s = 0.5$ MPa at the time of implementation, a dead zone occurs.
(ii) Magnitude of the preload (displacement $X_0$) applied to the flapper is set at a final assembly step, in consideration of an accumulation error of valve component accuracy. Therefore, a dead zone width $\Delta I_1$ varies.

On the premise of (i) and (ii), a case is assumed in which the vibration damping actuator and the vibration isolation actuator have separated structures, and the vibration damping actuator is driven from an atmospheric pressure to a high pressure. In this case, the servo valve is driven from the input current $I = 0$ to $I = I_{max}$. In the dynamic characteristic of the control pressure (vibration damping control output) with respect to time, the dead zone in the vicinity of $I \approx 0$ in the static characteristic of the servo valve is a "dead time element" in which the output is zero.

(2) Non-linearity

A characteristic of an element component included in the servo valve is non-linear. With a choke phenomenon, flow rate characteristics of the intake and exhaust nozzles determined by a pressure ratio and an opening area are originally non-linear. Magnetic characteristics of an electromagnet, a permanent magnet, and the like included in a magnetic circuit of a drive unit are also non-linear because hysteresis and a magnetic saturation phenomenon are involved. In addition, the servo valve includes many precision components processed with high accuracy, such as the electromagnet, the permanent magnet, the nozzle, and the flapper, and is assembled through a complicated adjustment process. Therefore, variations in characteristics due to accumulation errors cannot be avoided. Therefore, a profile of the non-linear valve characteristics also varies between products.

(3) Current value variation at time of reaching maximum pressure

Due to the valve characteristics having the dead zone and the non-linearity, a variation $\Delta I_2$ also occurs in an input current reaching a control pressure maximum pressure.

[2-2] Modeling of each non-linear characteristic

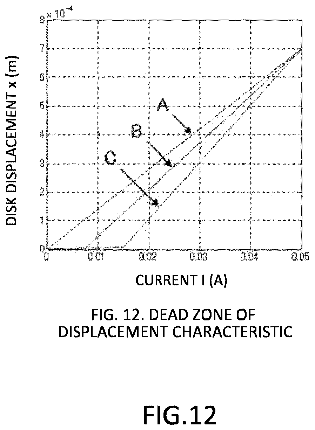

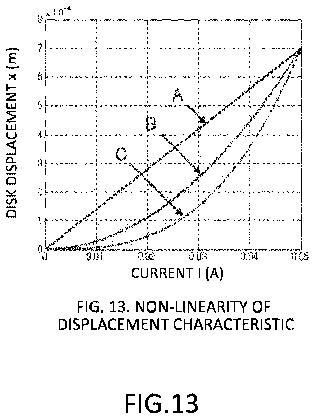

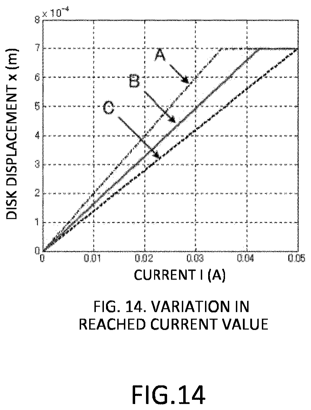

In order to analyze an influence of each non-linear characteristic of the servo valve on the vibration damping control characteristic, modeling is performed on three independent non-linear characteristics (static characteristics). A purpose thereof is to find a measure for reducing an influence of these non-linear characteristics on a vibration damping control characteristic (transient response characteristic) as described later. A model of FIG. 12 is of a case where a static characteristic of disk displacement with respect to a current has a dead zone, where Characteristic A is of a dead zone $\Delta I_1 = 0$, Characteristic B is of $\Delta I_1 = 0.0075$ A, and Characteristic C is of $\Delta I_1 = 0.015$ A.
A model of FIG. 13 is of a case where a static characteristic of disk displacement with respect to a current has non-linearity, in which curves convex downward are Characteristic B and Characteristic C with respect to Characteristic A that is linear.
A model of FIG. 14 illustrates three cases in which a current value when maximum displacement is reached varies in a static characteristic of disk displacement with respect to a current. Characteristic A is of a case of variation $\Delta I_2 = 0.015$ A, Characteristic B is of a case of $\Delta I_2 = 0.0075$ A, and Characteristic C is of a case of $\Delta I_2 = 0$ A.

[3] Measure for correcting non-linear characteristics and response delay of servo valve

Hereinafter, a transient response characteristic of a control pressure is obtained for the servo valve having the three representative non-linear characteristics defined in the previous section. Furthermore, a drive current waveform of the servo valve is obtained for a case where a "correction means for non-linearity/responsiveness" is applied to these servo valves in the next step. Here, the "correction means for non-linearity/responsiveness" is defined as follows. When a case where a control pressure static characteristic with respect to an input signal of the servo valve is directly proportional is an ideal output characteristic, the correction of the non-linear characteristics indicates correction of separation with respect to the ideal output characteristic. The correction of responsiveness indicates correction of a delay of a control pressure dynamic characteristic with respect to a target FF signal.
The correction means for non-linearity/responsiveness is a technique such as pressure feedback described later or iterative learning control.

[3-1] Elimination of dead zone

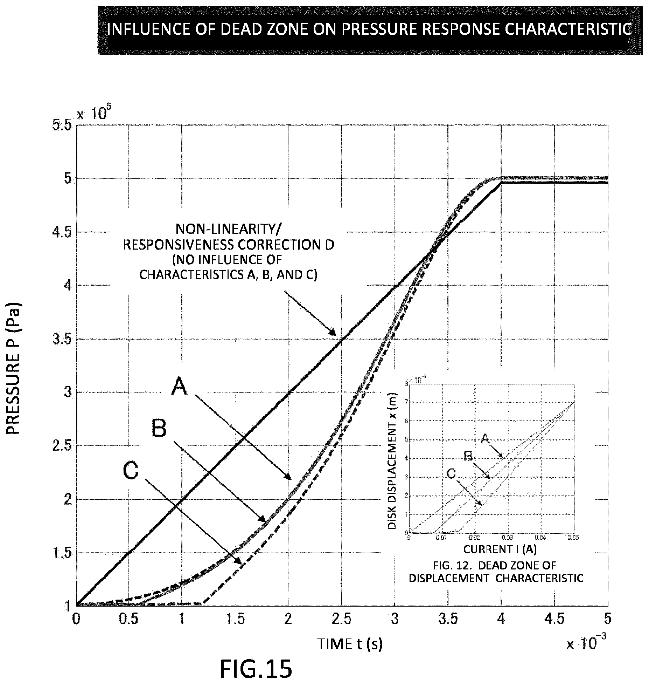

FIG. 15 illustrates a transient response characteristic of an air chamber pressure in a case where a flapper displacement characteristic of the servo valve has a dead zone. Characteristic curves A, B, and C of the analysis result correspond to Dead zone characteristics A, B, and C of the displacement assumed in FIG. 12.
Characteristic D in the figure indicates a transient response characteristic in a case where the correction means for non-linearity/responsiveness is performed, and substantially coincides with the target feedforward signal (FF signal). When the correction means is performed, it is possible to obtain a transient response characteristic asymptotically approaching the target FF signal without being affected by Dead zone characteristics A, B, and C. This point similarly applies to the embodiments described later.

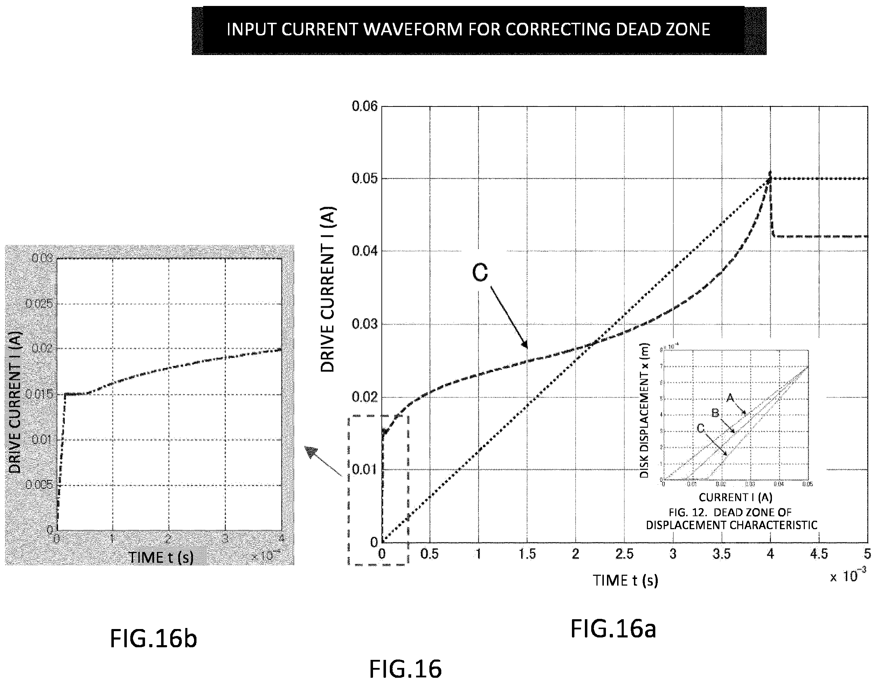

FIG. 16a illustrates a drive current of the servo valve with respect to time, in a case where Dead zone characteristic C is selected as a representative and the correction means for non-linearity/responsiveness is performed.

FIG. 16b is an enlarged view of a chain line portion in FIG. 16a. As can be seen from the graph of the enlarged view of the chain line portion, an influence of the dead zone (dead time element) can be eliminated by driving the servo valve with a steeply rising current immediately after a start of the vibration damping control. According to this knowledge, it is possible to obtain a transient response characteristic asymptotically approaching a target FF signal regardless of magnitude of the dead zone of the flapper displacement.

In summary, in the servo valve whose output characteristic such as a flapper displacement or a pressure with respect to an input current I has a dead zone width $\Delta I_1$ in which a state where an output does not increase is maintained in the range of $0 \leq I \leq I_1$, a best response waveform avoiding the influence of the dead zone can be achieved by driving the servo valve with a pulse input waveform for obtaining the input signal $I = I_1$ at time $t \approx 0$ that is when the vibration damping control is started. In the case of the present embodiment, even a valve having a dead zone of $\Delta I_1 = 1.5$ mA in the graph of the displacement characteristic (FIG. 12) can be improved to the waveform of D of FIG. 15 without "dead time element", by driving with Pulse input waveform C illustrated in FIG. 16a. Here, the dead zone width $\Delta I_1$ indicates magnitude of the signal value range $0 \leq I \leq I_1$.

[3-2] Correction of non-linearity

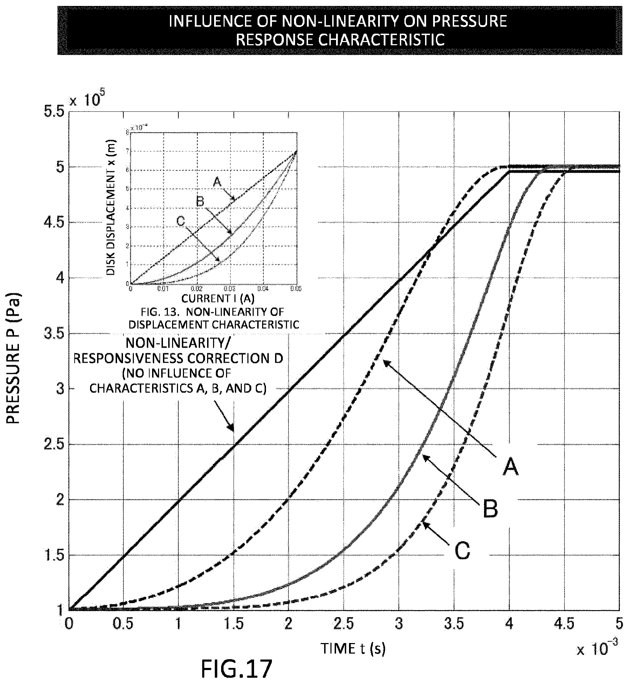

FIG. 17 illustrates a transient response characteristic of an air chamber pressure obtained in a case where the flapper displacement characteristic of the servo valve has non-linearity. Characteristic curves A, B, and C of the analysis result correspond to Characteristics A, B, and C having non-linearity of the displacement assumed in FIG. 13. Characteristic D in the figure indicates a transient response characteristic in a case where the correction means for the non-linear characteristic is performed, and substantially coincides with the target feedforward signal (FF signal). This point is similar to the embodiment in which the dead zone is corrected described above.

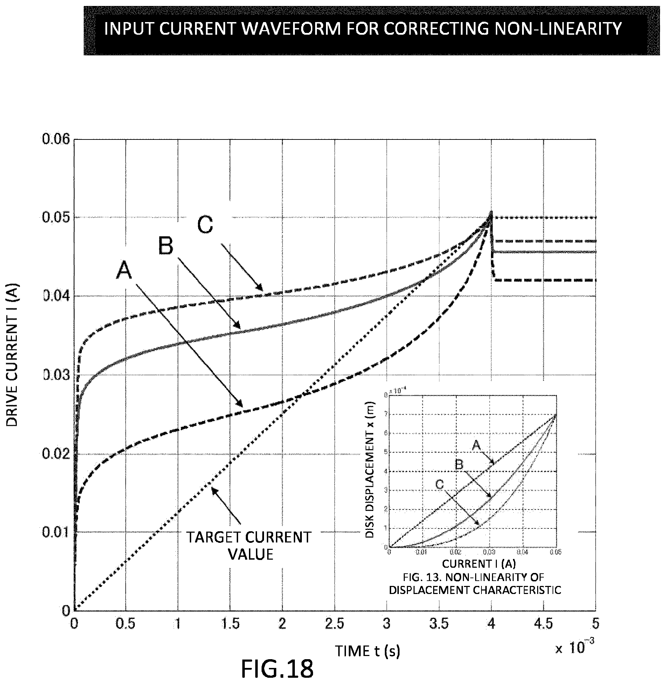

FIG. 18 illustrates a drive current of the servo valve with respect to time, in a case where the correction means for non-linearity/responsiveness is performed on the servo valve having Non-linearity A, B, and C of a flapper displacement. In a case where A in which a displacement output characteristic is a straight line is set as a reference characteristic, an influence of non-linearity can be avoided by driving the servo valve with a current corresponding to magnitude of a deviation with respect to Reference characteristic A. According to this knowledge, it is possible to obtain a transient response characteristic asymptotically approaching the target FF signal regardless of the presence or absence of non-linearity of the flapper displacement.

In summary, when a reference characteristic is of a case where an output characteristic such as a flapper displacement or a pressure with respect to an input signal of the servo valve is assumed to be a straight line, and an output value of the reference characteristic with an input signal value $I = I_0$ is $X = X_0$ and an output value when the output characteristic has non-linearity is $Y = Y_0$, it suffices that the servo valve is driven with an input waveform corresponding to magnitude of a difference $\varepsilon = Y_0 - X_0$ from the reference characteristic.

[3-3] Correction of current value variation at time of reaching maximum pressure

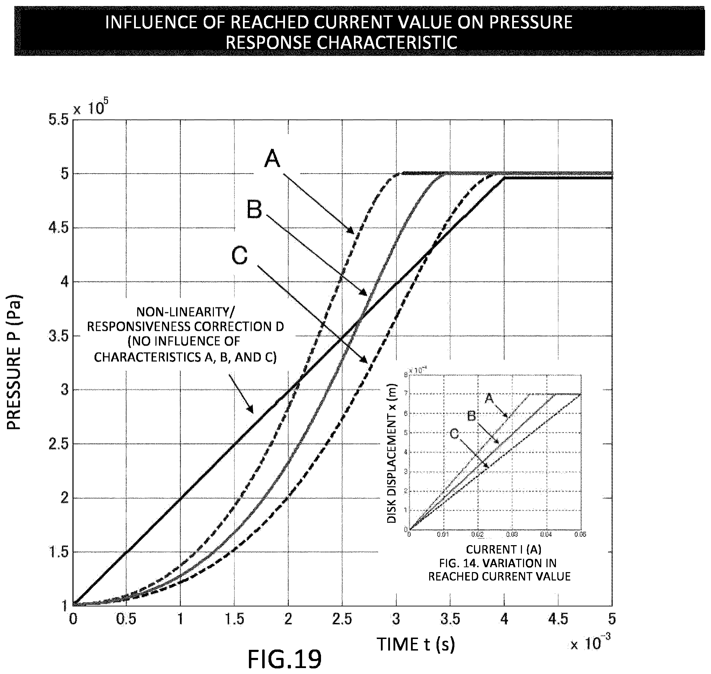

FIG. 19 illustrates a transient response characteristic of an air chamber pressure obtained in a case where a servo valve flapper displacement characteristic has a current value variation at a time of reaching maximum displacement. Characteristic curves A, B, and C of the analysis result correspond to Characteristics A, B, and C having a current value variation at a time of reaching the maximum displacement assumed in FIG. 14. Characteristic D in the figure indicates a transient response characteristic in a case where the correction means for the non-linear characteristic is performed, and substantially coincides with the target feedforward signal (FF signal). This point is similar to the embodiments described above.

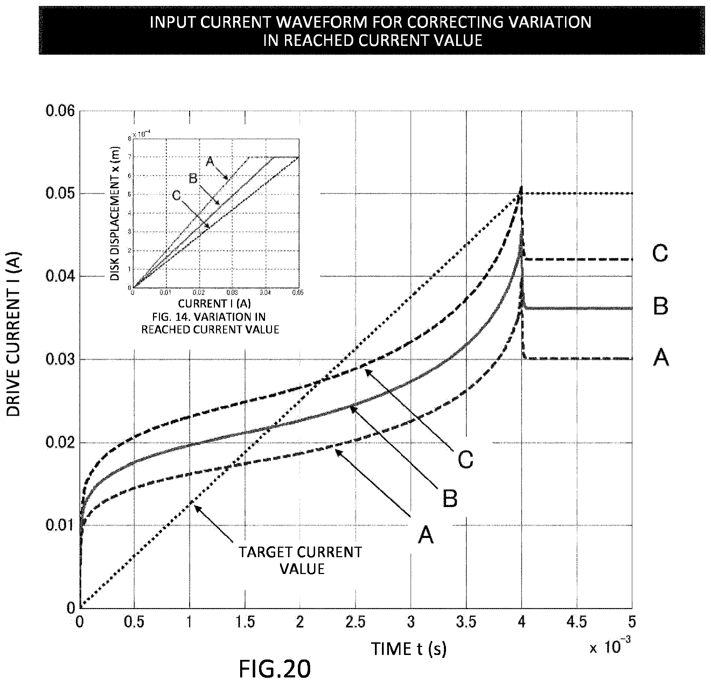

FIG. 20 illustrates a drive current of the servo valve with respect to time, in a case where the correction means for non-linearity/responsiveness is performed on the servo valve in which the flapper displacement characteristic has a current value variation when the maximum displacement is reached.

In summary, in an output characteristic such as a flapper displacement or a pressure with respect to an input signal of the servo valve, in a case where an input signal value $I = I_2$ reaching a target output value has a variation width $\Delta I_2$, magnitude of a drive input waveform and a final value of a drive input may simply be determined according to magnitude of the variation width $\Delta I_2$. That is, in a range of $0 \leq I \leq I_{max}$, the drive waveform and the final value of the drive input may simply be made smaller as a variation width $\Delta I_2$ is larger, as compared with a case of the width $\Delta I_2 = 0$.

Here, the variation width $\Delta I_2$ of the reached input signal value indicates magnitude ($\Delta I_2 = I_{max} - I_2$) of a signal value range $I_2 \leq I \leq I_{max}$. According to this knowledge, it is possible to obtain a transient response characteristic asymptotically approaching the target FF signal regardless of magnitude of the current value variation at the time of reaching.

[Supplement]

In the present embodiment, pressure feedback to be described later is applied as the "correction means for non-linearity/responsiveness". As a result, as shown in the cases of [3-1] to [3-3], the drive input waveform of the servo valve for correcting the non-linear characteristic and response delay of the servo valve can be obtained. In the present embodiment, the deviation ε between the target command signal and the output is set as the drive input waveform of the servo valve subjected only to proportional amplification. In a segment in which a target command signal rises in a ramp shape, it is sufficient to perform only proportional amplification for pressure feedback in order to obtain knowledge about the drive input waveform. Therefore, in each graph of an input current waveform for correcting non-linearity, it is sufficient to focus on a segment of $0 \le t \le 4$ ms.

[Fourth embodiment]

Pneumatic servo with generated force feedback

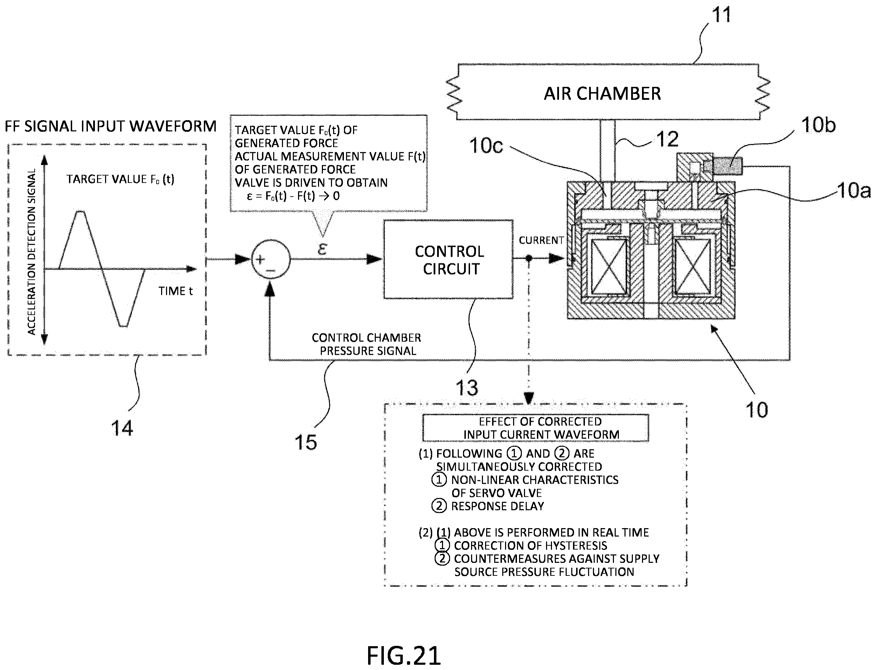

FIG. 21 is a model diagram of a pneumatic servo system provided with FF vibration damping control with generated force feedback according to a fourth embodiment of the present invention.

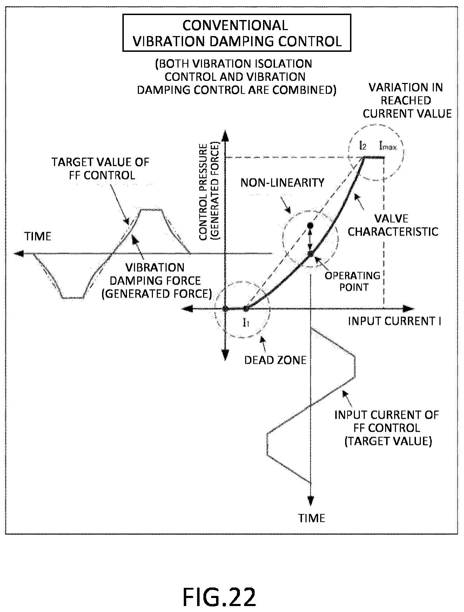

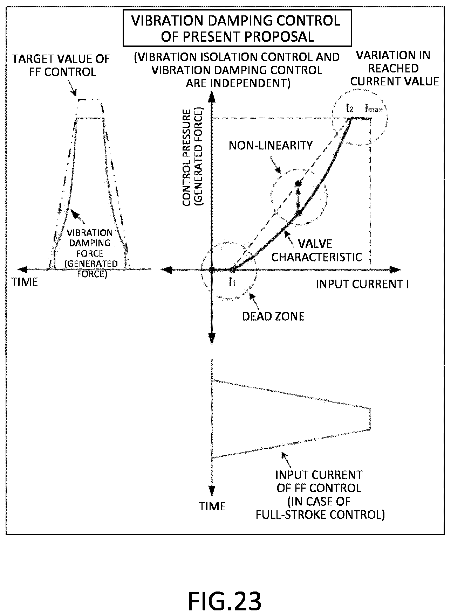

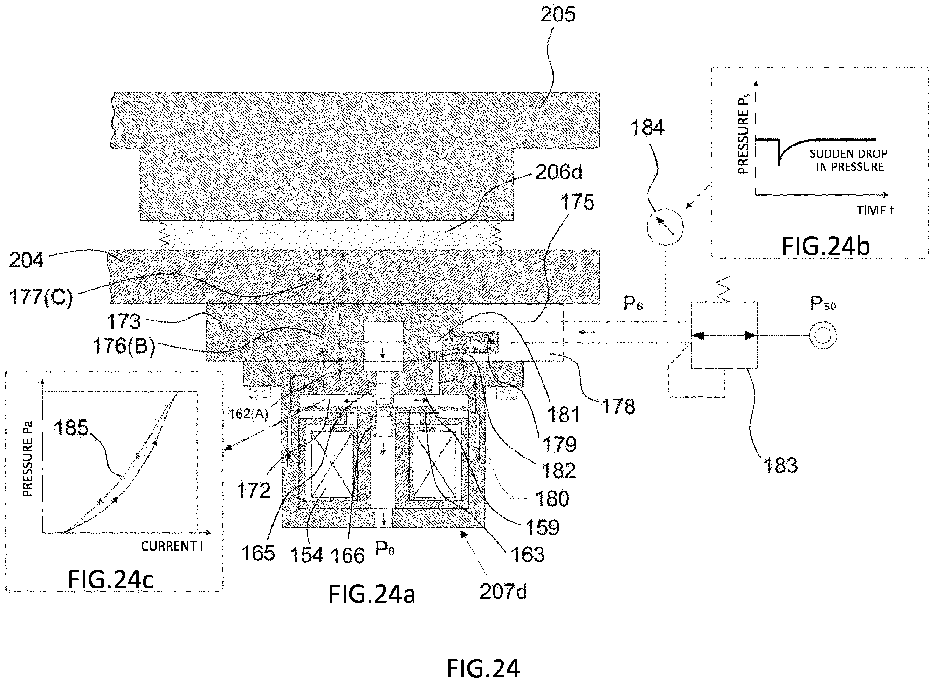

FIG. 22 is a model diagram illustrating a static characteristic of a pneumatic actuator generated force with respect to an input current, and illustrates a case of conventional vibration damping control that is used for both vibration isolation control and vibration damping control. FIG. 23 is a model diagram illustrating a static characteristic of a pneumatic actuator generated force with respect to an input current, and illustrates a case of vibration damping control of the present invention in which vibration isolation control and vibration damping control are configured independently. FIG. 24 is a front cross-sectional view of a servo valve used in the present embodiment.

[1] Pneumatic servo system with generated force feedback

[1-1] Configuration of pressure feedback

In FIG. 21, reference numeral 10 denotes a main body of a servo valve, reference numeral 10a denotes a control chamber inside the valve, reference numeral 10b denotes a pressure sensor (pressure detection means) that detects a pressure in the control chamber, and reference numeral 10c denotes a control port. In the present embodiment, an air chamber pressure is actually measured by the pressure sensor in order to detect a generated force. With a piston area S of the air chamber, an actual measurement value $F(t) (= P \times S)$ corresponding to the generated force is obtained on the basis of an air chamber pressure P. Reference numeral 11 denotes an air chamber of a pneumatic actuator, reference numeral 12 denotes a pipe connecting the air chamber 11 and the control port 10c, and reference numeral 13 denotes a PID control circuit that drives the servo valve 10. Reference numeral 14 denotes a vibration damping control signal for offsetting an impact load accompanying stage movement, which is a feedforward signal (FF signal) $F_0(t)$ in the present embodiment. That is, in order to prevent vibration application to the vibration isolator caused when the stage repeats acceleration and deceleration on the vibration isolator, a force (counter force) having the same magnitude as the vibration force and having an opposite phase is set as a target value of the input waveform. The FF signal $F_0(t)$ is normally obtained in advance on the basis of a command signal to a stage drive mechanism, an actual measurement value of an acceleration sensor provided in each control shaft, or the like. However, since extremely high responsiveness is obtained in the pneumatic actuator subjected to the pressure feedback according to the present proposal, a case is also included in which the FF signal $F_0(t)$ is not data prepared in advance but is a vibration force that is measured in real time. Reference numeral 15 denotes a feedback signal $F(t)$ from the pressure sensor 10b. Therefore, by configuring the pressure feedback (hereinafter referred to as pressure FB), the servo valve 10 is driven such that a generated force of the pneumatic actuator (actual measurement value by the pressure sensor) asymptotically approaches a target value, that is, a deviation ε between the target value and the actual measurement value is reduced, that is, $\varepsilon = F_0(t) - F(t) \to 0$ is obtained in the present embodiment.

[1-2] Effect of pressure FB

The effects obtained by the pneumatic servo system of the present embodiment will be summarized as follows. That is, considering the static characteristic and the dynamic characteristic of the servo valve and the pneumatic actuator, which are the control targets of the pneumatic servo, the following three necessary conditions for achieving high acceleration and vibration damping control can be "achieved simultaneously".

(i) Correction of non-linear characteristics
(ii) Correction of response delay

(iii) (i) and (ii) can be performed in real time

FIG. 22 is a model diagram illustrating a static characteristic of the conventional pneumatic servo valve in which one actuator and one servo valve are used for both vibration isolation control and vibration damping control. In the case of the conventional pneumatic servo valve, the vibration isolation control is performed such that the system maintains an equilibrium state at an operating point of the valve input current $I = I_0$. When a maximum input value is $I_{max}$, the operating point $I_0$ is often set to $I_0 \approx I_{max}/2$. During the vibration damping control, an input waveform of the FF control is applied with the operating point $I = I_0$ as a reference. Normally, a maximum value of the input waveform is set within a range in which linearity is maintained.

FIG. 23 is a model diagram illustrating a static characteristic of the vibration damping servo valve of the present proposal in which vibration isolation control and vibration damping control are independently configured. For an input current waveform of the FF control, a full-stroke control of $0 \leq I \leq I_{max}$ is assumed. In this case, an output waveform of a generated force (without pressure FB) directly receives the non-linear characteristics of the servo valve described above, that is, "dead zone characteristic", "non-linearity", and "variation in reached input signal value". However, as illustrated in the figure, the output waveform becomes a waveform asymptotically approaching the target value of the FF control by performing the pressure FB. From the comparison of the graphs of FIGS. 22 and 23, the effects obtained by the pneumatic servo system of the present embodiment will be summarized as follows.

(1) FF control that cancels impact force at high speed and with high accuracy can be performed

As described above, this is an effect of the pressure FB that can simultaneously achieve (i) correction of non-linear characteristic and (ii) correction of response delay.

In order to improve responsiveness, in the conventional pneumatic servo, an input signal of the FF control has been obtained on the basis of system identification of an actuator output with respect to a valve input. That is, the valve is driven after a delay element between the input and the output is canceled using an approximate inverse transfer function $G^{-1}$ (s) of an experimentally obtained transfer function G (s). The inverse transfer function $G^{-1}$ (s) can be theoretically obtained by linear approximation of a transfer characteristic in the vicinity of the operating point. That is, the inverse transfer function $G^{-1}$ (s) is obtained on the assumption that the transfer characteristic of the control target is linear (an output with respect to an input is proportional). Therefore, responsiveness can be improved, but non-linear characteristic cannot be corrected.

As described above with reference to FIG. 23, when the input waveform of the servo valve is subjected to full-stroke drive, the non-linear characteristic of the servo valve greatly affects accuracy of the vibration damping force (error of the generated force with respect to the target value). In the pneumatic servo of the present invention in which pressure feedback is performed, the servo valve 10 is driven to obtain the deviation $\varepsilon = F_0$ (t) - F (t) $\rightarrow$ 0 between the actual measurement value and the target value. As a result, even in the case of full-stroke drive, high-speed and highly accurate vibration damping control can be achieved without being affected by the non-linear characteristic of the servo valve. That is, the present invention can improve both the static characteristic (non-linear characteristic) and the dynamic characteristic (responsiveness) of the control target.

Further, the effect of the present invention is not only the improvement of the characteristics of the servo valve alone. Including a volume and fluid resistance of the pipe 12 connecting the control port 10c of the valve and the pneumatic actuator 11, a delay element of an air circuit such as a volume of the air chamber 11 of the pneumatic actuator 11, a mechanical delay element of a mechanism portion (a flapper mass m and a support portion rigidity K) of the servo valve, and an electrical delay element due to inductance and resistance of the coil, an effect of improving responsiveness of transfer characteristics of these is obtained. In addition, high-speed and high-accuracy FF control can be achieved without being affected by variations in valve characteristics between products, changes in production conditions such as supply pressure setting, and the like.

(2) Large generated force is obtained

As is apparent from comparison between the graphs of FIGS. 22 and 23, in the case of the present proposal in which the vibration isolation control and the vibration damping control are configured independently, the input current waveform of the FF control can be subjected to full-stroke control of $0 \leq I \leq I_{max}$. As compared to the case of the conventional vibration damping control used for both the vibration isolation control and the vibration damping control, the generated force can be obtained twice or more since a place having a dead zone characteristic and a variation in the reached input signal value can be linearized.

(3) Unpredictable disturbance can be handled

This effect is also an effect of the pressure FB for correcting the non-linear characteristic and response delay in real time, similarly to (2). As illustrated in FIG. 24 described later, it has been found that, in a pressure reduction valve (183 in FIG. 24a) installed on an upstream side of the intake hole of the servo valve, a pressure on the upstream side of the intake hole can be maintained at a constant pressure when a large flow rate is instantaneously caused to flow during the vibration damping control. For steep fluctuations in a supply source pressure (see FIG. 24b), pressure feedback exerts a tremendous effect. A timing of supply source pressure fluctuation occurrence and pressure fluctuation level magnitude are related to an operation of the entire pneumatic system of the active vibration isolator driven in multiple axes, and accurate prediction is difficult. By performing the pressure FB in real time at a time of mass production, the control pressure (generated force) at the time of vibration damping control can be always maintained at an accurate target value without being affected by the supply source pressure fluctuation. The effect of the real-time pressure FB on unpredictable disturbance cannot be obtained by other techniques (iterative learning control and the like) of the correction means for non-linearity/responsiveness.

(4) Influence of hysteresis of servo valve can be avoided

This effect is obtained by incorporating a transfer characteristic of the servo valve as a "closed-loop inner element" of the feedback control. Characteristics of a magnetic material included in the servo valve can be expressed by a "hysteresis curve" when a magnetic field is alternately applied including in an opposite direction (see FIG. 24c). As is well known, the hysteresis curve (185 in FIG. 24c) is a characteristic of a magnetic flux density B of a magnetic body with respect to an external magnetic field H. In a case of the servo valve, a hysteresis loop is formed by displacement of the flapper, a speed, and a pressure characteristic with respect to an input current. A relationship between the magnetic flux density B (generated force) of the magnetic body and the external magnetic field H (input current) also depends on a past history of the magnetic body, so that the relationship is not uniformly determined.

A waveform of the generated force (pressure) with respect to the valve input waveform of the vibration damping control has an error due to hysteresis. In a case of the vibration isolation control, since the servo valve serves as the "closed-loop inner element" of the feedback control, the influence of the hysteresis on the vibration isolation performance is reduced. However, in the conventional vibration damping control, this effect cannot be obtained since open-loop control is adopted. However, in the vibration damping control in the present embodiment, similarly to the vibration isolation control, since the servo valve serves as the "closed-loop inner element" of the feedback control, the influence of the hysteresis on the vibration damping performance can be avoided.

Furthermore, the present invention utilizes a feature of the separated structure of vibration damping and vibration isolation in which the vibration isolation performance is not affected even when the pressure FB is performed. As will be described later, in the conventional method in which one actuator is used for both vibration damping and vibration isolation, the pressure FB control and the vibration isolation control by the pressure sensor cannot coexist. In the case of the present invention in which the vibration damping control and the vibration isolation control can coexist without affecting each other, the influence of the hysteresis of the servo valve on the vibration damping performance is greatly reduced.

(5) Control adjustment can be simplified

In an active vibration isolator having eight control axes, it takes a lot of effort involving trial and error to obtain an FF signal of each control axis by system identification. In the method of the present embodiment, a worker does not need a special skill, and high-precision FF control can be easily achieved.

[1-3] Grounds for being able to apply pressure FB to separation-type pneumatic servo

Hereinafter, grounds for application of the pressure FB to the vibration damping control of the present embodiment will be described. As described above, in the present invention configured by separating vibration isolation and vibration damping, a driving principle and a control method that can achieve the best performance can be individually selected for each control element used for vibration isolation and vibration damping. An origin of the idea of the present invention is that this control element is not limited to the actuator and the servo valve, and the control method and the sensor may be similar. Hereinafter, the reason why the FB has been unable to be applied to the integrated pneumatic servo and the grounds for being able to apply the pressure FB to the separation-type pneumatic servo will be summarized.

(1) Reason why combined use of pressure sensor and acceleration sensor has been difficult

In a case of the conventional pneumatic servo system in which one pneumatic actuator is used for both the vibration damping function and the vibration isolation function, it is expected that combined use of both the pressure sensor for the vibration damping control and the acceleration sensor for the vibration isolation control has been difficult. This is because, when both sensors are used in combination, the vibration isolation performance is dominated by the pressure sensor having a poor resolution.

In a case where the pressure FB control by the pressure sensor is performed only at the time of vibration damping control and the pressure FB control is not performed at the time of vibration isolation, disturbance is expected to occur in the system at the time of switching of "vibration damping → vibration isolation". This is because a support rigidity of the pneumatic actuator is different between a state where the pressure FB control is performed and a state where the pressure FB control is not performed, and thus an equilibrium state of a load of individual axes greatly changes when the pressure FB control is released.

In the case of the pneumatic servo of the present proposal in which the actuators and the servo valves for vibration isolation and vibration damping are separated and independent, the pressure FB control is performed only during the vibration damping control. When the vibration damping control is finished, the air chamber of the vibration damping actuator is released to atmosphere. During the vibration isolation control, the presence of the pressure sensor does not affect the vibration isolation control.

As described later, the knowledge that "In vibration damping control, a generated force of the pneumatic actuator driven by the servo valve is determined only by a drive input current waveform I (t) of the servo valve. In the next step, without performing the pressure FB control (non-linearity/responsiveness correction means), the same generated force can be obtained by driving the servo valve with the same drive input current waveform" • • • is newly found by the present invention.

(2) Comparison of detectable generated force between vibration isolation control sensor and pressure sensor

A capacitive servo-type acceleration sensor is used for vibration isolation control of the active vibration isolator. Based on the knowledge about the capacitive servo-type acceleration sensor, a resolution and a detectable generated force of the sensor required for vibration isolation control are estimated. A case is assumed in which vibration is applied to the sensor at a frequency $f = 1$ Hz and acceleration $\alpha = 0.1$ mGal ($10^{-6}$ m/s$^2$). Numerical values of the frequency and the acceleration may be considered as a limit level at which the vibration isolation control can be performed in the active vibration isolator in the current state. When a mass m of a movable-side electrode of the sensor is 1.2 g, an inertial force applied to the movable-side electrode is $f = m\alpha = 1.25 \times 10^{-9}$ N. Magnitude of the inertial force corresponds to gravity applied to 1/10000 of a mass of one hair.

As is well known, the servo-type acceleration sensor is controlled by an actuator such that an electrostatic capacitance (inter-electrode gap) between a movable-side electrode and a fixed side electrode is maintained at a constant value. The actuator includes a permanent magnet and a force coil, and can detect acceleration (inertial force) applied to the movable-side electrode on the basis of a current flowing through the force coil. In a case of a current $I = 0.2$ nA flowing through the force coil under the conditions, a force generated in the movable-side electrode by multiplying this current value by a force constant of the force coil is equal to the value described above.

Whereas, a resolution of a pressure sensor considered to be applicable to the active vibration isolator in terms of cost is about 0.1 to 1.0% of a maximum measured pressure. In the embodiment of the present invention, when an outer diameter of the vibration damping actuator is $\Phi D_2 = 83.1$ mm and a maximum supply pressure is $P_{max} = 0.5$ MPa, a maximum generated force of the actuator is $F = 2000$ N. Based on the resolution of the pressure sensor, a generated force detectable by the pressure sensor is $F_{min} = 2.0$ to 20 N. From the comparison of the detectable generated forces between the two, it can be seen that the resolution of the servo-type acceleration sensor required for vibration isolation control and a detectable minimum generated force have an incommensurable difference as compared to that of the pressure sensor.

In this regard, a target of impact force cancellation accuracy required for the high acceleration and vibration damping control is shown in the following cases (i) and (ii).

(i) In a case where the vibration damping control is not performed and only the vibration isolation control is performed, the stage moves $X = 2$ mm due to the impact load. Target of vibration damping control: $X = 2 \rightarrow 0.05$ mm or less is set. (Offset rate: 97.5%)

(ii) Target of vibration damping control: 1 Gal or less is set within 100 ms after stopping of the stage.

From the above cases (i) and (ii), impact force cancellation accuracy required for the vibration damping control may be considered to be about 2 to 3% at the highest level.

(3) Conventional proposal regarding pressure feedback

Patent Literature 6 discloses a method of applying pressure feedback to a vibration isolation device supported by gas pressure. In the literature, an internal pressure of a pneumatic actuator is detected by a pressure sensor, and controlled so as to be maintained at a constant pressure. A rigidity and an eigenvalue of the actuator are greatly reduced, for example, to remove a low-frequency component of 2 Hz or less that causes an image shift of an exposure apparatus. A difference between the proposal above and the present invention is summarized as follows.

Patent Literature 6 uses pressure control in order to improve vibration isolation performance at low frequencies, whereas the proposal of the present invention is a method of performing pressure control only in vibration damping control. Therefore, pressure control is not performed in the vibration isolation control, and the presence of the pressure sensor does not affect the vibration isolation control. As described above, the present invention is based on the knowledge that a pressure sensor has a poor resolution and is difficult to be applied to the vibration control.

[2] Structure of servo valve

Since the servo valve basic structure applied to the present embodiment illustrated in FIG. 24a is similar to that applied to the first embodiment, a detailed description thereof is omitted except for a vicinity diagram of a pressure sensor arrangement. In the present embodiment, the pressure sensor is attached to the valve body so as to directly detect a pressure in a control chamber 172 of the servo valve. This figure is a view in which a void portion is formed at one place of a valve fastening member 173 that fastens the servo valve main body such that the pressure sensor can be attached to the valve fastening member.

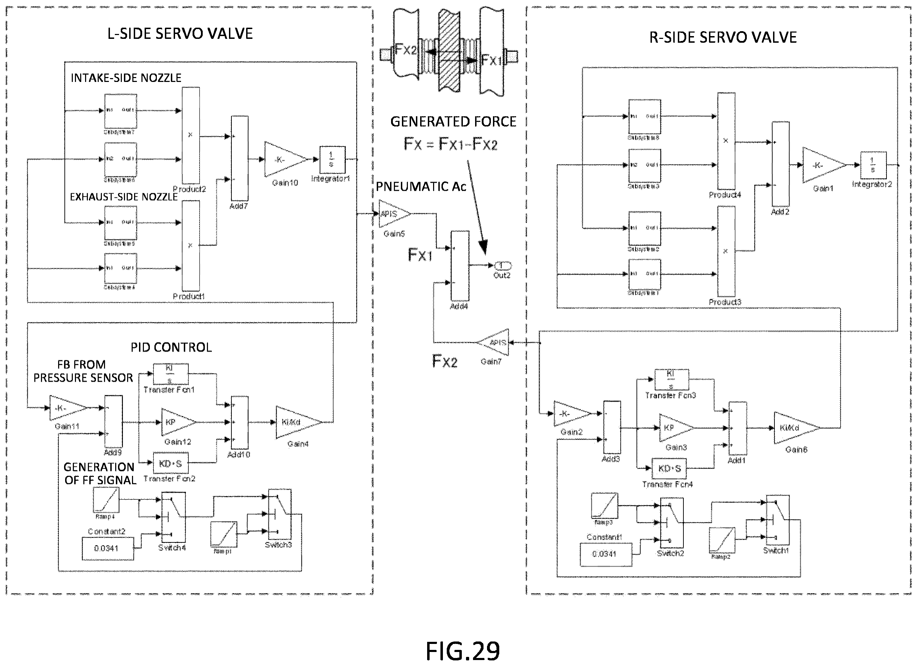

In an air flow path including the control chamber 172 of the valve, the pipe (162, 176,177 in FIG. 2a) connecting the control chamber and the actuator, and the air chamber of the actuator, a large flow rate of air flows into each air flow path during acceleration/deceleration. As shown in the analysis result (FIG. 29a) described later, an air flow rate flowing through a control-side flow path 162 has been Q = 300 to 400 L/min. When a static pressure of fluid is P (Pa) and a density is $\rho$ (Kg/m$^3$), from Bernoulli's principle

$$( P + \rho V^2 / 2 = const )$$

in which a sum of a static pressure and a dynamic pressure is constant, a speed V is large and a dynamic pressure (a second term on the left part) is large at a place where a flow path area is small. Since the generated force of the actuator is determined by magnitude of the static pressure, it is preferable to install a pressure sensor at a place where the dynamic pressure is small in order to accurately detect the generated force. Therefore, in the present embodiment, the pressure sensor is installed at a place that is to be a stagnant space that is less susceptible to dynamic pressure. Reference numeral 178 denotes a void portion formed in the valve fastening member 173, reference numeral 179 denotes a pressure sensor, reference numeral 180 denotes a flow passage communicating with the control chamber 172 formed in an intake-side housing 159, reference numeral 181 denotes a void portion, and reference numeral 182 denotes an orifice provided between the void portion and a flow passage 180. Fluid resistance R caused by the orifice and a volume C of the void portion 181 form a low-pass filter with a pneumatic circuit that cuts off a high-frequency component of air pressure fluctuation. A place where the pressure sensor is installed may be a position at a maximum distance from an opening of a pipe installed in the actuator air chamber.

In the present embodiment, the pressure sensor is used as a detection means for a generated force in order to perform generated force feedback. Instead of this pressure sensor, a load cell or the like attached between an upper end surface of the pneumatic actuator and an opposed surface thereof may be used. Alternatively, a strain gauge type, a piezoelectric type, a capacitance type, an optical type, or the like may be applied as a force sensor.

An equivalent mass m of one pneumatic actuator and an equivalent spring constant K in a movable direction of the pneumatic actuator are assumed. Assuming acceleration $\alpha$ detected by an acceleration sensor installed on the output side (for example, a surface-plate-side inner frame portion 205) of the pneumatic actuator and a displacement x detected by a displacement sensor installed on an output side, a generated force of the pneumatic actuator may be obtained on the basis of an inertial force m$\alpha$ and a restoring force Kx of the spring.

Alternatively, in a case of a nozzle flapper type servo valve illustrated in FIG. 24, a pressure in the control chamber 172 is determined by a position of a flapper 163 arranged to be opposed to the intake-side nozzle 165 and the exhaust-side nozzle. A control chamber pressure (generated force) can be obtained by detecting displacement of the flapper. In a case of using the structure in the figure to detect the flapper displacement, for example, a displacement sensor may simply be arranged (not illustrated) at a position of the flow passage 182 so as to oppose the flapper. The present invention can be applied with any means as long as information regarding the generated force can be obtained.

Reference numeral 183 denotes the pressure reduction valve (regulator) installed on the air pressure supply source side, and reference numeral 184 denotes a pressure gauge. As described above, it has been found that, in the pressure reduction valve 183 installed on the upstream side of the intake hole of the servo valve, a pressure on the upstream side of the intake hole cannot be maintained at a constant pressure when a large flow rate is instantaneously caused to flow during the vibration damping control. In the present embodiment, rise time of the vibration damping control is on the order of several milliseconds, and the pressure reduction valve configured by a mechanical element cannot follow the rise time. In the figure, a sudden drop of a pressure Ps with respect to time is illustrated in an image diagram. The pressure feedback for detecting the pressure in real time exerts a great effect on steep fluctuation of the supply source pressure. That is, when the supply pressure Ps decreases, a valve opening degree on the intake side increases so as to compensate for the decrease in intake flow rate, and the control pressure is controlled so as to be maintained at the target value.

[3] Theoretical analysis of vibration damping control

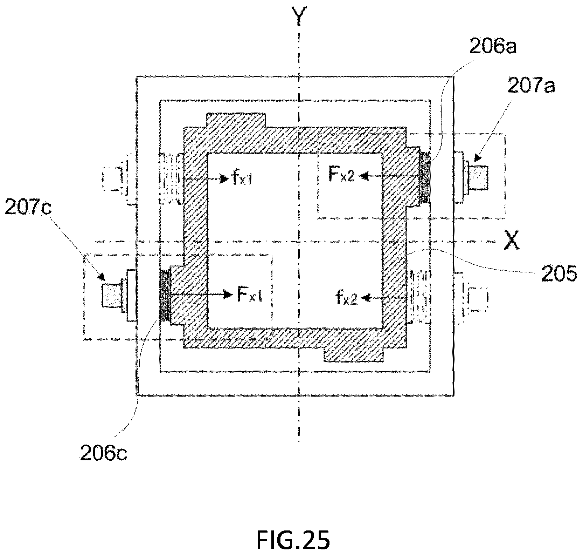

FIG. 25 is a diagram obtained by extracting only the pneumatic actuators 206a and 206c and the servo valves 207a and 207c in FIG. 1b. In the figure, reference numeral $F_{X1}$ denotes a force generated when the L-side actuator 206c is driven, and reference numeral $F_{X2}$ denotes a force generated when the R-side actuator 206a is driven. A sum of the two forces $F = F_{X1} - F_{X2}$ is a force in the X-axis direction applied to the surface plate 201 directly connected to the surface-plate-side inner frame portion 205.

(1) Analysis result

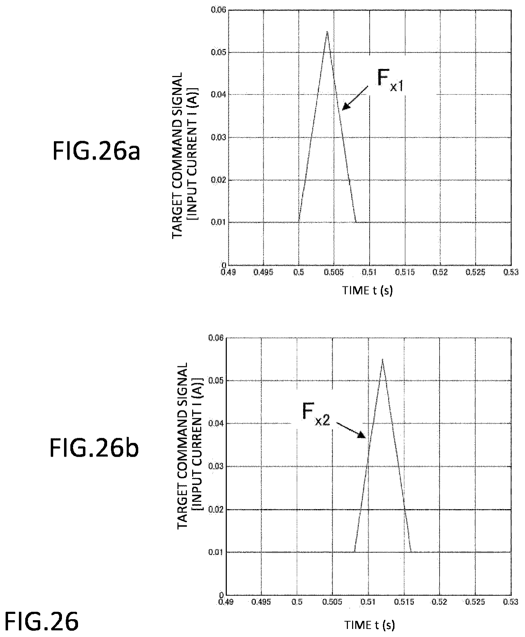

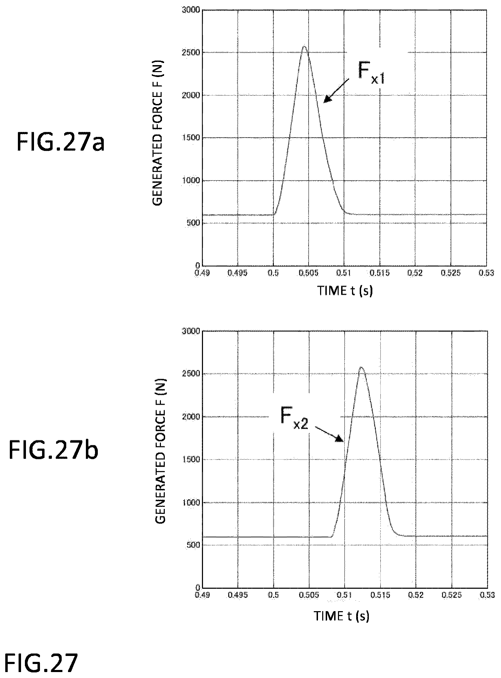

FIG. 26 illustrates target values of the generated forces of the respective actuators illustrated in FIG. 25, in which FIG. 26a illustrates a target value of the L-side actuator 206c, and FIG. 26b illustrates a target value of the R-side actuator 206a. A generated force of the R-side actuator 206a is set to be delayed in phase by 180 deg as compared with the L-side actuator 206c. FIGS. 27a and 27b are analysis results corresponding to actual measurement values of generated forces obtained from the theoretical analysis described above.

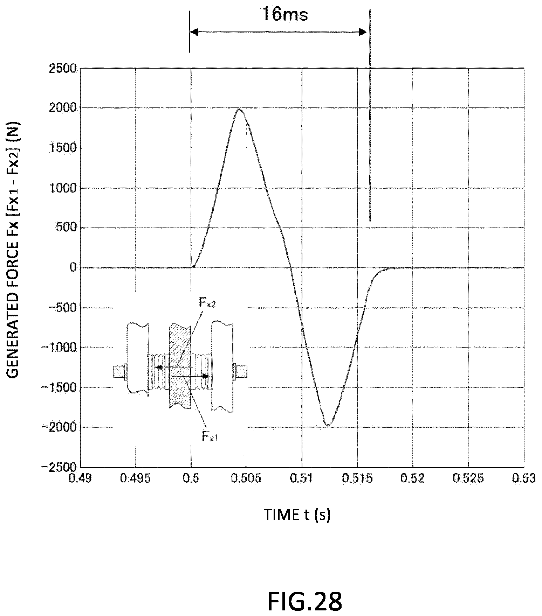

FIG. 28 illustrates an analysis result of obtaining the sum $F = F_{X1} - F_{X2}$ of the two generated forces (FIG. 27a, 27b). In the graph of FIG. 28, it can be seen that a generated force that cancels a reaction force at a time of acceleration +2000 N at t = 4 ms from a start and a reaction force at a time of deceleration -2000 N at t = 12 ms can be obtained. FIG. 29 is a conceptual diagram of an analysis block diagram for obtaining the generated force. Therefore, when this combination of the servo valve and the actuator is applied to the support structure of the active vibration isolator surface plate illustrated in FIG. 1, it is possible to handle the vibration damping force of 2000 N in each of the XY axes.

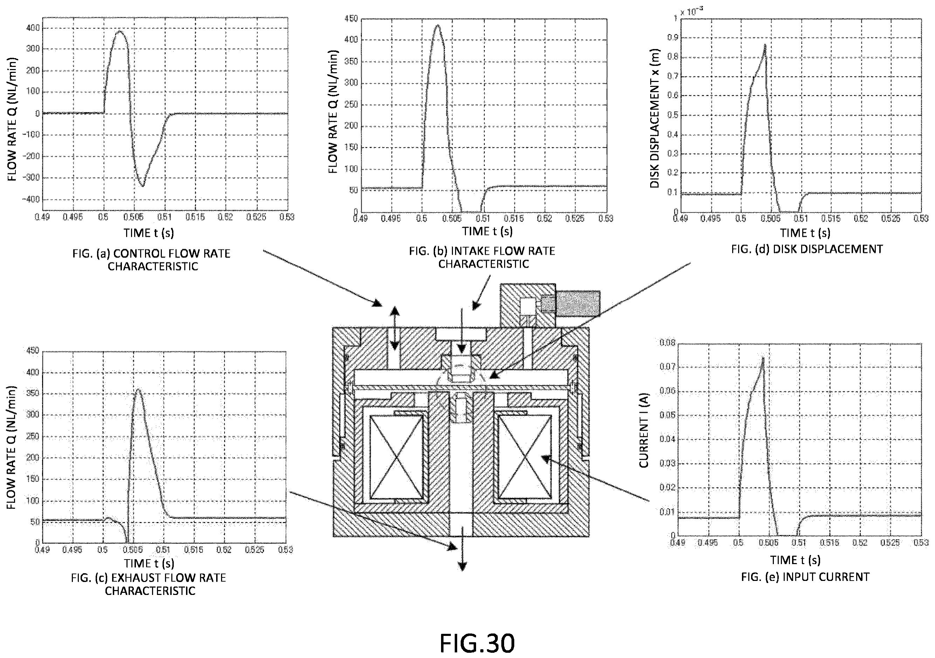

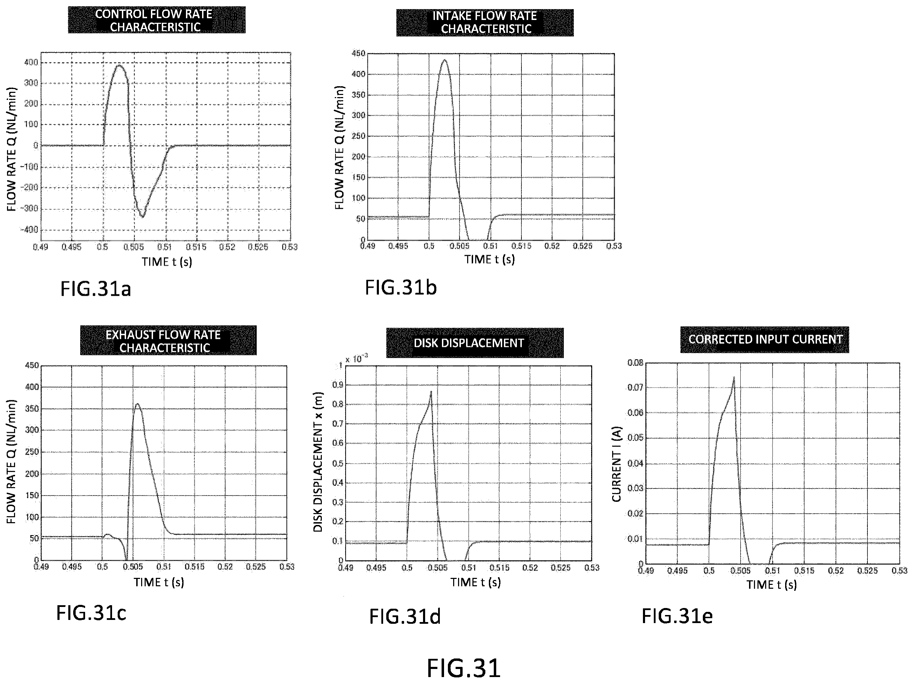

FIG. 30 illustrates an analysis result of each characteristic of the servo valve obtained under the conditions. In the figure, FIG. (a) illustrates a control flow rate characteristic, FIG. (b) illustrates an intake flow rate characteristic, FIG. (c) illustrates an exhaust flow rate characteristic, FIG. (d) illustrates a disk displacement characteristic, and FIG. (e) illustrates an input current characteristic. FIGS. 31a to 31e illustrate enlarged views of respective waveforms [FIGS. (a) to (e)] of FIG. 30.

[Fifth embodiment]

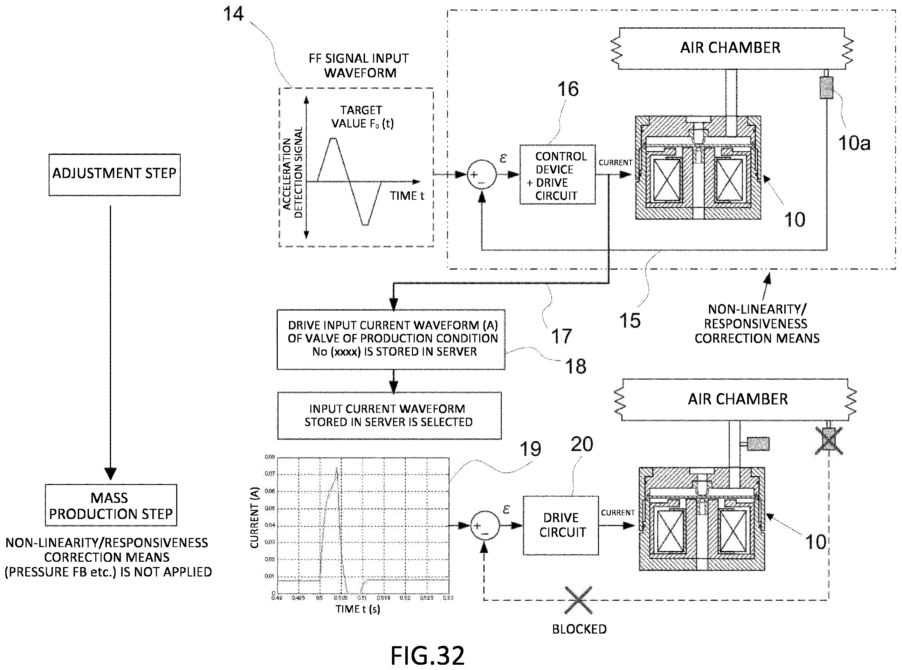

FIG. 32 illustrates a control block diagram of an adjustment step and an implementation step (mass production step) of a pneumatic servo system according to a fifth embodiment of the present invention. Pressure feedback (non-linearity/responsiveness correction means) applied in the adjustment step is not applied in the implementation step, and only an input drive signal of a servo valve obtained in the adjustment step is used. The "non-linearity/responsiveness correction means" indicated by an imaginary line in the figure is not limited to pressure feedback, but a case of using pressure feedback as the correction means will be described in the present embodiment.

The present invention focuses on a point that, in vibration damping control, a generated pressure (generated force) of a pneumatic actuator driven by a servo valve is determined only by a drive input current waveform (A) of the servo valve. That is, the role of pressure FB is to determine a profile of the drive input current waveform (A) such that the generated pressure (generated force) becomes the target input value (FF signal). Therefore, in the next step, the same pressure characteristic can be obtained by driving the servo valve with the drive input current waveform (A) without performing the pressure FB (non-linearity/responsiveness correction means). However, the present embodiment is applied to a case where an influence of hysteresis of the servo valve and supply source pressure fluctuation on target accuracy of the vibration damping control is sufficiently small and allowable even if the real-time pressure FB is not performed.

Step 1. Adjustment step

The servo valve is driven with a configuration similar to that of the pneumatic servo system described in the fourth embodiment. That is, a deviation ε between a feedforward signal 14 and a feedback signal 15 from a pressure sensor 10a passes through a control circuit (A) 16, and a servo valve 10 is driven by a current 17. That is, the servo valve is driven such that the deviation $\varepsilon = F_0(t) - F(t) \to 0$ is obtained between the target value and the actual measurement value. In the present embodiment, the control circuit (A) includes a PID control device and a valve drive circuit.

Step 2. Servo valve drive input waveform is stored

The servo valve drive input waveform 17 obtained in Step 1 is stored in a server 18 of a computer, with a production condition specified. A specified production condition number is a specification at a time of adjustment that can be reproduced under the same condition at a time of mass production, such as a product number of the servo valve, a specification of the pneumatic actuator, an intake/exhaust pipe specification, a supply source set pressure, and production takt.

Step 3. Mass production step

In the mass production step, pressure feedback is not performed, and an input current waveform 19 stored in the server or the like of the computer is selected, and the servo valve 10 is driven through a control circuit (B) 20. The control circuit (B) mainly includes only a servo valve drive circuit without the PID control device.
Instead of separately providing the control circuit (A) and the control circuit (B), the control circuit (A) and the control circuit (B) may be configured to be switchable. The control circuit (A) is a circuit necessary for applying the non-linearity/responsiveness correction means, and the control circuit (B) may only include a circuit that drives the servo valve. Examples of a means of enabling switching between the control circuit (A) and the control circuit (B) include replacement of a circuit board. Alternatively, an operation may be performed on a panel surface in consideration of workability at the time of implementation. If an input drive signal of the servo valve is made switchable again in the adjustment step by resetting a change in production takt or a change in production conditions such as a supply pressure setting, the productivity is greatly improved.

[Sixth embodiment]

In the present embodiment, a drive system is assumed including the pneumatic actuator as a first vibration damping actuator, and a second vibration damping actuator having higher responsiveness than the first vibration damping actuator and having a different operation principle. First, a case where the second vibration damping actuator is of the linear motor method will be described.

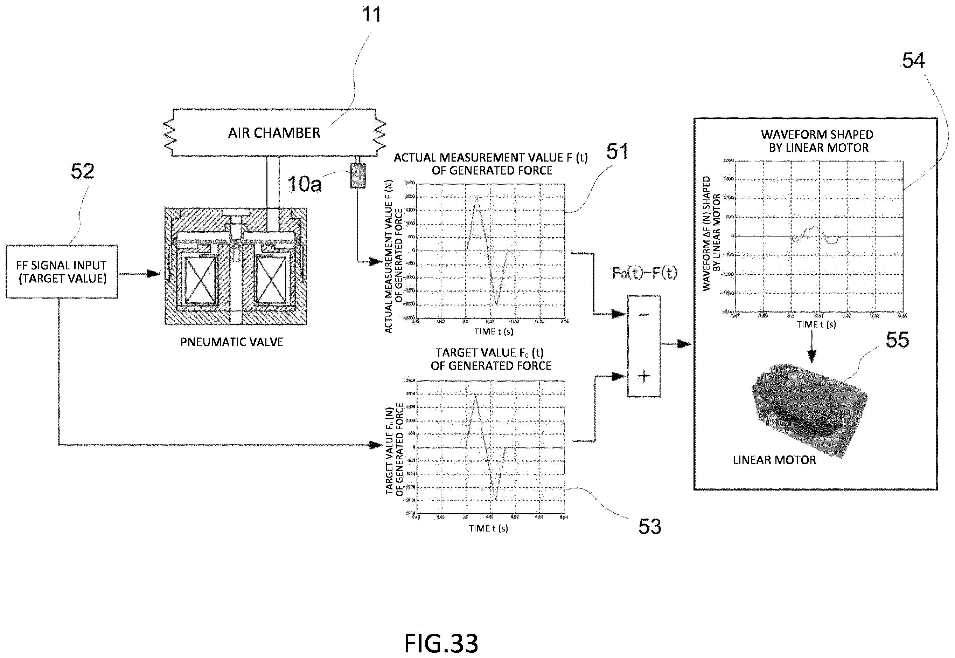

FIG. 33 proposes "hybrid control" in which advantages of the pneumatic servo method (first vibration damping actuator) and the linear motor method (second vibration damping actuator) are utilized to compensate for disadvantages. That is, the basic concept is "forming an original form of a vibration damping control waveform with a pneumatic servo, and shaping the form with a linear motor". Hereinafter, as mainly described above, advantages and disadvantages of the linear motor method and the pneumatic servo method will be summarized again.
Advantages of the linear motor method are as follows.

(1) Excellent responsiveness・・・A generated force of a linear motor having the Lorentz force as an operation principle is determined by a current flowing in a coil, and thus the generated force does not depend on a dynamic characteristic of a control target when the control target is stationary.
(2) Capability of high-accuracy FF control・・・Since an input current and a generated force are in a proportional relationship, a generated force waveform that attenuates an impact load can be easily created.

Disadvantages of the linear motor method are as follows.

(1) Small generated force・・・At the present moment, since there is a limit about generated force F = 100 N to 150 N with one linear motor, it is necessary to simultaneously install a large number of linear motors to obtain a large generated force.
(2) Necessity of countermeasures against heat generation・・・The Lorentz force has poor electrical-mechanical conversion efficiency as compared with a magnetic attraction force (Maxwell stress) of a pneumatic electromagnetic valve, and requires high-power driving. In order to protect a coil and a permanent magnet with temperature limitation, countermeasures against heat generation of the coil are required.

In addition, an influence of a temperature rise on a semiconductor exposure apparatus or the like mounted on the vibration isolator is to be a restriction condition of an allowable heat generation amount.

Whereas, the pneumatic servo method has an advantage that a large generated force can be obtained as a general fixed concept in the industry, but there have been disadvantages of (1) large air consumption and (2) poor responsiveness. However, it has been able to solve these disadvantages by applying the present invention as described in the above-described embodiments.

The present embodiment proposes not to select either the pneumatic servo method or the linear motor method, but to further improve the performance by combining both methods and utilizing the respective advantages. That is, since there is no mechanical movable portion, a higher level of the high acceleration and vibration damping control can be achieved by combining the linear motor method having excellent high-speed responsiveness and the pneumatic servo. Hereinafter, specific examples of the concept "forming an original form of a vibration damping control waveform with a pneumatic servo, and shaping the form with a linear motor" of the present invention will be described.

In FIG. 33, a graph of 51 is of a generated force actual measurement value F (t) of the pneumatic actuator. The actual measurement value F (t) is a graph obtained on the basis of a pressure of an air chamber 11 measured by a pressure sensor 10a, and is an output response waveform (FIG. 33) with respect to an input signal of an FF signal target value 52. As a detection means for a generated force, the pressure sensor 10a is used in the present embodiment. However, instead of this pressure sensor, a load cell, a force sensor, or the like attached between an upper end surface of the pneumatic actuator and an opposed surface thereof may be used (not illustrated).

A graph of 53 is of an input waveform (FIG. 32) of the generated force target value $F_0$ (t) of the pneumatic actuator.

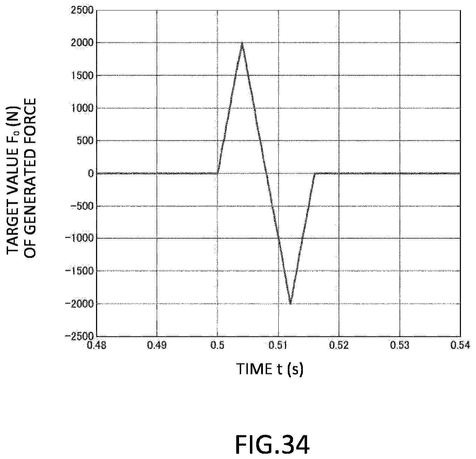

A graph of 54 is of a drive input waveform $\Delta F$ (t) (FIG. 34) of a linear motor 55, and is obtained as a deviation $\Delta F$ (t) [= $F_0$ (t) - F (t)] between the generated force target value $F_0$ (t) and the generated force actual measurement value F (t). In a case where the pneumatic actuator can obtain high responsiveness as in the case where the pressure feedback is performed described above, the FF signal $F_0$ (t) may be directly input data of the vibration force measured in real time instead of data prepared in advance.

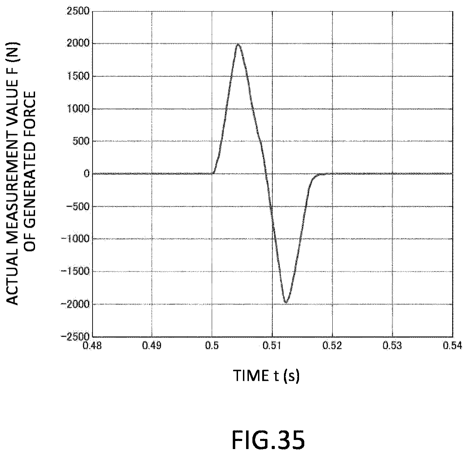

The generated force target input waveform $F_0$ (t) of the FF signal illustrated in FIG. 34 is a triangular wave having rise time $T_r$ = 4 ms and a maximum peak value of 2000 N. An output response waveform in FIG. 35 is an original waveform of the vibration damping control by the pneumatic servo, but sufficiently follows the maximum peak value of 2000 N, and the advantage of the pneumatic servo that can achieve a large generated force is exhibited.

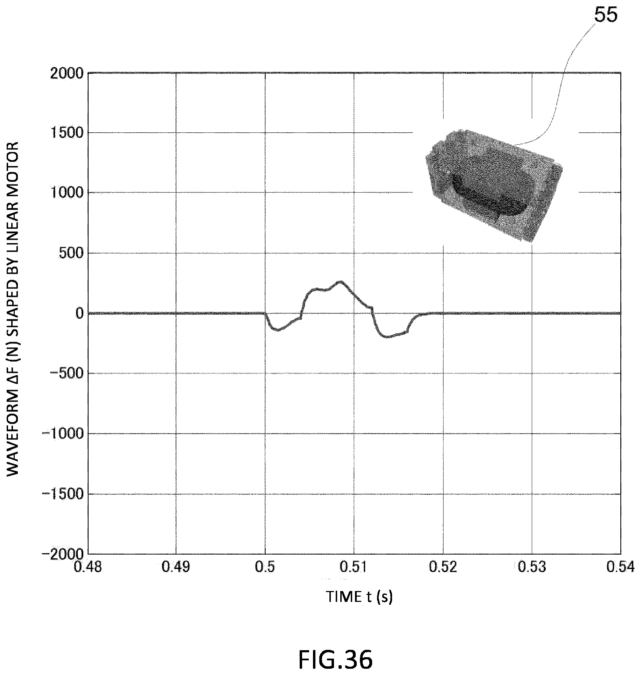

A drive input waveform $\Delta F$ (t) in FIG. 36 is a waveform shaped by the linear motor, and has a maximum peak value at a low level of 250 N, but is an extremely complicated waveform. The advantage of the linear motor that can follow this complicated waveform at a high speed and with high accuracy is exhibited. By combining these two waveforms, heat generation of the linear motor can be significantly reduced, and the FF control with high accuracy can be achieved despite the large generated force.

As the pressure sensor 10a that measures a pressure of the air chamber 11, the pressure sensor used in the pressure FB in the above-described embodiment may also be used. Alternatively, a correction means is applied by another method without performing the pressure FB as the non-linearity/responsiveness correction means. In this case, for the "hybrid control" of the present embodiment, a pressure in the air chamber may be measured by a pressure sensor.

Alternatively, the vibration damping control may be performed by the pneumatic servo without the non-linearity/responsiveness correction means, and a deviation $\Delta F$ (t) between the generated force target value $F_0$ (t) and the generated force actual measurement value F (t) may be reduced by the linear motor. Even in this case, a load on the linear motor can be reduced, and the heat generation can be reduced.

In the present embodiment, the case has been described in which the pneumatic actuator is applied to the first vibration damping actuator and the linear motor method is applied to the second vibration damping actuator.

As the second vibration damping actuator having high responsiveness, for example, a piezo type or super-magnetostrictive actuator (not illustrated) may be used although a stroke of the movable portion is restricted.

In the present embodiment, the hybrid control has been proposed in which the pneumatic servo method (first vibration damping actuator) and the linear motor method (second vibration damping actuator) are combined for the vibration damping actuator. Further, as a new development, the linear motor method which is the second vibration damping actuator may be used for the vibration isolation actuator. As a basic mode of the present invention, since the vibration isolation actuator and the vibration damping actuator are configured separately, it is possible to select a driving principle and a control method that can achieve the best performance for each of the vibration isolation actuator and the vibration damping actuator and driving means thereof. Considering that the vibration isolation actuator does not require a large generated force as compared with the vibration damping actuator, the linear motor method having excellent high-speed responsiveness can be applied. That is, in this case, the linear motor method plays two roles of "shaping of vibration damping control waveform" and "vibration isolation effect" (not illustrated).

[Seventh embodiment]

The embodiments described above have shown a measure for avoiding an influence of the non-linear characteristic of the servo valve on the vibration damping control characteristic by performing the correction means for non-linearity/responsiveness (pressure FB).

The present embodiment shows, focusing only on a dead zone characteristic of a servo valve, the following two measures (1) and (2) capable of reducing an influence of the dead zone characteristic on the vibration damping control characteristic even in a case where the correction means for non-linearity/responsiveness is not performed.

(1) A current value $I_0$ at standby time of vibration damping control is set in a range of $0 \leq I_0 \leq I_1$
(2) A current value $I_0$ at standby time of vibration damping control is set in a range of $I_0 \geq I_1$

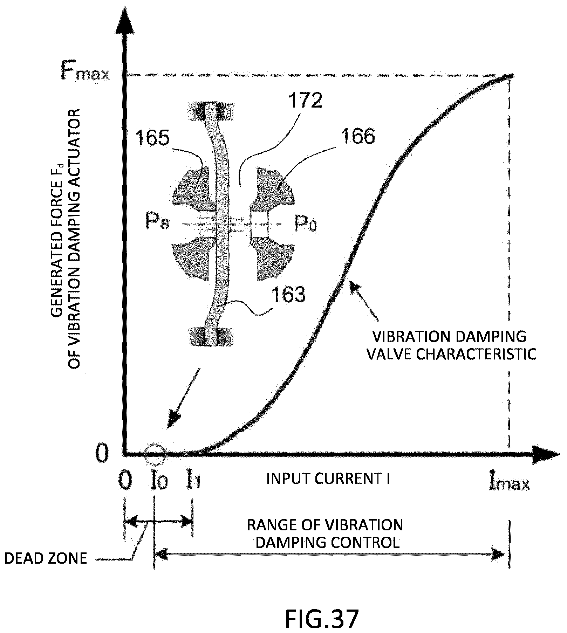

FIG. 37 is a graph for describing (1) above, and illustrates a generated force of a vibration damping actuator with respect to an input current of a vibration damping valve. In the figure, a positional relationship between an intake nozzle 165 and a flapper 163 is modeled and illustrated. In a case where the standby current value $I_0$ of the vibration damping control is set in the range of $0 \leq I_0 \leq I_1$, the flapper 163 shields an opening end of the intake nozzle 165, and a pressure of a control chamber 172 is maintained at an atmospheric pressure. By approximation of the standby current value $I_0 \to I_1$, a dead zone width $\Delta I$ ($= I_1 - I_0) \to 0$ in the static characteristic can be obtained, and a "dead time element" $\Delta T \to 0$ in the dynamic characteristic can be obtained.

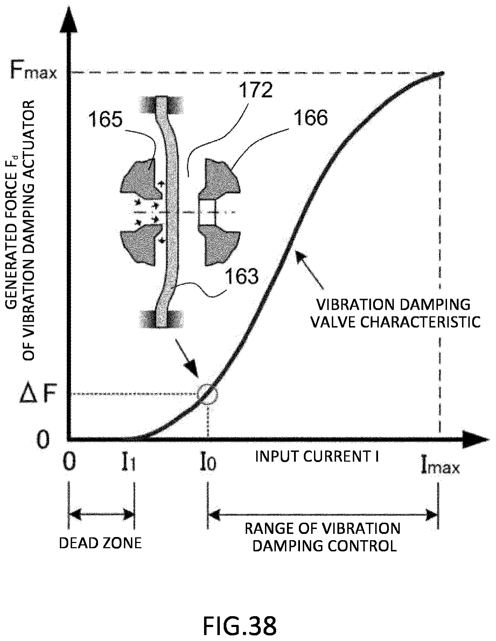

Similarly to FIG. 37, FIG. 38 is a graph for describing (2) above, and illustrates a generated force of the vibration damping actuator with respect to an input current of the vibration damping valve. In a case where the standby current value $I_0$ of the vibration damping control is set in the range of $I_0 \geq I_1$, the flapper 163 is separated from the opening end of the intake nozzle 165, and a minute amount of air flows into the control chamber 172. In this case, the pressure in the control chamber 172 is higher than the atmospheric pressure.

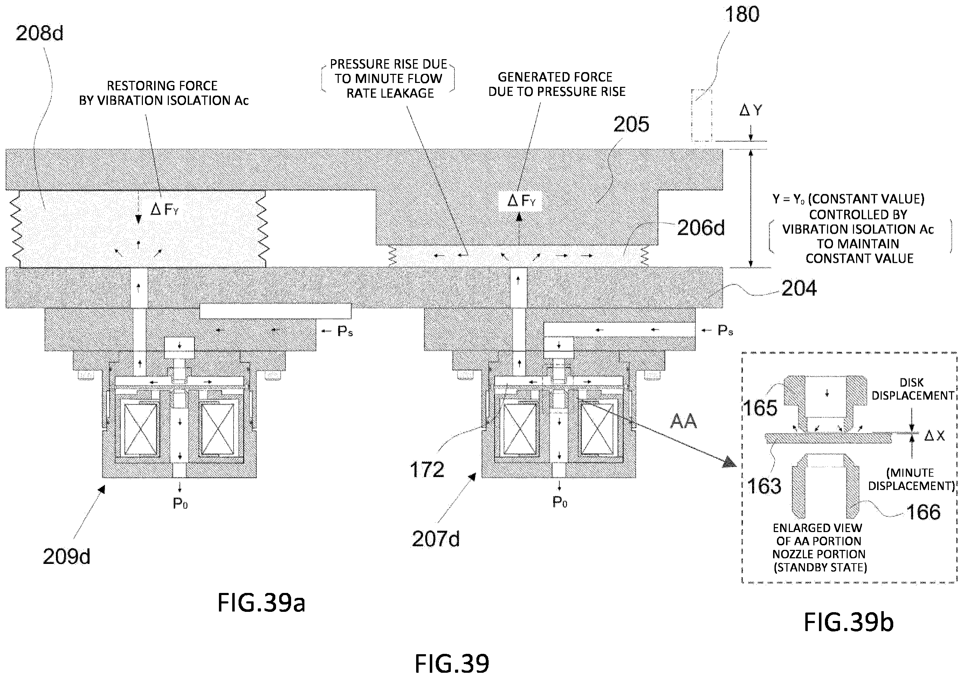

FIG. 39a is a diagram illustrating a state where functions of a vibration isolation actuator 208d and a vibration isolation valve 209d support functions of a vibration damping actuator 206d and a vibration damping valve 207d in the case of (2). FIG. 39b is an enlarged view of an AA portion (nozzle portion) in FIG. 39a.

At the standby time of the vibration damping control, due to a pressure rise in the control chamber 172, a generated force $\Delta F_Y$ for moving a surface-plate-side inner frame portion 205 with respect to a floor-surface-side outer frame portion 204 is generated in the vibration damping actuator 206d. However, position control is performed by the vibration isolation actuator so that a distance Y of the surface-plate-side inner frame portion (movable side) with respect to the floor-surface-side outer frame portion (fixed side) is maintained at a constant value ($Y = Y_0$). This is because a displacement sensor 180 that detects a position of the surface-plate-side inner frame portion with respect to the floor-surface-side outer frame portion is provided, and a restoring force ($-\Delta F_Y$) acts on the vibration isolation actuator on the basis of information from the displacement sensor.

At the time of vibration isolation control, with an air spring rigidity $K_v$ of the vibration isolation actuator and an air spring rigidity $K_d$ of the vibration damping actuator, a resonance frequency $f_0 = (K_T/m)^{0.5}/2\pi$ is determined by a parallel sum ($K_T = K_v + K_d$) of the two air spring rigidities and a load mass m. If a pressure rise in the control chamber 172 of the vibration damping actuator is minute, the air spring rigidity $K_d$ proportional to the pressure can be sufficiently small, so that the influence on the vibration isolation performance can be made small. [See Equation (5)]

Even in the range of the standby current value $I_0 \geq I_1$ of the vibration damping control, the output waveform of the vibration damping control can be brought close to the target value by approximation of the standby current value $I_0 \to I_1$.

In summary, in the servo valve having the dead zone width in the range of $0 \leq I_0 \leq I_1$, if $I = I_1$ is set as a center value and a standby current value is set such that an error $\pm \Delta I_1$ with respect to the center value $I_1$ is as small as possible, the influence on the vibration damping control and the vibration isolation control can be reduced.

Supplement [1]

In each of the embodiments described above, a case has been described in which the active control type vibration isolation actuator is used as the vibration isolation means for reducing minute vibration of the vibration isolator. However, a means of reducing minute vibration is not limited to the actuator with active electronic control. For example, a pneumatic system with a mechanical servo that is applied to a tabletop vibration isolator may be adopted. This mechanical servo uses mechanical feedback that controls a flying height and a pressure of a pneumatic tank by mechanically detecting the flying height of the pneumatic tank (actuator) with a spool of a valve and adjusting a valve flow rate. Alternatively, a vibration isolation effect of vibration blocking can be obtained by maintaining a non-contact state between a surface plate and a floor surface, such as a method of floating the surface plate at an equilibrium position by using a repulsive force of a permanent magnet, a method of configuring a static pressure air bearing that is automatically adjusted so as to keep a void constant between the surface plate and an opposed surface, or the like.

Alternatively, a passive support means (vibration absorber) including a combination of a spring coil and a surging phenomenon preventing rubber, a vibration-proof rubber, or the like may be adopted according to vibration isolation performance required by an application target.

Many of the embodiments of the present invention described above focus on a structure and a control method of vibration damping control. For example, the second embodiment shows the structure in which two sets of the vibration damping actuator are respectively arranged on the opposed surfaces, and the third embodiment shows the method of correcting the non-linear characteristic of the servo valve. The fourth embodiment shows the generated force (pressure) feedback for (i) correcting the non-linear characteristic of the control element, (ii) correcting response delay, and (iii) performing (i) and (ii) in real time. In the fifth embodiment, the non-linearity/responsiveness correction means applied in the adjustment step is not applied in the implementation step, and only an input drive signal of the servo valve obtained in the adjustment step is used. The sixth embodiment shows the method of "forming an original form of a vibration damping control waveform with a pneumatic servo, and shaping the form with a linear motor". The structure and the control method of the vibration damping control are proposed to obtain an effect regardless of selection of a means (active vibration isolation and passive vibration isolation) of the vibration isolation control.

Supplement [2]

Therefore, as described in Supplement [1], the present invention can also be applied to fluid control systems having the following configurations (1) and (2).

(1) Application example (Part 1)

A configuration includes: a vibration isolator; a means configured to suppress vibration transfer between a foundation and the vibration isolator, and support the vibration isolator with respect to the foundation; and a vibration damping actuator configured to provide a vibration damping force for attenuating disturbance generated in the vibration isolator, on the basis of information on a vibration force provided by a vibration generation source to the vibration isolator that is installed in an environment having the vibration generation source that applies vibration to the vibration isolator, in which the vibration damping actuator is configured with a gas pressure method of being driven by a vibration damping valve that performs intake and exhaust of gas inside the vibration damping actuator, and, when a control pressure of the vibration damping valve is controlled from a vicinity of an atmospheric pressure to a vicinity of a supply pressure of the vibration damping valve, the vibration damping valve has a non-linear characteristic of a control pressure with respect to an input signal, a correction means for the non-linear characteristic is provided on a drive side of the vibration damping valve and configured to reduce an influence of the non-linear characteristic on the vibration damping force, and the vibration damping valve is driven with the correction means for the non-linear characteristic.

(2) Application example (Part 2)

A configuration includes: a vibration isolator; a means configured to suppress vibration transfer between a foundation and the vibration isolator, and support the vibration isolator with respect to the foundation; and a vibration damping actuator configured to provide a vibration damping force for attenuating disturbance generated in the vibration isolator, on the basis of information on a vibration force provided by a vibration generation source to the vibration isolator that is installed in an environment having the vibration generation source that applies vibration to the vibration isolator, in which the vibration damping actuator is configured with a gas pressure method of being driven by a vibration damping valve that performs intake and exhaust of gas inside the vibration damping actuator, a control pressure of the vibration damping valve is controlled from a vicinity of an atmospheric pressure to a vicinity of a supply pressure of the vibration damping valve, and two sets of the vibration damping actuator that generate forces in opposite directions are respectively arranged on opposed surfaces to attenuate a vibration force $F_A$ and a vibration force $F_B$, where the vibration force $F_A$ is a positive direction component of the vibration force applied to the vibration isolator by the vibration generation source, and the vibration force $F_B$ is a negative direction component of the vibration force.

Industrial Applicability

According to the fluid control system of the present invention, it is possible to solve the problem that air consumption in the steady state is large and responsiveness is poor in a case where the pneumatic servo including the pneumatic actuator and the servo valve is to be applied to high acceleration and vibration damping control.

Reference Signs List

| 201 | vibration isolator |
| 202 | stage |
| 208 | vibration isolation actuator |
| 206 | vibration damping actuator |
| 207 | vibration damping valve |

**Claims**

1. A fluid control system comprising:

    a vibration isolator;
    a support means configured to suppress vibration transfer between a foundation and the vibration isolator, and support the vibration isolator with respect to the foundation;
    a vibration isolation means having a function of reducing minute vibration of the vibration isolator; and
    a vibration damping actuator configured to provide the vibration isolator with a vibration damping force for attenuating disturbance generated in the vibration isolator on a basis of information on a vibration force provided by a vibration generation source to the vibration isolator that is installed in an environment having the vibration generation source that applies vibration to the vibration isolator, wherein
    the vibration damping actuator is configured with a gas pressure method of being driven by a vibration damping valve that performs intake and exhaust of gas inside the vibration damping actuator, and the vibration isolation means and the vibration damping actuator are arranged independently of each other to have generated forces having a same direction component.

2. The fluid control system according to claim 1, wherein two sets of a vibration damping actuator that generate forces in mutually opposite directions are respectively arranged on opposed surfaces to attenuate a vibration force $F_A$ and a vibration force $F_B$, where the vibration force $F_A$ is a positive direction component of a vibration force applied to the vibration isolator by the vibration generation source, and the vibration force $F_B$ is a negative direction component of the vibration force.

3. The fluid control system according to claim 1, wherein a vibration isolation actuator is used for the vibration isolation means, and the vibration isolation actuator is driven by a vibration isolation pneumatic servo valve.

4. The fluid control system according to claim 1, wherein, during vibration damping control, the vibration damping actuator is driven in a range from a vicinity of an atmospheric pressure to a supply source pressure or less, and the vibration damping valve is driven such that an internal pressure of the vibration damping actuator is maintained in a state in a vicinity of an atmospheric pressure before a start and after an end of the vibration damping control.

5. The fluid control system according to claim 3, wherein, when a supply source pressure, an air chamber volume, and a pressure receiving area of the vibration isolation actuator are $P_{sv}$, $V_v$, and $A_v$, respectively, and a supply source pressure, an air chamber volume, and a pressure receiving area of the vibration damping actuator are $P_{sq}$, $V_d$, and $A_d$, respectively, $P_{sv}A_V^2/V_v < P_{sd}Ad^2/V_d$ is satisfied.

6. The fluid control system according to claim 1, wherein the vibration damping valve and the vibration damping actuator are arranged such that a control port of the vibration damping valve and an intake hole of the vibration damping actuator are connected by a substantially linear flow path.

7. The fluid control system according to claim 1, wherein the vibration damping valve and the vibration damping actuator are arranged such that a control port of the vibration damping valve and an intake hole of the vibration damping actuator are connected by an approximately L-shaped flow path.

8. The fluid control system according to claim 1, wherein

    a characteristic of the vibration damping valve alone is that a generated pressure with respect to an input signal has a non-linear characteristic,

a correction means for the non-linear characteristic is provided on a drive side of the vibration damping valve and configured to reduce an influence of the non-linear characteristic on the vibration damping force, and
the vibration damping valve is driven with a drive input waveform obtained by the correction means for the non-linear characteristic.

9. The fluid control system according to claim 8, wherein a non-linear characteristic of the vibration damping valve alone is that an output characteristic such as a flapper displacement or a pressure with respect to an input signal has any of: a dead zone characteristic in which a state where an output does not increase is maintained in a vicinity of a start of input signal application; non-linearity of an output characteristic with respect to an input signal value; and a variation in an input signal value reaching a target output.

10. The fluid control system according to claim 9, wherein, in the vibration damping valve in which an output characteristic such as a flapper displacement or a pressure with respect to an input signal I has a dead zone characteristic in which a state where an output does not increase is maintained in a range of $0 \leq I \leq I_1$, the vibration damping valve is driven with an input waveform that steeply rises at time $t \approx 0$ that is when the vibration damping control is started.

11. The fluid control system according to claim 9, wherein, in the vibration damping valve in which an output characteristic such as a flapper displacement or a pressure with respect to an input signal I has non-linearity, when a reference characteristic is of a case where the output characteristic with respect to an input signal of the vibration damping valve is assumed to have a straight line, and an output value of the reference characteristic with an input signal value $I = I_0$ is $X = X_0$ and an output value when an output characteristic has non-linearity is $Y = Y_0$, the vibration damping valve is driven with an input waveform corresponding to magnitude of a difference $\varepsilon = Y_0 - X_0$ from the reference characteristic.

12. The fluid control system according to claim 9, wherein, in the vibration damping valve having a variation in an input signal value $I = I_0$ reaching a target output value in an output characteristic such as a flapper displacement or a pressure with respect to an input signal of the vibration damping valve, when a maximum value of the input signal is $I = I_{max}$ and a variation width is $\Delta I_2 = I_{max} - I_2$, the vibration damping valve is driven such that a drive waveform and a final value of a drive input become smaller as a variation width $\Delta I_2$ is larger in a range of $0 \leq I \leq I_{max}$.

13. The fluid control system according to claim 1, further comprising:

a generated force detection means configured to detect a generated force of the vibration damping actuator, wherein
the vibration damping valve is driven to attenuate the vibration force on a basis of information obtained by the generated force detection means.

14. The fluid control system according to claim 13, wherein, when $F_0$ (t) is a target value of a vibration damping control signal for applying a force in an opposite phase for attenuating the vibration force, and F (t) is an actual measurement value of a generated force of the vibration damping actuator obtained on a basis of an output of the generated force detection means, the vibration damping valve is driven with generated force feedback for reducing a deviation $\varepsilon$ between the target value and the actual measurement value.

15. The fluid control system according to claim 14, wherein the generated force detection means is a pressure sensor arranged in any place of: a control chamber of the vibration damping valve; an air chamber of the vibration damping actuator; and a flow path connecting the control chamber and the air chamber.

16. The fluid control system according to claim 1, wherein the vibration damping valve includes an electromagnet, a flapper, a nozzle arranged to be opposed to the flapper, a flapper support member that fixes the flapper, and an intake hole and an exhaust hole for a fluid that communicate with the nozzle, and the vibration damping valve has a configuration in which a closed loop magnetic circuit is formed by the electromagnet, the flapper, and a yoke material, the flapper is operated by a suction force generated between a magnetic pole of the electromagnet and the flapper, and a length of a flow path formed between the flapper and the nozzle is made variable to control a pressure or a flow rate of the fluid.

17. A control method of the fluid control system according to claim 1, in which a characteristic of the vibration damping valve alone is that a generated pressure with respect to an input signal has a non-linear characteristic, a correction means for the non-linear characteristic is provided on a drive side of the vibration damping valve and configured to reduce an influence of the non-linear characteristic on the vibration damping force, and the vibration damping valve is driven with a drive input waveform obtained by the correction means for the non-linear characteristic, the control method comprising:

obtaining a drive input waveform of the vibration damping valve with the fluid control system in an adjustment step of a vibration isolation device including the fluid control system, and then driving the vibration damping valve with the drive input waveform in a state where the correction means for the non-linear characteristic is not applied in an implementation step of the vibration isolation device.

18. A control method of the fluid control system according to claim 14, in which, when $F_0$ (t) is a target value of a vibration damping control signal for applying a force in an opposite phase for attenuating the vibration force, and F (t) is an actual measurement value of a generated force of the vibration damping actuator obtained on a basis of an output of the generated force detection means, the vibration damping valve is driven with generated force feedback for reducing a deviation $\varepsilon$ between the target value and the actual measurement value, the control method comprising:

obtaining a drive input waveform of the vibration damping valve with the fluid servo system in an adjustment step of a vibration isolation device including the fluid control system, and then driving the vibration damping valve with the drive input waveform in a state where the generated force feedback is released in an implementation step of the vibration isolation device.

19. The control method of the fluid control system according to claim 17, wherein the fluid control system is configured to allow a data storage means to be applied, in which the drive input waveform can be specified, selected, and extracted in accordance with a difference in element equipment such as the vibration damping valve or the vibration damping actuator or in accordance with a difference in a production condition such as production takt and a set value of a supply pressure.

20. The control method of the fluid control system according to claim 17 or 18, wherein the vibration damping valve is driven through a compensation circuit such as a proportional amplifier, an integral amplifier, or a differential amplifier incorporated in a control circuit that drives the vibration damping valve in an adjustment step of the fluid control system, and the vibration damping valve is driven in a state where the compensation circuit is invalid in an implementation step of the fluid control system.

21. The fluid control system according to claim 14, further comprising:

a control circuit (A) configured to drive the vibration damping valve on a basis of information from the generated force detection means; and
a control circuit (B) configured to drive the vibration damping valve in a state where information from the generated force detection means is blocked, wherein
the control circuit (A) and the control circuit (B) are configured to be switchable.

22. The fluid control system according to claim 15, wherein a pressure sensor is used for the pressure detection means, and the pressure sensor is configured to be attachable to and detachable from the vibration damping valve, the vibration damping actuator, or the like.

23. The fluid control system according to claim 15, wherein, in a fluid space including a control chamber formed inside the vibration damping valve, a pipe connecting the control chamber and the vibration damping actuator, and an air chamber of the vibration damping actuator, the pressure detection means is installed at, in the fluid space, a place in a stagnant state that is less susceptible to a dynamic pressure of gas during intake of gas into the air chamber or exhaust of gas from the air chamber.

24. The fluid control system according to claim 23, wherein a place where a pressure is detected in a stagnant space is a position at a maximum distance from an opening of the pipe in the control chamber of the vibration damping valve or in the air chamber.

25. The fluid control system according to claim 1, wherein, in a state where an intake side of the vibration damping valve is connected to a supply pressure source and an exhaust side is opened to atmosphere, when a state where a drive input value I is zero is I = 0, the drive input value with which air flows into the control chamber and the control chamber pressure starts to increase is $I = I_1$, and a range of $0 \leq I \leq I_1$ is a dead zone of the vibration damping valve, the drive input value I is controlled while avoiding the dead zone.

26. A fluid control system comprising:

a vibration isolator;

a stage configured to move on the vibration isolator;

a stage driving means configured to drive the stage;

a vibration isolation actuator configured to support the vibration isolator with respect to a foundation and having a function of reducing minute vibration applied from an outside to the vibration isolator;

a first vibration damping actuator configured with a gas pressure method and configured to give a vibration damping force for attenuating a vibration force to the vibration isolator on a basis of information on the vibration force applied to the vibration isolator accompanying acceleration and deceleration of the stage;

a second vibration damping actuator having higher responsiveness than the first vibration damping actuator and having a different operation principle; and

a generated force detection means configured to detect a generated force of the first vibration damping actuator, wherein

when F (t) is an actual measurement value of a generated force of the first vibration damping actuator obtained by the generated force detection means, $F_0$ (t) is a generated force target value set to attenuate the vibration force on a basis of information on the vibration force applied to the vibration isolator accompanying movement of the stage, and $\Delta F = F_0$ (t) - F (t) is a difference between the target value and the actual measurement value, the second vibration damping actuator is driven such that $\Delta F$ asymptotically approaches zero.

27. The fluid control system according to claim 26, wherein the second vibration damping actuator is a linear motor driven by a Lorentz force.

28. The fluid control system according to claim 3 or 27, wherein the vibration isolation actuator is the linear motor.

29. The fluid control system according to claim 3, wherein the vibration isolation actuator and the vibration damping actuator are arranged to have coaxial generated force components.

30. The fluid control system according to claim 29, wherein a sensor that detects displacement, acceleration, or the like of both the vibration isolation actuator and the vibration damping actuator is arranged.

31. The fluid control system according to claim 1, wherein, in the vibration damping valve in which an output characteristic such as a flapper displacement or a pressure with respect to an input signal I has a dead zone characteristic in which a state in which an output does not increase is maintained in a range of $0 \leq I \leq I_1$, when an input signal at standby time of vibration damping control is $I = I_0$ and is set in a range of $0 \leq I_0 \leq I_1$ at time t = 0 that is when vibration damping control is started.

32. The fluid control system according to claim 1, wherein, in the vibration damping valve in which an output characteristic such as a flapper displacement or a pressure with respect to an input signal I has a dead zone characteristic in which a state in which an output does not increase is maintained in a range of $0 \leq I \leq I_1$, when an input signal at standby time of vibration damping control is $I = I_0$ and is set in a range of $I_0 \geq I_1$ at time t = 0 that is when vibration damping control is started, and the vibration isolation actuator is configured to act on a basis of information from a displacement sensor to reduce an influence of a generated force of the vibration damping actuator.

33. A control method of the fluid control system according to claim 14, in which, when $F_0$ (t) is a target value of a vibration damping control signal for applying a force in an opposite phase for attenuating the vibration force, and F (t) is an actual measurement value of a generated force of the vibration damping actuator obtained on a basis of an output of the generated force detection means, the vibration damping valve is driven with generated force feedback for reducing a deviation $\varepsilon$ between the target value and the actual measurement value, wherein

a regulator such as a pressure reduction valve is installed between a supply source side of air pressure and an intake hole of the servo valve, and the generated force feedback functions to reduce an influence of a pressure drop on a downstream side of the regulator on a generated force of the vibration damping actuator at a time of vibration damping control.

34. The fluid control system according to claim 1, wherein, on a basis of information on the vibration force accompanying movement of the stage, the vibration damping valve is configured to satisfy $f_0 > 1/T$, where T (sec) is rise time from a vibration application start to a maximum acceleration, and $f_0$ (Hz) is a natural frequency in an operation state of the vibration damping valve.

35. A fluid control system comprising:

a vibration isolator;

a means configured to suppress vibration transfer between a foundation and the vibration isolator, and support the vibration isolator with respect to the foundation; and

a vibration damping actuator configured to provide a vibration damping force for attenuating disturbance generated in the vibration isolator on a basis of information on a vibration force provided by a vibration generation source to the vibration isolator that is installed in an environment having the vibration generation source that applies vibration to the vibration isolator, wherein

the vibration damping actuator is configured with a gas pressure method of being driven by a vibration damping valve that performs intake and exhaust of gas inside the vibration damping actuator, and

when a control pressure of the vibration damping valve is controlled from a vicinity of an atmospheric pressure to a vicinity of a supply pressure of the vibration damping valve,

the vibration damping valve has a non-linear characteristic of a control pressure with respect to an input signal, and

a correction means for the non-linear characteristic is provided on a drive side of the vibration damping valve and configured to reduce an influence of the non-linear characteristic on the vibration damping force, and the vibration damping valve is driven with the correction means for the non-linear characteristic.

36. A fluid control system comprising:

a vibration isolator;

a means configured to suppress vibration transfer between a foundation and the vibration isolator, and support the vibration isolator with respect to the foundation; and

a vibration damping actuator configured to provide a vibration damping force for attenuating disturbance generated in the vibration isolator on a basis of information on a vibration force provided by a vibration generation source to the vibration isolator that is installed in an environment having the vibration generation source that applies vibration to the vibration isolator, wherein

the vibration damping actuator is configured with a gas pressure method of being driven by a vibration damping valve that performs intake and exhaust of gas inside the vibration damping actuator,

a control pressure of the vibration damping valve is controlled from a vicinity of an atmospheric pressure to a vicinity of a supply pressure of the vibration damping valve, and

two sets of the vibration damping actuator that generate forces in mutually opposite directions are respectively arranged on opposed surfaces to attenuate a vibration force $F_A$ and a vibration force $F_B$, where the vibration force $F_A$ is a positive direction component of the vibration force applied to the vibration isolator by the vibration generation source, and the vibration force $F_B$ is a negative direction component of the vibration force.

37. The fluid control system according to claim 1, wherein a characteristic of the vibration damping valve alone is that an output such as a flapper displacement or a pressure with respect to an input signal has a hysteresis characteristic, and the vibration damping valve is incorporated in a closed loop control system.

FIG.1b

FIG.1a

FIG.1

FF SIGNAL INPUT WAVEFORM

TARGET VALUE $F_0(t)$

ACCELERATION DETECTION SIGNAL

TIME t

179

FIG.2a

CONTROL CIRCUIT

178

CURRENT

AIR CHAMBER

206d

177(C)

175

173

$P_s$

176(B)  162(A)

174

160

161

167

168

207d

154  151

150

158  169

$P_0$

156  AA

153

157

171
164
159
163
170
152
155

172

165

DISK DISPLACEMENT

X

163

166

FIG.2b

FIG.2

EP 4 667 773 A1

FIG.3

EP 4 667 773 A1

FIG.4

FIG.5

FIG.6a

FIG.6b

FIG.6

EP 4 667 773 A1

FIG.7a

FIG.7b

FIG.7

EP 4 667 773 A1

FIG.8

FIG.9

FIG.10

FIG.11a $0 < I < I_1$

FIG.11b $I > I_1$

FIG.11

FIG. 12. DEAD ZONE OF DISPLACEMENT CHARACTERISTIC

FIG.12

FIG. 13. NON-LINEARITY OF
DISPLACEMENT CHARACTERISTIC

FIG.13

FIG. 14. VARIATION IN
REACHED CURRENT VALUE

FIG.14

INFLUENCE OF DEAD ZONE ON PRESSURE RESPONSE CHARACTERISTIC

NON-LINEARITY/
RESPONSIVENESS CORRECTION D
(NO INFLUENCE OF
CHARACTERISTICS A, B, AND C)

A

B

C

FIG. 12. DEAD ZONE OF
DISPLACEMENT CHARACTERISTIC

CURRENT I (A)

DISK DISPLACEMENT x (m)

PRESSURE P (Pa)

TIME t (s)

FIG.15

INPUT CURRENT WAVEFORM FOR CORRECTING DEAD ZONE

FIG. 12. DEAD ZONE OF DISPLACEMENT CHARACTERISTIC

FIG.16b

FIG.16a

FIG.16

EP 4 667 773 A1

INFLUENCE OF NON-LINEARITY ON PRESSURE
RESPONSE CHARACTERISTIC

FIG. 13. NON-LINEARITY OF
DISPLACEMENT CHARACTERISTIC

NON-LINEARITY/
RESPONSIVENESS CORRECTION D
(NO INFLUENCE OF
CHARACTERISTICS A, B, AND C)

FIG.17

EP 4 667 773 A1

EP 4 667 773 A1

**INPUT CURRENT WAVEFORM FOR CORRECTING NON-LINEARITY**

FIG.18

(chart axes: DRIVE CURRENT I (A) vs TIME t (s) $\times 10^{-3}$; curves A, B, C; TARGET CURRENT VALUE)

FIG. 13. NON-LINEARITY OF DISPLACEMENT CHARACTERISTIC

(inset chart: DISK DISPLACEMENT x (m) vs CURRENT I (A), curves A, B, C)

INFLUENCE OF REACHED CURRENT VALUE ON PRESSURE
RESPONSE CHARACTERISTIC

FIG.19

FIG.20

EP 4 667 773 A1

FF SIGNAL INPUT WAVEFORM

AIR CHAMBER

TARGET VALUE $F_0(t)$ OF
GENERATED FORCE
ACTUAL MEASUREMENT VALUE $F(t)$
OF GENERATED FORCE
VALVE IS DRIVEN TO OBTAIN
$\varepsilon = F_0(t) - F(t) \rightarrow 0$

TARGET VALUE $F_0(t)$

ACCELERATION DETECTION SIGNAL

TIME t

$\varepsilon$

CURRENT

CONTROL
CIRCUIT

CONTROL CHAMBER
PRESSURE SIGNAL

EFFECT OF CORRECTED
INPUT CURRENT WAVEFORM

(1) FOLLOWING ① AND ② ARE
     SIMULTANEOUSLY CORRECTED
     ① NON-LINEAR CHARACTERISTICS
        OF SERVO VALVE
     ② RESPONSE DELAY

(2) (1) ABOVE IS PERFORMED IN REAL TIME
     ① CORRECTION OF HYSTERESIS
     ② COUNTERMEASURES AGAINST SUPPLY
        SOURCE PRESSURE FLUCTUATION

FIG.21

EP 4 667 773 A1

FIG.22

FIG.23

FIG.24b

FIG.24c

FIG.24a

FIG.24

EP 4 667 773 A1

FIG.25

FIG.26a

FIG.26b

FIG.26

FIG.27a

FIG.27b

FIG.27

FIG.28

FIG.29

FIG. (a) CONTROL FLOW RATE
CHARACTERISTIC

FIG. (b) INTAKE FLOW RATE
CHARACTERISTIC

FIG. (d) DISK DISPLACEMENT

FIG. (c) EXHAUST FLOW RATE
CHARACTERISTIC

FIG. (e) INPUT CURRENT

FIG.30

FIG.31a

FIG.31b

FIG.31c

FIG.31d

FIG.31e

FIG.31

FIG.32

FIG.33

FIG.34

FIG.35

FIG.36

WAVEFORM ΔF (N) SHAPED BY LINEAR MOTOR

TIME t (s)

FIG.37

FIG.38

RESTORING FORCE
BY VIBRATION ISOLATION Ac

PRESSURE RISE DUE
TO MINUTE FLOW
RATE LEAKAGE

GENERATED FORCE
DUE TO PRESSURE RISE

$\Delta F_Y$

$\Delta F_Y$

$Y = Y_0$ (CONSTANT VALUE)
CONTROLLED BY
VIBRATION ISOLATION Ac
TO MAINTAIN
CONSTANT VALUE

$P_s$

$P_s$

$P_0$

$P_0$

FIG.39a

DISK
DISPLACEMENT

$\Delta X$

(MINUTE
DISPLACEMENT)

ENLARGED VIEW
OF AA PORTION
NOZZLE PORTION
(STANDBY STATE)

FIG.39b

FIG.39

EP 4 667 773 A1

FIG.40

EP 4 667 773 A1

FIG.41

FIG.42

FIG.43

EP 4 667 773 A1

# INTERNATIONAL SEARCH REPORT

| International application No. |
|---|
| **PCT/JP2024/004845** |

| | |
|---|---|
| **A. CLASSIFICATION OF SUBJECT MATTER** | |

*F16F 15/02*(2006.01)i; *F15B 9/08*(2006.01)i; *F16F 15/03*(2006.01)i
FI:  F16F15/02 A; F16F15/02 M; F16F15/03 G; F15B9/08 E; F15B9/08 C

According to International Patent Classification (IPC) or to both national classification and IPC

**B. FIELDS SEARCHED**

Minimum documentation searched (classification system followed by classification symbols)

F16F15/02; F15B9/08; F16F15/03

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-78122 A (KURASHIKI KAKO CO., LTD.) 29 March 2007 (2007-03-29) entire text, all drawings | 1-37 |
| A | JP 2016-148373 A (TOKKYOKIKI CORPORATION) 18 August 2016 (2016-08-18) entire text, all drawings | 1-37 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/004845**

| Patent document cited in search report | | | Publication date (day/month/year) | Patent family member(s) | | Publication date (day/month/year) |
|---|---|---|---|---|---|---|
| JP | 2007-78122 | A | 29 March 2007 | (Family: none) | | |
| JP | 2016-148373 | A | 18 August 2016 | US | 2016/0228889 A1 | |

Form PCT/ISA/210 (patent family annex) (July 2022)

**REFERENCES CITED IN THE DESCRIPTION**

**Patent documents cited in the description**

- JP 2006283966 A
- JP 2007155038 A
- JP 11294627 H
- JP 4636830 B
- JP 2001093798 A
- JP 2008069890 A
- JP 2003074620 A
- JP 2015024794 A